(19) Europäisches Patentamt
European Patent Office
Office européen des brevets

(11) EP 4 697 617 A1

(12) EUROPEAN PATENT APPLICATION
published in accordance with Art. 153(4) EPC

(43) Date of publication:
18.02.2026 Bulletin 2026/08

(21) Application number: 24799905.5

(22) Date of filing: 06.05.2024

(51) International Patent Classification (IPC):
H04B 7/06 (2006.01)      H04W 72/04 (2023.01)

(52) Cooperative Patent Classification (CPC):
H04B 7/06; H04L 5/00; H04W 24/08; H04W 24/10;
H04W 72/04

(86) International application number:
PCT/CN2024/091268

(87) International publication number:
WO 2024/227449 (07.11.2024 Gazette 2024/45)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 04.05.2023  CN 202310496311
11.05.2023  CN 202310532531

(71) Applicant: Huawei Technologies Co., Ltd.
Shenzhen, Guangdong 518129 (CN)

(72) Inventors:
• YANG, Pei
  Shenzhen, Guangdong 518129 (CN)
• ZHANG, Yongping
  Shenzhen, Guangdong 518129 (CN)
• WANG, Xiaohan
  Shenzhen, Guangdong 518129 (CN)
• LI, Ting
  Shenzhen, Guangdong 518129 (CN)
• LI, Tie
  Shenzhen, Guangdong 518129 (CN)
• YU, Zheng
  Shenzhen, Guangdong 518129 (CN)

(74) Representative: Roth, Sebastian
Mitscherlich PartmbB
Patent- und Rechtsanwälte
Karlstraße 7
80333 München (DE)

(54) COMMUNICATION METHOD AND COMMUNICATION APPARATUS

(57)     This application provides a communication method and a communication apparatus, and relates to the communication field. In the method, a terminal generates first information, and sends the first information. The first information indicates at least one first capability parameter set, the first capability parameter set includes a maximum total quantity of transmit ports in one frequency unit and at least two of a maximum quantity of transmit ports on one resource associated with one CSI measurement hypothesis, a maximum total quantity of resources associated with the one CSI measurement hypothesis, or a maximum total quantity of transmit ports on a reference signal resource associated with the one CSI measurement hypothesis. A network device configures the reference signal resource for the terminal based on the first information. The terminal reports a single CSI measurement capability and/or a CSI measurement capability in one frequency unit, to ensure that the network device performs CSI measurement configuration without exceeding the CSI measurement capabilities of the terminal, thereby ensuring that the terminal can correctly perform CSI measurement.

FIG. 2

**Description**

This application claims priorities to Chinese Patent Application No. 202310496311.0, filed with the China National Intellectual Property Administration on May 4, 2023 and entitled "COMMUNICATION METHOD AND COMMUNICATION APPARATUS", and to Chinese Patent Application No. 202310532531.4, filed with the China National Intellectual Property Administration on May 11, 2023 and entitled "COMMUNICATION METHOD AND COMMUNICATION APPARATUS", both of which are incorporated herein by reference in their entireties.

**TECHNICAL FIELD**

This application relates to the communication field, and specifically, to a communication method and a communication apparatus.

**BACKGROUND**

Coherent joint transmission (Coherent joint transmission, CJT) means that a plurality of transmission reception points (transmission reception points, TRPs) send a same data stream to a same terminal. Coherent joint transmission is performed between the TRPs, so that interference control is more flexible, and cell average throughput performance and cell edge throughput performance can be significantly improved.

Before sending data, the TRPs need to first obtain channel state information (channel state information, CSI) of a downlink channel between the TRPs and the terminal. In an earlier version of NR, CSI measurement is based on a single-TRP CSI measurement hypothesis. To be specific, when the terminal performs CSI measurement, it is assumed that subsequent data is sent from one TRP, and the terminal performs CSI measurement on one reference signal resource and one interference measurement resource associated with the reference signal resource, to obtain a CSI report. After a CJT technology is introduced, the terminal needs to perform joint CSI measurement on a plurality of measurement resources to obtain better performance. A complexity of CSI measurement in a CJT mode is higher than that in a single-TRP measurement mode, and is not simply a sum of complexities of a plurality of single-TRP CSI measurements for CJT. When a network device learns of only a complexity of single-TRP CSI calculation, there may be a problem that measurement resources configured by the network device for CJT does not match a capability of the terminal.

**SUMMARY**

This application provides a communication method and a communication apparatus, to resolve a problem that measurement resources configured by a network device does not match a capability of a terminal.

According to a first aspect, a communication method is provided. The method may be performed by a terminal, or may be performed by a component (for example, a processor, a chip, or a chip system) of a terminal, or may be implemented by a logic module or software that can implement all or a part of functions of a terminal.

The method includes: generating first information, and sending the first information. The first information indicates at least one first capability parameter set, the first capability parameter set includes a maximum total quantity of transmit ports in one frequency unit and at least two of a maximum quantity of transmit ports on one resource associated with one CSI measurement hypothesis, a maximum total quantity of resources associated with the one CSI measurement hypothesis, and a maximum total quantity of transmit ports on a reference signal resource associated with the one CSI measurement hypothesis.

According to a second aspect, a communication method is provided. The method may be performed by a network device, or may be performed by a component (for example, a processor, a chip, or a chip system) of a network device, or may be implemented by a logic module or software that can implement all or a part of functions of a network device.

The method includes: receiving first information, and configuring a reference signal resource based on the first information. The first information indicates at least one first capability parameter set, the first capability parameter set includes a maximum total quantity of transmit ports in one frequency unit and at least two of a maximum quantity of transmit ports on one resource associated with one CSI measurement hypothesis, a maximum total quantity of resources associated with the one CSI measurement hypothesis, and a maximum total quantity of transmit ports on a reference signal resource associated with the one CSI measurement hypothesis.

It should be understood that, that the first capability parameter set includes at least two of the maximum quantity of transmit ports on one resource associated with the one CSI measurement hypothesis, the maximum total quantity of resources associated with the one CSI measurement hypothesis, and the maximum total quantity of transmit ports on the reference signal resource associated with the one CSI measurement hypothesis means that the first capability parameter set includes any two of the maximum quantity of transmit ports on one resource associated with the one CSI measurement hypothesis, the maximum total quantity of resources associated with the one CSI measurement hypothesis, and the maximum total quantity of transmit ports on the reference signal resource associated with the one CSI measurement hypothesis, or the first capability parameter set includes the maximum quantity of transmit ports on one resource associated with the one CSI measurement hypothesis, the maximum total quantity of resources associated with the one CSI measurement hypothesis, and the maximum total quantity of transmit ports on the reference signal resource associated with the one CSI measurement hypothesis.

It should be understood that the resource in this application is a reference signal resource. For example, the reference signal resource may be a non-zero power channel state information reference signal (non-zero power channel state information reference signal, NZP CSI-RS) resource, or may be a reference signal resource that has a same or similar function as an NZP CSI-RS resource. The reference signal resource may also be referred to as a signal measurement resource, a channel measurement resource, or a measurement resource.

For example, the frequency unit in this application is one or more carriers or all carriers; or the frequency unit is one or more frequency bands (Bands); or the frequency unit is one or more frequency band combinations (band combinations, BCs); or the frequency unit is one or more bandwidth parts (bandwidth parts, BWPs).

According to the communication method provided in this application, the terminal reports a single CSI measurement capability and/or a CSI measurement capability in one frequency unit, to ensure that the network device performs CSI measurement configuration without exceeding the CSI measurement capabilities of the terminal, thereby ensuring that the terminal can correctly perform CSI measurement.

With reference to the first aspect or the second aspect, in a possible implementation, the maximum total quantity of transmit ports on the reference signal resource associated with the one CSI measurement hypothesis is equal to a product of the maximum quantity of transmit ports on one resource associated with the one CSI measurement hypothesis and the maximum total quantity of resources associated with the one CSI measurement hypothesis.

With reference to the first aspect or the second aspect, in a possible implementation, the first capability parameter set further includes at least one of a maximum total quantity of reference signal resources in one frequency unit and a maximum quantity of transmit ports on one resource in one frequency unit.

In this way, the network device configures a reference resource signal without exceeding the CSI measurement capability in one frequency unit of the terminal, so that the terminal can correctly perform CSI measurement.

With reference to the first aspect or the second aspect, in a possible implementation, the at least one first capability parameter set includes at least one group of second capability parameters and at least one corresponding group of third capability parameters, one group of second capability parameters includes at least two of the maximum quantity of transmit ports on one resource associated with the one CSI measurement hypothesis, the maximum total quantity of resources associated with the one CSI measurement hypothesis, and the maximum total quantity of transmit ports on the reference signal resource associated with the one CSI measurement hypothesis, and one group of third capability parameters includes a maximum quantity of transmit ports on one resource in one frequency unit, a maximum total quantity of reference signal resources in one frequency unit, and the maximum total quantity of transmit ports in one frequency unit.

Based on this solution, the terminal reports the single CSI measurement capability and the CSI measurement capability in one frequency unit, to ensure that the network device performs CSI measurement configuration without exceeding the single CSI measurement capability and the CSI measurement capability in one frequency unit of the terminal, thereby ensuring that the terminal can correctly perform CSI measurement.

With reference to the first aspect or the second aspect, in a possible implementation, the maximum quantity of transmit ports on one resource in one frequency unit is equal to the maximum quantity of transmit ports on one resource associated with the one CSI measurement hypothesis.

In this way, the terminal needs to report only one of the maximum quantity of transmit ports on one resource in one frequency unit and the maximum quantity of transmit ports on one resource associated with the one CSI measurement hypothesis, for the network device to learn of the other one, thereby reducing signaling overheads.

With reference to the first aspect or the second aspect, in a possible implementation, the maximum total quantity of transmit ports in one frequency unit is equal to a product of the maximum quantity of transmit ports on one resource in one frequency unit and the maximum total quantity of reference signal resources in one frequency unit.

In this way, the terminal needs to report only two of the maximum total quantity of transmit ports in one frequency unit, the maximum quantity of transmit ports on one resource in one frequency unit, and the maximum total quantity of reference signal resources in one frequency unit, for the network device to learn of the other one, thereby reducing signaling overheads.

With reference to the first aspect or the second aspect, in a possible implementation, the at least one first capability parameter set includes at least one first capability parameter set associated with a codebook of a first mode and at least one first capability parameter set associated with a codebook of a second mode, for the codebook of the first mode, frequency domain bases corresponding to all reference signal resources are the same or different, and for the codebook of the second mode, frequency domain bases corresponding to all reference signal resources are the same.

With reference to the first aspect or the second aspect, in a possible implementation, the at least one group of second capability parameters includes at least one group of second capability parameters associated with a codebook of a first mode and at least one group of second capability parameters associated with a codebook of a second mode, the at least one group of third capability parameters includes at least one group of third capability parameters associated with the codebook of the first mode and at least one group of third capability parameters associated with the codebook of the second mode, for the codebook of the first mode, frequency domain bases corresponding to all reference signal resources are the same or different, and for the codebook of the second mode, frequency domain bases corresponding to all reference signal resources are the same.

Because a hardware computing capability of the terminal is fixed, CSI measurement capabilities corresponding to codebooks of different modes (namely, different codebook types) are different. The terminal reports CSI measurement and reporting capabilities associated with the codebooks of the different modes supported by the terminal, so that the network device can obtain the CSI measurement and reporting capabilities associated with the codebooks of the different modes of the terminal, and therefore, a configuration of the network device can match a processing capability of the terminal.

With reference to the first aspect or the second aspect, in a possible implementation, the at least one first capability parameter set includes at least one first capability parameter set associated with a first measurement mode and at least one first capability parameter set associated with a second measurement mode, for the first measurement mode, a reported CSI measurement result corresponds to configured $N_{TRP}$ reference signal resources, for the second measurement mode, a reported CSI measurement result corresponds to N reference signal resources in the configured $N_{TRP}$ reference signal resources, and $N_{TRP}$ and N are both positive integers.

With reference to the first aspect or the second aspect, in a possible implementation, the at least one group of second capability parameters includes at least one group of second capability parameters associated with a first measurement mode and at least one group of second capability parameters associated with a second measurement mode, the at least one group of third capability parameters includes at least one group of third capability parameters associated with the first measurement mode and at least one group of third capability parameters associated with the second measurement mode, for the first measurement mode, a reported CSI measurement result corresponds to configured $N_{TRP}$ reference signal resources, for the second measurement mode, a reported CSI measurement result corresponds to N reference signal resources in the configured $N_{TRP}$ reference signal resources, and $N_{TRP}$ and N are both positive integers.

Because the hardware computing capability of the terminal is fixed, CSI computing processing capabilities in different measurement modes are also different. The terminal reports CSI measurement and reporting capabilities associated with the different measurement modes supported by the terminal, so that the network device can obtain the CSI measurement and reporting capabilities associated with the different measurement modes of the terminal, and therefore, the configuration of the network device can match the processing capability of the terminal.

With reference to the first aspect or the second aspect, in a possible implementation, the first capability parameter set further indicates a quantity M of groups of CSI measurements supported in one frequency unit, M is a positive integer, and a total quantity of transmit ports corresponding to the M groups of CSI measurements is less than or equal to the maximum total quantity of transmit ports in one frequency unit.

For example, M may be determined based on the first capability parameter set, or the first capability parameter set may further include M.

With reference to the first aspect or the second aspect, in a possible implementation, M satisfies one of the following: $M = F/(A * B)$, $M = \lfloor F/(A * B) \rfloor$, $M \geq F/(A * B)$, or $M \geq \lfloor F/(A * B) \rfloor$. F represents the maximum total quantity of transmit ports in one frequency unit, A represents the maximum quantity of transmit ports on one resource associated with the one CSI measurement hypothesis, B represents the maximum total quantity of resources associated with the one CSI measurement hypothesis, F, A, and B are all positive integers, and $\lfloor \rfloor$ represents rounding down.

With reference to the first aspect, in a possible implementation, the method further includes: sending second information, where the second information indicates a first value, a value set, or a quantity NUM_i of processing units that corresponds to using i reference signal resources to perform CSI measurement, i=1, 2, ..., or S, S and NUM_i are both positive integers, the first value is an integer, the value set includes V values, V is a positive integer, the V values are all integers, and the first value, the value set, and NUM_i all indicate a quantity of processing units corresponding to the one CSI measurement hypothesis; and receiving third information, where the third information is used to configure Q reference signal resources associated with the one CSI measurement hypothesis, and Q is a positive integer.

With reference to the second aspect, in a possible implementation, the method further includes: receiving second information, where the second information indicates a first value, a value set, or a quantity NUM_i of processing units that corresponds to using i reference signal resources to perform CSI measurement, i=1, 2, ..., or S, S and NUM_i are both positive integers, the first value is an integer, the value set includes V values, V is a positive integer, the V values are all integers, and the first value, the value set, and NUM_i all indicate a quantity of processing units corresponding to the one CSI measurement hypothesis; and configuring, based on the second information, Q reference signal resources associated with the one CSI measurement hypothesis, and Q is a positive integer.

According to the communication method provided in this application, the network device may determine, based on the information reported by the terminal, the quantity of processing units (for example, CPUs) corresponding to the one CSI measurement hypothesis. In combination with a total quantity of processing units used by the terminal to perform CSI measurement, the network device can configure, for the terminal, the reference signal resources that match the capability of the terminal, to perform CSI measurement.

With reference to the first aspect, in a possible implementation, the method further includes: determining, based on the third information, a quantity W2 of processing units corresponding to the Q reference signal resources, where W2 is a positive integer.

With reference to the second aspect, in a possible implementation, before configuring, based on the second information, the Q reference signal resources associated with the one CSI measurement hypothesis, the method further includes: determining, based on the second information, a quantity W2 of processing units corresponding to the Q reference signal resources, where W2 is a positive integer.

With reference to the first aspect or the second aspect, in a possible implementation, the second information indicates the first value. W2 satisfies: W2=(first value+W), or W2=first value*W, where W=f(Q), and f(Q) represents that W is a function of Q.

For example, W=f(Q) satisfies: W=Q, W=Q*Q*Q, W=k1*Q, or W=k1*Q*Q, where k1 is an integer.

With reference to the first aspect or the second aspect, in a possible implementation, the second information indicates the value set. W2 satisfies: W2=(second value+W), or W2=second value*W, where W=f(Q), and f(Q) represents that W is a function of Q; and when Q=m, the second value is an $m^{th}$ value in the V values, where m=1, 2, ..., or V; or when Q=n+1, the second value is an $n^{th}$ value in the V values, where n=1, 2, ..., or V; or when Q=1, the second value is 0.

For example, W=f(Q) satisfies: W=Q, W=Q*Q*Q, W=k1*Q, or W=k1*Q*Q, where k1 is an integer.

With reference to the first aspect or the second aspect, in a possible implementation, P≤P1 and P>P1 correspond to different first values, P is a total quantity of transmit ports on the Q reference signal resources, and P and P1 are both positive integers.

With reference to the first aspect, in a possible implementation, the method further includes: receiving fourth information, where the fourth information indicates N*l* groups of spatial domain base vectors, and N*l* is a positive integer; and determining, based on the fourth information, a total quantity W3 of processing units corresponding to CSI measurement corresponding to the N*l* groups of spatial domain base vectors, where W3=W2*Nl or W3=W2+k2* (N*l*-1), and k2 is an integer.

With reference to the second aspect, in a possible implementation, the method further includes: sending fourth information, where the fourth information indicates N*l* groups of spatial domain base vectors, and N*l* is a positive integer.

It should be understood that, for a solution related to the processing unit in the first aspect or the second aspect, refer to the following descriptions of the fifth aspect or the sixth aspect. Details are not described herein.

According to a third aspect, a communication method is provided. The method may be performed by a terminal, or may be performed by a component (for example, a processor, a chip, or a chip system) of a terminal, or may be implemented by a logic module or software that can implement all or a part of functions of a terminal.

The method includes: generating first information, and sending the first information. The first information includes at least one group of capability parameters, and each group of capability parameters includes a maximum quantity of transmit ports on one resource in one frequency unit, a maximum total quantity of reference signal resources in one frequency unit, and a maximum total quantity of transmit ports in one frequency unit. In a possible implementation, the first information further includes a maximum total quantity of resources associated with one CSI measurement hypothesis.

According to a fourth aspect, a communication method is provided. The method may be performed by a network device, or may be performed by a component (for example, a processor, a chip, or a chip system) of a network device, or may be implemented by a logic module or software that can implement all or a part of functions of a network device.

The method includes: receiving first information, and configuring a reference signal resource based on the first information. The first information includes at least one group of capability parameters, and each group of capability parameters includes a maximum quantity of transmit ports on one resource in one frequency unit, a maximum total quantity of reference signal resources in one frequency unit, and a maximum total quantity of transmit ports in one frequency unit. In a possible implementation, the first information further includes a maximum total quantity of resources associated with one CSI measurement hypothesis.

According to the communication method provided in this application, a terminal reports a CSI measurement capability in one frequency unit and a maximum quantity of resources associated with one CSI measurement, to ensure that the network device performs CSI measurement configuration without exceeding the CSI measurement capability of the terminal, thereby ensuring that the terminal can correctly perform CSI measurement. The terminal reports the maximum quantity of resources associated with the one CSI measurement, to ensure that a CSI processing capability of the terminal is not exceeded during the one CSI measurement. In this solution, at least one group of first parameters is associated with a maximum quantity of resources associated with one CSI measurement, to reduce reporting overheads of the terminal. In this solution, the terminal device needs to report only a maximum quantity of resources associated with one CSI measurement, to reduce the reporting overheads of the terminal.

With reference to the third aspect or the fourth aspect, in a possible implementation, the maximum total quantity of reference signal resources in one frequency unit in each group of capability parameters is greater than or equal to the maximum quantity of resources associated with the one CSI measurement. With reference to the third aspect or the fourth aspect, in a possible implementation, the first information further indicates a quantity M of groups of CSI measurements supported in one frequency unit, M is a positive integer, and a total quantity of transmit ports corresponding to the M groups of CSI measurements is less than or equal to the maximum total quantity of transmit ports in one frequency unit.

For example, M may be determined based on the first information, or the first capability parameter set may further include M.

With reference to the third aspect or the fourth aspect, in a possible implementation, M satisfies one of the following: $M = B/S$, $M = \lceil B/S \rceil$, $M = \lfloor B/S \rfloor$, or $M > B/S$, or $M = F/(A*B)$, $M = \lfloor F/(A*B) \rfloor$, $M \geq F/(A*B)$, or $M \geq \lfloor F/(A*B) \rfloor$. F represents the maximum total quantity of transmit ports in one frequency unit, A represents the maximum total quantity of transmit ports in one frequency unit, B represents the maximum total quantity of resources associated with the one CSI measurement hypothesis, S represents the maximum quantity of resources associated with the one CSI measurement, F, A, B, and S are all positive integers, $\lfloor \rfloor$ represents rounding down, and $\lceil \rceil$ represents rounding up.

In this solution, the terminal reports the maximum total quantity of reference signal resources in one frequency unit and the maximum quantity of resources associated with the one CSI measurement, to assist the base station in configuring multiple CSI measurements without exceeding a capability of the UE.

With reference to the third aspect or the fourth aspect, in a possible implementation, the at least one group of capability parameters includes at least one group of capability parameters associated with a codebook of a first mode and at least one group of capability parameters associated with a codebook of a second mode, for the codebook of the first mode, frequency domain bases corresponding to all reference signal resources are the same or different, and for the codebook of the second mode, frequency domain bases corresponding to all reference signal resources are the same.

In this solution, the terminal reports CSI measurement capabilities associated with the codebooks of the different modes supported by the terminal, so that the network device can obtain the CSI measurement capabilities associated with the codebooks of the different modes of the terminal, and therefore, a configuration of the network device can match the CSI measurement capabilities of the terminal.

With reference to the third aspect or the fourth aspect, in a possible implementation, the maximum total quantity of resources associated with the one CSI measurement hypothesis and the at least one group of capability parameters include: at least one group of capability parameters associated with a codebook of a first mode, a maximum total quantity of resources associated with the one CSI measurement hypothesis and the codebook of the first mode, at least one group of capability parameters associated with a codebook of a second mode, and a maximum total quantity of resources associated with the one CSI measurement hypothesis and the codebook of the second mode. For the codebook of the first mode, frequency domain bases corresponding to all reference signal resources are the same or different, and for the codebook of the second mode, frequency domain bases corresponding to all reference signal resources are the same.

In this solution, the terminal reports CSI measurement capabilities associated with the codebooks of the different modes supported by the terminal, so that the network device can obtain the CSI measurement capabilities associated with the codebooks of the different modes of the terminal, and therefore, a configuration of the network device can match the CSI measurement capabilities of the terminal.

With reference to the third aspect or the fourth aspect, in a possible implementation, the at least one group of capability parameters includes at least one group of capability parameters associated with a first measurement mode and at least one group of capability parameters associated with a second measurement mode, for the first measurement mode, a reported CSI measurement result corresponds to configured $N_{TRP}$ reference signal resources, and for the second measurement mode, a reported CSI measurement result corresponds to N reference signal resources in the configured $N_{TRP}$ reference signal resources.

In this solution, the terminal reports CSI measurement capabilities associated with the different measurement modes supported by the terminal, so that the network device can obtain the CSI measurement capabilities associated with the different measurement modes of the terminal, and therefore, the configuration of the network device can match the CSI measurement capabilities of the terminal.

With reference to the third aspect or the fourth aspect, in a possible implementation, the maximum total quantity of resources associated with the one CSI measurement hypothesis and the at least one group of capability parameters include: at least one group of capability parameters associated with a first measurement mode, a maximum total quantity of resources associated with the one CSI measurement hypothesis and the first measurement mode, at least one group of capability parameters associated with a second measurement mode, and a maximum total quantity of resources associated with the one CSI measurement hypothesis and the second measurement mode. For the first measurement mode, a reported CSI measurement result corresponds to configured $N_{TRP}$ reference signal resources, and for the second measurement mode, a reported CSI measurement result corresponds to N reference signal resources in the configured $N_{TRP}$ reference signal resources.

In this solution, the terminal reports CSI measurement capabilities associated with the different measurement modes supported by the terminal, so that the network device can obtain the CSI measurement capabilities associated with the different measurement modes of the terminal, and therefore, the configuration of the network device can match the CSI measurement capabilities of the terminal.

With reference to the third aspect, in a possible implementation, the method further includes: sending second information, where the second information indicates a first value, a value set, or a quantity NUM_i of processing units that corresponds to using i reference signal resources to perform CSI measurement, i=1, 2, ..., or S, S and NUM_i are both positive integers, the first value is an integer, the value set includes V values, V is a positive integer, the V values are all integers, and the first value, the value set, and NUM_i all indicate a quantity of processing units corresponding to the one CSI measurement hypothesis; and receiving third information, where the third information is used to configure Q reference signal resources associated with the one CSI measurement hypothesis, and Q is a positive integer.

With reference to the fourth aspect, in a possible implementation, the method further includes: receiving second information, where the second information indicates a first value, a value set, or a quantity NUM_i of processing units that corresponds to using i reference signal resources to perform CSI measurement, i=1, 2, ..., or S, S and NUM_i are both positive integers, the first value is an integer, the value set includes V values, V is a positive integer, the V values are all integers, and the first value, the value set, and NUM_i all indicate a quantity of processing units corresponding to the one CSI measurement hypothesis; and configuring, based on the second information, Q reference signal resources associated with the one CSI measurement hypothesis, and Q is a positive integer.

With reference to the third aspect, in a possible implementation, the method further includes: sending second information, where the second information indicates a first value, a value set, or a quantity NUM_i of processing units that corresponds to using i reference signal resources to perform CSI measurement, i=1, 2, ..., or S, S and NUM_i are both positive integers, the first value is a non-negative number, the value set includes V values, V is a positive integer, the V values are all non-negative numbers, and the first value, the value set, and NUM_i all indicate a quantity of processing units corresponding to the one CSI measurement hypothesis; and receiving third information, where the third information is used to configure Q reference signal resources associated with the one CSI measurement hypothesis, and Q is a positive integer.

With reference to the fourth aspect, in a possible implementation, the method further includes: receiving second information, where the second information indicates a first value, a value set, or a quantity NUM_i of processing units that corresponds to using i reference signal resources to perform CSI measurement, i=1, 2, ..., or S, S and NUM_i are both positive integers, the first value is a non-negative number, the value set includes V values, V is a positive integer, the V values are all non-negative numbers, and the first value, the value set, and NUM_i all indicate a quantity of processing units corresponding to the one CSI measurement hypothesis; and configuring, based on the second information, Q reference signal resources associated with the one CSI measurement hypothesis, and Q is a positive integer.

According to the communication method provided in this application, the network device may determine, based on the information reported by the terminal, the quantity of processing units (for example, CPUs) corresponding to the one CSI measurement hypothesis. In combination with a total quantity of processing units used by the terminal to perform CSI measurement, the network device can configure, for the terminal, the reference signal resources that match the capability of the terminal, to perform CSI measurement.

With reference to the third aspect, in a possible implementation, the method further includes: determining, based on the third information, a quantity W2 of processing units corresponding to the Q reference signal resources, where W2 is a positive integer.

With reference to the fourth aspect, in a possible implementation, before configuring, based on the second information, the Q reference signal resources associated with the one CSI measurement hypothesis, the method further includes: determining, based on the second information, a quantity W2 of processing units corresponding to the Q reference signal resources, where W2 is a positive integer.

With reference to the third aspect or the fourth aspect, in a possible implementation, the second information indicates the first value. W2 satisfies: W2=(first value+W), or W2=first value*W, where W=f(Q), and f(Q) represents that W is a function of Q.

For example, W=f(Q) satisfies: W=Q, W=Q*Q*Q, W=k1*Q, or W=k1*Q*Q, where k1 is an integer.

With reference to the third aspect or the fourth aspect, in a possible implementation, the second information indicates the value set. W2 satisfies: W2=(second value+W), or W2=second value*W, where W=f(Q), and f(Q) represents that W is a function of Q; and when Q=m, the second value is an $m^{th}$ value in the V values, where m=1, 2, ..., or V; or when Q=n+1, the second value is an $n^{th}$ value in the V values, where n=1, 2, ..., or V; or when Q=1, the second value is 0.

For example, W=f(Q) satisfies: W=Q, W=Q*Q*Q, W=k1*Q, or W=k1*Q*Q, where k1 is an integer.

With reference to the third aspect or the fourth aspect, in a possible implementation, the second information indicates the first value. W2 satisfies: W2=(first value+W), or W2=first value*W, or W2=first value*W+C1, or

$$W2=\lfloor \text{first value} * W \rfloor + C1$$ , or $$W2=\lceil \text{first value} * W \rceil + C1$$ , or $$W2=\lfloor \text{first value} * W + C1 \rfloor$$ , or

$$W2=\lceil \text{first value} * W + C1 \rceil$$ , where W=f(Q), and f(Q) represents that W is a function of Q. C1 is a non-negative number.

For example, W=f(Q) satisfies: W=Q+C2, W=Q*Q*Q+C2, W=k1*Q+C2, or W=k1*Q*Q+C2, where k1 is a non-negative number, and C2 is a non-negative number. Optionally, C2=0, 1, or 2.

For example, C1=0, 1, or 2.

For example, the first value belongs to {1, 1.5, 2}. Alternatively, the first value belongs to {1, 1.5}. Alternatively, the first value belongs to {1, 2}. Alternatively, the first value belongs to {0, 1, 1.5, 2}. Alternatively, the first value belongs to {0, 1, 1.5}. Alternatively, the first value belongs to {0, 1, 2}.

With reference to the third aspect or the fourth aspect, in a possible implementation, the second information indicates the value set. W2 satisfies: W2=(second value+W), or W2=second value*W, or W2=second value*W+C1, or

$$W2=\lfloor \text{second value} * W \rfloor + C1$$ , or $$W2=\lceil \text{second value} * W \rceil + C1$$ , or

$$W2=\lfloor \text{second value} * W + C1 \rfloor$$ , or $$W2=\lceil \text{second value} * W + C1 \rceil$$ , where W=f(Q), f(Q) represents that W is a function of Q, $\lfloor \; \rfloor$ represents rounding down, $\lceil \; \rceil$ represents rounding up. W=f(Q), where f(Q) represents that W is a function of Q. When Q=m, the second value is an $m^{th}$ value in the V values, where m=1, 2, ..., or V; or when Q=n+1, the second value is an $n^{th}$ value in the V values, where n=1, 2, ..., or V; or when Q=1, the second value is 0.

For example, W=f(Q) satisfies: W=Q, W=Q*Q*Q, W=k1*Q, or W=k1*Q*Q, where k1 is an integer.

With reference to the third aspect or the fourth aspect, in a possible implementation, P≤P1 and P>P1 correspond to different first values, P is a total quantity of transmit ports on the Q reference signal resources, and P and P1 are both positive integers.

With reference to the third aspect, in a possible implementation, the method further includes: receiving fourth information, where the fourth information indicates N*l* groups of spatial domain base vectors, and N*l* is a positive integer; and determining, based on the fourth information, a total quantity W3 of processing units corresponding to CSI measurement corresponding to the N*l* groups of spatial domain base vectors, where W3=W2*Nl or W3=W2+k2* (N*l*-1), and k2 is an integer.

With reference to the fourth aspect, in a possible implementation, the method further includes: sending fourth information, where the fourth information indicates N*l* groups of spatial domain base vectors, and N*l* is a positive integer.

It should be understood that, for a solution related to the processing unit in the third aspect or the fourth aspect, refer to the following descriptions of the fifth aspect or the sixth aspect. Details are not described herein.

According to a fifth aspect, a communication method is provided. The method may be performed by a terminal, or may be performed by a component (for example, a processor, a chip, or a chip system) of a terminal, or may be implemented by a logic module or software that can implement all or a part of functions of a terminal.

The method includes: sending first information, where the first information indicates a first value, a value set, or a quantity NUM_i of processing units that corresponds to using i reference signal resources to perform CSI measurement, i=1, 2, ..., or S, or i=2, 3, ..., or S, S and NUM_i are both positive integers, the first value is an integer, the value set includes V values, V is a positive integer, the V values are all integers, and the first value, the value set, and NUM_i all indicate a quantity of processing units corresponding to one CSI measurement hypothesis; and receiving second information, where the second information is used to configure Q reference signal resources associated with the one CSI measurement hypothesis, and Q is a positive integer.

According to a sixth aspect, a communication method is provided. The method may be performed by a network device, or may be performed by a component (for example, a processor, a chip, or a chip system) of a network device, or may be implemented by a logic module or software that can implement all or a part of functions of a network device.

The method includes: receiving first information, where the first information indicates a first value, a value set, or a quantity NUM_i of processing units that corresponds to using i reference signal resources to perform CSI measurement, i=1, 2, ..., or S, S and NUM_i are both positive integers, the first value is an integer, the value set includes V values, V is a positive integer, the V values are all integers, and the first value, the value set, and NUM_i all indicate a quantity of processing units corresponding to the one CSI measurement hypothesis; and configuring, based on the first information, Q reference signal resources associated with the one CSI measurement hypothesis, and Q is a positive integer.

According to the communication method provided in this application, the network device may determine, based on the information reported by the terminal, the quantity of processing units (for example, CPUs) corresponding to the one CSI measurement hypothesis. In combination with a total quantity of processing units used by the terminal to perform CSI measurement, the network device can configure, for the terminal, the reference signal resources that match the capability of the terminal, to perform CSI measurement.

With reference to the fifth aspect, in a possible implementation, the method further includes: determining, based on the second information, a quantity W2 of processing units corresponding to the Q reference signal resources, where W2 is a positive integer.

With reference to the sixth aspect, in a possible implementation, before configuring, based on the first information, the Q reference signal resources associated with the one CSI measurement hypothesis, the method further includes: determining, based on the first information, a quantity W2 of processing units corresponding to the Q reference signal resources, where W2 is a positive integer.

Based on this solution, the network device first determines a quantity W2 of processing units corresponding to the Q reference signal resources. If W2 does not exceed the total quantity of processing units used by the terminal to perform CSI measurement, the network device may configure the Q reference signal resources for the terminal.

With reference to the fifth aspect or the sixth aspect, in a possible implementation, the first information indicates the first value. W2 satisfies: W2=(first value+W), W2 satisfies: W2=(first value+W), or W2=first value*W, where W=f(Q), and f(Q) represents that W is a function of Q.

For example, W=f(Q) satisfies: W=Q, W=Q*Q*Q, W=k1*Q, or W=k1*Q*Q, where k1 is an integer.

With reference to the fifth aspect or the sixth aspect, in a possible implementation, the first information indicates the first value. When Q>1, W2 satisfies: W2=(first value+W), or W2=first value*W, where W=f(Q), and f(Q) represents that W is a function of Q. When Q=1, W2 satisfies: W2=f(Q).

With reference to the fifth aspect or the sixth aspect, in a possible implementation, the first information indicates the value set. W2 satisfies: W2=(second value+W), or W2=second value*W, where W=f(Q), and f(Q) represents that W is a function of Q; and when Q=m, the second value is an $m^{th}$ value in the V values, where m=1, 2, ..., or V; or when Q=n+1, the second value is an $n^{th}$ value in the V values, where n=1, 2, ..., or V; or when Q=1, the second value is 0.

For example, W=f(Q) satisfies: W=Q, W=Q*Q*Q, W=k1*Q, or W=k1 *Q*Q, where k1 is an integer.

In this solution, there is no need to report a corresponding value when Q=n+1, thereby reducing signaling overheads.

With reference to the fifth aspect or the sixth aspect, in a possible implementation, $P \leq P1$ and $P > P1$ correspond to different first values, P is a total quantity of transmit ports on the Q reference signal resources, and P and P1 are both positive integers. For example, P1=8, 16, 24, 32, or 64.

With reference to the fifth aspect or the sixth aspect, in a possible implementation, $P \leq P1$, $P1 < P \leq P2$, and $P > P2$ correspond to different value sets, P is a total quantity of transmit ports on the Q reference signal resources, and P, P1, and P2 are all positive integers. For example, P1=8/16/24/32/64, and correspondingly, P2=16/24/32/64/128.

With reference to the fifth aspect, in a possible implementation, the method further includes: receiving third information, where the third information indicates Nl groups of spatial domain base vectors, and Nl is a positive integer; and determining, based on the third information, a total quantity W3 of processing units corresponding to CSI measurement corresponding to the Nl groups of spatial domain base vectors, where W3=W2*Nl or W3=W2+k2*(Nl-1), and k2 is an integer. For example, k2=1, 2, 3, or 4.

With reference to the sixth aspect, in a possible implementation, the method further includes: sending fourth information, where the fourth information indicates Nl groups of spatial domain base vectors, and Nl is a positive integer.

With reference to the fifth aspect or the sixth aspect, in a possible implementation, NUM_i is one of {i, i+1, ..., Si}, or NUM_i is one of {1, 2, 3, ..., Si}, and $Si \geq i$.

With reference to the fifth aspect or the sixth aspect, in a possible implementation, a total quantity of transmit ports on the i reference signal resources is R. When R<R1, NUM_i is one of {i, i+1, ..., Si}, or NUM_i is one of {1, 2, 3, ..., Si}, where $Si \geq i$. When R>R1, NUM_i is one of {i, i+1, ..., Si'}, or NUM_i is one of {1, 2, 3, ..., Si'}, where $N1' \geq Si$, or NUM_i is a sum of H and one of {i, i+1, ..., Si}, or NUM_i is a sum of H and one of {1, 2, 3, ..., Si}, where H is a positive integer.

Based on this solution, the terminal may select a corresponding value from a plurality of values for reporting based on the capability of the terminal, to flexibly report the capability of the terminal.

With reference to the fifth aspect or the sixth aspect, in a possible implementation, H is one of {0, 1, 2, ..., S}.

With reference to the fifth aspect or the sixth aspect, in a possible implementation, the first information indicates NUM_i, and W2=NUM_Q.

With reference to the fifth aspect or the sixth aspect, in a possible implementation, the first information indicates NUM_i, and the first information further indicates a maximum quantity of reference signal resources associated with the one CSI measurement hypothesis.

According to a seventh aspect, a communication method is provided. The method may be performed by a terminal, or may be performed by a component (for example, a processor, a chip, or a chip system) of a terminal, or may be implemented by a logic module or software that can implement all or a part of functions of a terminal.

The method includes: sending first information, where the first information indicates a first value, a value set, or a quantity NUM_i of processing units that corresponds to using i reference signal resources to perform CSI measurement, i=1, 2, ..., or S, or i=2, 3, ..., or S, S and NUM_i are both positive integers, the value set includes V values, V is a positive integer, and the first value, the value set, and NUM_i all indicate a quantity of processing units corresponding to one CSI measurement hypothesis; and receiving second information, where the second information is used to configure Q reference signal resources associated with the one CSI measurement hypothesis, and Q is a positive integer.

According to an eighth aspect, a communication method is provided. The method may be performed by a network device, or may be performed by a component (for example, a processor, a chip, or a chip system) of a network device, or may be implemented by a logic module or software that can implement all or a part of functions of a network device.

The method includes: receiving first information, where the first information indicates a first value, a value set, or a quantity NUM_i of processing units that corresponds to using i reference signal resources to perform CSI measurement, i=1, 2, ..., or S, S and NUM_i are both positive integers, the value set includes V values, V is a positive integer, and the first value, the value set, and NUM_i all indicate a quantity of processing units corresponding to the one CSI measurement hypothesis; and configuring, based on the first information, Q reference signal resources associated with the one CSI measurement hypothesis, and Q is a positive integer.

According to the communication method provided in this application, the network device may determine, based on the information reported by the terminal, the quantity of processing units (for example, CPUs) corresponding to one CSI measurement hypothesis. In combination with a total quantity of processing units used by the terminal to perform CSI measurement, the network device can configure, for the terminal, the reference signal resources that match a capability of the terminal, to perform CSI measurement.

With reference to the seventh aspect or the eighth aspect, in a possible implementation, the first value is a non-negative number, and the V values included in the value set are all non-negative numbers.

With reference to the seventh aspect, in a possible implementation, the method further includes: determining, based on the second information, a quantity W2 of processing units corresponding to the Q reference signal resources, where W2 is a positive integer.

With reference to the seventh aspect, in a possible implementation, the method further includes: the first information further indicates a third value or a second value set, the second value set includes V values, V is a positive integer, and the third value and the value set both indicate a quantity of processing units corresponding to the one CSI measurement hypothesis.

In a possible implementation, the third value is a non-negative number, and the V values included in the second value set are all non-negative numbers.

With reference to the eighth aspect, in a possible implementation, before configuring, based on the first information, the Q reference signal resources associated with the one CSI measurement hypothesis, the method further includes: determining, based on the first information, a quantity W2 of processing units corresponding to the Q reference signal resources, where W2 is a positive integer.

Based on this solution, the network device first determines a quantity W2 of processing units corresponding to the Q reference signal resources. If W2 does not exceed the total quantity of processing units used by the terminal to perform CSI measurement, the network device may configure the Q reference signal resources for the terminal.

With reference to the seventh aspect or the eighth aspect, in a possible implementation, the first information indicates the first value. W2 satisfies: W2=(first value+W), or W2=first value*W, or W2=first value*W+C1, or

$$W2 = \lfloor \text{first value} * W \rfloor + C1 \text{, or } W2 = \lceil \text{first value} * W \rceil + C1 \text{, or } W2 = \lfloor \text{first value} * W + C1 \rfloor \text{, or}$$

$$W2 = \lceil \text{first value} * W + C1 \rceil$$, where W=f(Q), f(Q) represents that W is a function of Q, $\lfloor \rfloor$ represents rounding down, and $\lceil \rceil$ represents rounding up. C1 is a non-negative number. Optionally, the third value is equal to C1. In a possible implementation, first value * W is an integer.

For example, W=f(Q) satisfies: W=Q+C2, W=Q*Q*Q+C2, W=k1*Q+C2, or W=k1*Q*Q+C2, where k1 is a non-negative number, and C2 is a non-negative number.

For example, C1=0, 1, or 2.

For example, C2=0, 1, or 2.

For example, the first value may be a decimal fraction, for example, the first value is equal to 0.5.

For example, the third value=0, 1, or 2.

With reference to the seventh aspect or the eighth aspect, in a possible implementation, the first information indicates the first value. When Q>1, W2 satisfies: W2=(first value+W), or W2=first value*W+C1, or

$$W2 = \lfloor \text{first value} * W \rfloor + C1 \text{, or } W2 = \lceil \text{first value} * W \rceil + C1 \text{, or } W2 = \lfloor \text{first value} * W + C1 \rfloor \text{, or}$$

$$W2 = \lceil \text{first value} * W + C1 \rceil$$, where W=f(Q), f(Q) represents that W is a function of Q, $\lfloor \rfloor$ represents rounding down, and $\lceil \rceil$ represents rounding up. When Q=1, W2 satisfies: W2=f(Q)+C1. C1 is a non-negative number. Optionally, the third value is equal to C1. In a possible implementation, first value * W is an integer.

For example, W=f(Q) satisfies: W=Q+C2, W=Q*Q*Q+C2, W=k1*Q+C2, or W=k1 *Q*Q+C2, where k1 is a non-negative number, and C2 is a non-negative number. Optionally, C2=0, 1, or 2.

For example, C1=0, 1, or 2.

With reference to the seventh aspect or the eighth aspect, in a possible implementation, the first information indicates the value set. W2 satisfies: W2=(second value+W), or W2=second value*W+C1, or

$$W2= \lfloor second\ value * W \rfloor +C1 \quad , \quad or \qquad W2= \lceil second\ value * W \rceil +C1, \quad , \quad or$$

$$W2= \lfloor second\ value * W + C1 \rfloor \quad, or \quad W2= \lceil second\ value * W + C1 \rceil \quad, where W=f(Q), f(Q) represents$$

that W is a function of Q, $\lfloor\rfloor$ represents rounding down, and $\lceil\rceil$ represents rounding up. When Q=m, the second value is an $m^{th}$ value in the V values, where m=1, 2, ..., or V; or when Q=n+1, the second value is an $n^{th}$ value in the V values, where n=1, 2, ..., or V; or when Q=1, the second value is 0. C1 is a non-negative number. In a possible implementation, second value $*$ W is an integer.

Optionally, the third value is equal to C1, or C1 is determined by the third value and the third value is equal to C1. In another possible implementation, when Q=m, C1 is an $m^{th}$ value in the V values in the second value set, where m=1, 2, ..., or V; or when Q=n+1, C1 is an $n^{th}$ value in the V values in the second value set, where n=1, 2, ..., or V; or when Q=1, the second value is 0.

For example, W=f(Q) satisfies: W=Q+C2, W=Q*Q*Q+C2, W=k1*Q+C2, or W=k1 *Q*Q+C2, where k1 is a non-negative number, and C2 is a non-negative number. Optionally, C2=0, 1, or 2.

For example, the second value belongs to {1, 1.5, 2}, or the second value belongs to {1, 1.5}, or the second value belongs to {1, 2}, or the second value belongs to {0, 1, 1.5, 2}, or the second value belongs to {0, 1, 1.5}, or the second value belongs to {0, 1, 2}, or the second value belongs to {1, 1.5, 2, 2.5}, or the second value belongs to {1, 1.5, 2, 2.5, 3}, or the second value belongs to {1, 1.5, 2, 2.5, 3, 3.5}, or the second value belongs to {1, 1.5, 2, 2.5, 3, 3.5, 4}, or the second value belongs to {0, 1, 1.5, 2, 2.5}, or the second value belongs to {0, 1, 1.5, 2, 2.5, 3}, or the second value belongs to {0, 1, 1.5, 2, 2.5, 3, 3.5}, or the second value belongs to {0, 1, 1.5, 2, 2.5, 3, 3.5, 4}.

In this solution, there is no need to report a corresponding value when Q=n+1, thereby reducing signaling overheads.

With reference to the seventh aspect or the eighth aspect, in a possible implementation, the first information indicates the first value and the third value. W2 satisfies: W2=(first value+W), or W2=first value*W, or W2=first value*W+third value, or

$$W2=\lfloor first\ value * W \rfloor +third\ value \quad , \quad or$$

$$W2= \lceil first\ value * W \rceil +third\ value \quad, or \quad W2= \lfloor first\ value * W + third\ value \rfloor \quad, or$$

$$W2=\lceil first\ value * W + third\ value \rceil, where W=f(Q), f(Q) represents that W is a function of Q, \lfloor\rfloor represents$$

rounding down, and $\lceil\rceil$ represents rounding up. C1 is a non-negative number. In a possible implementation, first value $*$ W is an integer.

For example, W=f(Q) satisfies: W=Q+C2, W=Q*Q*Q+C2, W=k1*Q+C2, or W=k1*Q*Q+C2, where k1 is a non-negative number, and C2 is a non-negative number.

For example, C1=0, 1, or 2.

For example, C2=0, 1, or 2.

For example, the first value may be a decimal fraction, for example, the first value is equal to 0.5.

For example, the third value=0, 1, or 2.

With reference to the seventh aspect or the eighth aspect, in a possible implementation, the first information indicates the first value and the third value. When Q>1, W2 satisfies: W2=(first value+W), or W2=first value*W+third value,

$$or \quad W2=\lfloor first\ value * W \rfloor +third\ value \quad, or \quad W2= \lceil first\ value * W \rceil +third\ value, \quad, or$$

$$W2= \lfloor first\ value * W + third\ value \rfloor \quad, or \quad W2=\lceil first\ value * W + third\ value \rceil, where W=f(Q),$$

f(Q) represents that W is a function of Q, $\lfloor\rfloor$ represents rounding down, and $\lceil\rceil$ represents rounding up. When Q=1, W2 satisfies: W2=f(Q)+third value. In a possible implementation, first value $*$ W is an integer.

For example, W=f(Q) satisfies: W=Q+C2, W=Q*Q*Q+C2, W=k1*Q+C2, or W=k1 *Q*Q+C2, where k1 is a non-negative number, and C2 is a non-negative number. Optionally, C2=0, 1, or 2.

For example, C1=0, 1, or 2.

With reference to the seventh aspect or the eighth aspect, in a possible implementation, the first information indicates the value set and the third value. W2 satisfies: W2=(second value+W), or W2=second value*W+third value, or

$$W2=\lfloor second\ value * W \rfloor +third\ value \quad, value, or \quad W2= \lceil second\ value * W \rceil +third\ value \quad, or$$

$$W2= \lfloor second\ value * W + third\ value \rfloor \quad, or \quad W2=\lceil second\ value * W + third\ value \rceil, where$$

W=f(Q), f(Q) represents that W is a function of Q, $\lfloor\rfloor$ represents rounding down, and $\lceil\rceil$ represents rounding up. When Q=m, the second value is an $m^{th}$ value in the V values, where m=1, 2, ..., or V; or when Q=n+1, the second value is an $n^{th}$ value in the V values, where n=1, 2, ..., or V; or when Q=1, the second value is 0. In a possible implementation, second value ∗ W is an integer.

For example, W=f(Q) satisfies: W=Q+C2, W=Q*Q*Q+C2, W=kl*Q+C2, or W=k1 *Q*Q+C2, where k1 is a non-negative number, and C2 is a non-negative number. Optionally, C2=0, 1, or 2.

For example, the second value belongs to {1, 1.5, 2}, or the second value belongs to {1, 1.5}, or the second value belongs to {1, 2}, or the second value belongs to {0, 1, 1.5, 2}, or the second value belongs to {0, 1, 1.5}, or the second value belongs to {0, 1, 2}, or the second value belongs to {1, 1.5, 2, 2.5}, or the second value belongs to {1, 1.5, 2, 2.5, 3}, or the second value belongs to {1, 1.5, 2, 2.5, 3, 3.5}, or the second value belongs to {1, 1.5, 2, 2.5, 3, 3.5, 4}, or the second value belongs to {0, 1, 1.5, 2, 2.5}, or the second value belongs to {0, 1, 1.5, 2, 2.5, 3}, or the second value belongs to {0, 1, 1.5, 2, 2.5, 3, 3.5}, or the second value belongs to {0, 1, 1.5, 2, 2.5, 3, 3.5, 4}.

In this solution, there is no need to report a corresponding value when Q=n+1, thereby reducing signaling overheads.

With reference to the seventh aspect or the eighth aspect, in a possible implementation, the first information indicates the value set and the second value set. W2 satisfies: W2=(second value+W), or W2=second value*W+fourth value, or $W2 = \lfloor \text{second value} * W \rfloor + \text{fourth value}$, or $W2 = \lceil \text{second value} * W \rceil + \text{fourth value}$, or $W2 = \lfloor \text{second value} * W + \text{fourth value} \rfloor$, or $W2 = \lceil \text{second value} * W + \text{fourth value} \rceil$, where W=f(Q), f(Q) represents that W is a function of Q, ⌊ ⌋ represents rounding down, and ⌈ ⌉ represents rounding up. When Q=m, the second value is an $m^{th}$ value in the V values, and the fourth value is an $m^{th}$ value in the V values in the second value set, where m=1, 2, ..., or V. Alternatively, when Q=n+1, the second value is an $n^{th}$ value in the V values, the fourth value is an $m^{th}$ value in the V values in the second value set, where n=1, 2, ..., or V. Alternatively, when Q=1, the second value is 0. In a possible implementation, second value ∗ W is an integer.

For example, W=f(Q) satisfies: W=Q+C2, W=Q*Q*Q+C2, W=k1*Q+C2, or W=k1*Q*Q+C2, where k1 is a non-negative number, and C2 is a non-negative number. Optionally, C2=0, 1, or 2.

For example, the second value belongs to {1, 1.5, 2}, or the second value belongs to {1, 1.5}, or the second value belongs to {1, 2}, or the second value belongs to {0, 1, 1.5, 2}, or the second value belongs to {0, 1, 1.5}, or the second value belongs to {0, 1, 2}, or the second value belongs to {1, 1.5, 2, 2.5}, or the second value belongs to {1, 1.5, 2, 2.5, 3}, or the second value belongs to {1, 1.5, 2, 2.5, 3, 3.5}, or the second value belongs to {1, 1.5, 2, 2.5, 3, 3.5, 4}, or the second value belongs to {0, 1, 1.5, 2, 2.5}, or the second value belongs to {0, 1, 1.5, 2, 2.5, 3}, or the second value belongs to {0, 1, 1.5, 2, 2.5, 3, 3.5}, or the second value belongs to {0, 1, 1.5, 2, 2.5,3,3.5,4}.

In this solution, there is no need to report a corresponding value when Q=n+1, thereby reducing signaling overheads.

With reference to the seventh aspect or the eighth aspect, in a possible implementation, P≤P1 and P>P1 correspond to different first values, P is a total quantity of transmit ports on the Q reference signal resources, and P and P1 are both positive integers. For example, P1=8, 16, 24, 32, or 64.

With reference to the seventh aspect or the eighth aspect, in a possible implementation, P≤P1, P1<P≤P2, and P>P2 correspond to different value sets, P is a total quantity of transmit ports on the Q reference signal resources, and P, P1, and P2 are all positive integers. For example, P1=8/16/24/32/64, and correspondingly, P2=16/24/32/64/128.

With reference to the seventh aspect, in a possible implementation, the method further includes: receiving third information, where the third information indicates Nl groups of spatial domain base vectors, and Nl is a positive integer; and determining, based on the third information, a total quantity W3 of processing units corresponding to CSI measurement corresponding to the Nl groups of spatial domain base vectors, where W3=W2*Nl or W3=W2+k2*(Nl-1), and k2 is an integer. For example, k2=1, 2, 3, or 4.

With reference to the seventh aspect, in a possible implementation, the method further includes: sending fourth information, where the fourth information indicates Nl groups of spatial domain base vectors, and Nl is a positive integer.

With reference to the seventh aspect or the eighth aspect, in a possible implementation, NUM_i is one of {i, i+1, ..., Si}, or NUM_i is one of {1, 2, 3, ..., Si}, and Si≥i.

With reference to the seventh aspect or the eighth aspect, in a possible implementation, a total quantity of transmit ports on the i reference signal resources is R. When R≤R1, NUM_i is one of {i, i+1, ..., Si}, or NUM_i is one of {1, 2, 3, ..., Si}, where Si≥i. When R>R1, NUM_i is one of {i, i+1, ..., Si'}, or NUM_i is one of {1, 2, 3, ..., Si'}, where N1'>Si, or NUM_i is a sum of H and one of {i, i+1, ..., Si}, or NUM_i is a sum of H and one of {1, 2, 3, ..., Si}, where H is a positive integer.

Based on this solution, the terminal may select a corresponding value from a plurality of values for reporting based on the capability of the terminal, to flexibly report the capability of the terminal. For different quantities of measurement resources, the terminal device may report different values, to flexibly report the CPU capability of the terminal. The terminal device may report a quantity of occupied CPUs, to prevent a CSI measurement configuration of a base station from exceeding a processing capability of UE.

With reference to the seventh aspect or the eighth aspect, in a possible implementation, H is one of {0, 1, 2, ..., S}.

With reference to the seventh aspect or the eighth aspect, in a possible implementation, the first information indicates NUM_i, and W2=NUM_Q.

With reference to the seventh aspect or the eighth aspect, in a possible implementation, the first information indicates NUM_i, and the first information further indicates a maximum quantity of reference signal resources associated with the one CSI measurement hypothesis.

According to a ninth aspect, a communication apparatus is provided, including a module or a unit configured to perform the method according to any one of the first aspect or the possible implementations of the first aspect, or including a module or a unit configured to perform the method according to any one of the third aspect or the possible implementations of the third aspect, or including a module or a unit configured to perform the method according to any one of the fifth aspect or the possible implementations of the fifth aspect, or including a module or a unit configured to perform the method according to any one of the seventh aspect or the possible implementations of the seventh aspect.

According to a tenth aspect, a communication apparatus is provided, including a module or a unit configured to perform the method according to any one of the second aspect or the possible implementations of the second aspect, or including a module or a unit configured to perform the method according to any one of the fourth aspect or the possible implementations of the fourth aspect, or including a module or a unit configured to perform the method according to any one of the sixth aspect or the possible implementations of the sixth aspect, or including a module or a unit configured to perform the method according to any one of the eighth aspect or the possible implementations of the eighth aspect.

According to an eleventh aspect, a communication apparatus is provided, including a processor. The processor is coupled to a memory. The memory is configured to store a computer program or instructions. The processor is configured to execute the computer program or the instructions stored in the memory, to implement the method according to any one of the first aspect or the possible implementations of the first aspect, or implement the method according to any one of the third aspect or the possible implementations of the third aspect, or implement the method according to any one of the fifth aspect or the possible implementations of the fifth aspect, or implement the method according to any one of the seventh aspect or the possible implementations of the seventh aspect.

In a possible implementation, the apparatus further includes the memory coupled to the processor.

In a possible implementation, there are one or more processors, and/or one or more memories.

In a possible implementation, the memory and the processor may be integrated together, or the memory and the processor are disposed separately.

In a possible implementation, the apparatus further includes a communication interface, and the processor is coupled to the communication interface.

In an implementation, the apparatus is a terminal. For example, the communication interface may be a transceiver or an input/output interface.

In another implementation, the apparatus is a chip in a terminal. For example, the communication interface may be an input/output interface.

According to a twelfth aspect, a communication apparatus is provided, including a processor. The processor is coupled to a memory. The memory is configured to store a computer program or instructions. The processor is configured to execute the computer program or the instructions stored in the memory, to implement the method according to any one of the second aspect or the possible implementations of the second aspect, or implement the method according to any one of the fourth aspect or the possible implementations of the fourth aspect, or implement the method according to any one of the sixth aspect or the possible implementations of the sixth aspect, or implement the method according to any one of the eighth aspect or the possible implementations of the eighth aspect.

In a possible implementation, the apparatus further includes the memory coupled to the processor.

In a possible implementation, there are one or more processors, and/or one or more memories.

In a possible implementation, the memory and the processor may be integrated together, or the memory and the processor are disposed separately.

In a possible implementation, the apparatus further includes a communication interface, and the processor is coupled to the communication interface.

In an implementation, the apparatus is a network device. For example, the communication interface may be a transceiver or an input/output interface.

In another implementation, the apparatus is a chip in a network device. For example, the communication interface may be an input/output interface.

According to a thirteenth aspect, a processor is provided, including an input circuit, an output circuit, and a processing circuit. The processing circuit is configured to: receive a signal via the input circuit, and transmit a signal via the output circuit, so that the processor performs the method according to any one of the foregoing aspects or any one of the possible implementations of any one of the foregoing aspects.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

According to a fourteenth aspect, a communication system is provided, including at least one of the communication apparatus according to the first aspect and the communication apparatus according to the second aspect, or including at least one of the communication apparatus according to the third aspect and the communication apparatus according to the fourth aspect, or including at least one of the communication apparatus according to the fifth aspect and the communication apparatus according to the sixth aspect, or including at least one of the communication apparatus according to the seventh aspect and the communication apparatus according to the eighth aspect.

According to a fifteenth aspect, a computer program product is provided. The computer program product includes a computer program (which may also be referred to as code or instructions). When the computer program is run, a computer is enabled to perform the method according to any one of the foregoing aspects or any one of the possible implementations of any one of the foregoing aspects.

According to a sixteenth aspect, a computer-readable storage medium is provided. The computer-readable storage medium stores a computer program (which may also be referred to as code or instructions). When the computer program is run on a computer, the computer is enabled to perform the method according to any one of the foregoing aspects or any one of the possible implementations of any one of the foregoing aspects.

According to a seventeenth aspect, a chip system (or a chip) is provided, including a processor, where the processor is configured to invoke a computer program from a memory and run the computer program, so that a communication apparatus in which the chip system is installed performs the method according to any one of the foregoing aspects or any possible implementation of any one of the foregoing aspects.

According to an eighteenth aspect, a communication apparatus is provided. The communication apparatus includes an interface and a processor. The interface is configured to send and/or receive a signal, so that the processor performs the method according to any one of the foregoing aspects or any one of the possible implementations of any one of the foregoing aspects.

## BRIEF DESCRIPTION OF DRAWINGS

FIG. 1 is a diagram of a communication system according to an embodiment of this application;
FIG. 2 is a schematic flowchart of a communication method according to an embodiment of this application;
FIG. 3 is a schematic flowchart of a communication method according to an embodiment of this application;
FIG. 4 is a schematic flowchart of a communication method according to an embodiment of this application;
FIG. 5 is a schematic flowchart of a communication method according to an embodiment of this application;
FIG. 6 is a block diagram of a communication apparatus according to an embodiment of this application;
FIG. 7 is a block diagram of another communication apparatus according to an embodiment of this application;
FIG. 8 is a diagram of a structure of a terminal according to an embodiment of this application; and
FIG. 9 is a diagram of a structure of a network device according to an embodiment of this application.

## DESCRIPTION OF EMBODIMENTS

The following describes the technical solutions in embodiments of this application with reference to the accompanying drawings in embodiments of this application.

In the descriptions of this application, unless otherwise specified, "/" indicates that associated objects are in an "or" relationship. For example, A/B may represent A or B. The term "and/or" in this specification describes only an association relationship for describing associated objects and represents that three relationships may exist. For example, A and/or B may represent the following three cases: Only A exists, both A and B exist, and only B exists. A and B each may be singular or plural. In addition, in the descriptions of this application, "a plurality of" means two or more than two unless otherwise specified. "At least one of the following items (pieces)" or a similar expression thereof refers to any combination of these items, including a single item (piece) or any combination of a plurality of items (pieces). For example, at least one of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. It should be understood that, in this application, descriptions similar to "in a case that ...", "if ...", "when ...", "it is assumed that ...", and the like may be used interchangeably.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of new service scenarios, the technical solutions provided in embodiments of this application are also applicable to similar technical problems. In embodiments of this application, "e is less than f" may also be replaced with "e is less than or equal to f', and "e is greater than f' may also be replaced with "e is greater than or equal to f', and vice versa, where e and f respectively represent two parameters that are compared with each other. For ease of description, in embodiments of this application, one of the cases is used for description, and does not constitute any limitation thereto.

Embodiments of this application may be applied to long term evolution (long term evolution, LTE), 5th generation (5th Generation, 5G), new radio (New Radio, NR), or another communication system that may appear in the future.

A terminal in embodiments of this application may be user equipment (user equipment, UE), a station (station), an access terminal, a subscriber unit, a subscriber station, a mobile station, a remote station, a remote terminal, a mobile device, a user terminal, a terminal device, a wireless communication device, a user agent, or a user apparatus. The terminal may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function or another processing device connected to a wireless modem, a large screen, a vehicle-mounted device, a wearable device, a terminal in a 5G network, a terminal in a future evolved public land mobile network (public land mobile network, PLMN), or the like. This is not limited in embodiments of this application. In this application, the terminal, a chip disposed in the terminal, and software and/or hardware modules that can implement functions of the terminal are collectively referred to as a terminal.

A network device in embodiments of this application may be a radio access network (radio access network, RAN) node (or device) that enables the terminal to access a wireless network, a part of function modules of a RAN node, a cell provided by a RAN, a software and/or hardware module corresponding to a cell provided by a RAN, or the like. The RAN may also be referred to as a base station. For example, the network device may be an evolved NodeB (evolved NodeB, eNodeB), a transmission reception point (transmission reception point, TRP), a next generation NodeB (next generation NodeB, gNB) in a 5G mobile communication system, a base station in a future mobile communication system or an access point (access point, AP) in a Wi-Fi system, a radio controller in a cloud radio access network (cloud radio access network, CRAN) scenario, a relay station, an access point, a vehicle-mounted device, a wearable device, or a network device in another future evolved communication system.

In a possible scenario, a plurality of RAN nodes cooperatively assist a terminal in implementing wireless access, and different RAN nodes separately implement a part of functions of a base station. For example, the RAN node (namely, the network device in this application) may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). In different systems, the CU (or the CU-CP and the CU-UP), the DU, or the RU may alternatively have different names, but a person skilled in the art may understand meanings thereof. For example, in an open radio access network (open radio access network, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any unit in the CU (or the CU-CP or the CU-UP), the DU, and the RU in this application may be implemented by using a software module, a hardware module, or a combination of a software module and a hardware module. It should be understood that a specific technology and a specific device form that are used by the network device are not limited in this application. In this application, the network device, a chip disposed in the network device, and software and/or hardware modules that can implement functions of the network device are collectively referred to as a network device.

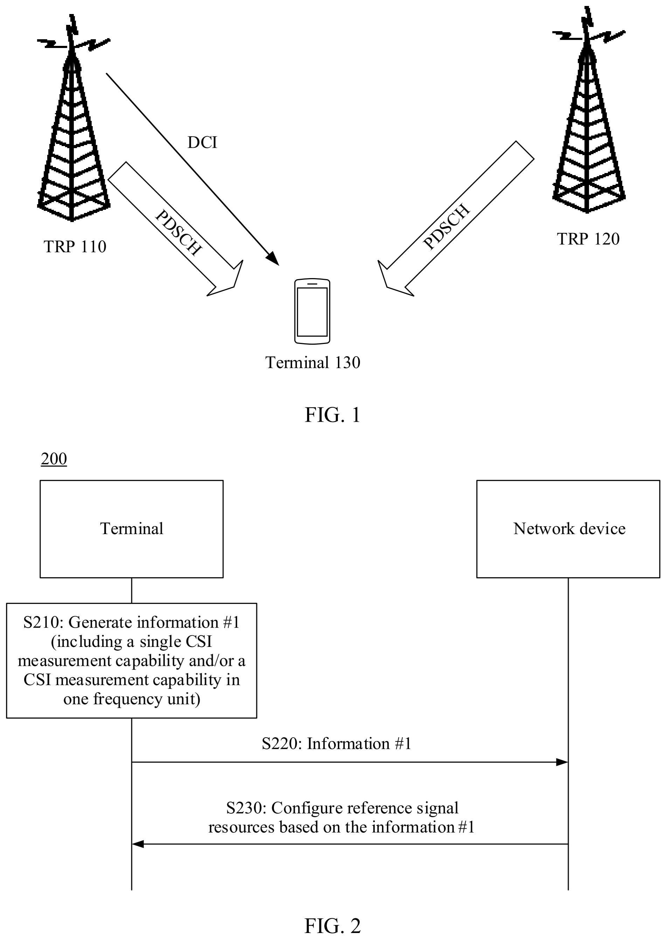

FIG. 1 is a diagram of a communication system applicable to this application. Refer to FIG. 1, a TRP 110 and a TRP 120 simultaneously send same data to a terminal 130. Only one of the two TRPs transmits one piece of downlink control information (downlink control information, DCI), and schedules one physical downlink shared channel (physical downlink shared channel, PDSCH). Each stream/layer (corresponding to one demodulation reference signal (demodulation reference signal, DMRS) port) of the PDSCH is transmitted by both the TRPs. In addition, the TRP 120 may send DCI to the terminal 130. FIG. 1 merely shows an example in which the TRP 110 sends the DCI. This is not limited in this application.

It should be understood that FIG. 1 merely shows a scenario in which two TRPs perform CJT. Actually, there is also a scenario in which one TRP or more TRPs (for example, three, four, or five TRPs) perform CJT.

It should be further understood that the TRPs in FIG. 1 are merely an implementation of the network device. For CJT, the network device may be implemented in another form, for example, a base station. The following briefly describes related technologies by using an example in which the network device is a TRP.

In an earlier version of NR, CSI measurement is based on a single-TRP measurement hypothesis. After a CJT technology is introduced, CSI based on the single-TRP measurement hypothesis cannot satisfy a channel model, and further cannot well support a measurement requirement of CJT. For ease of understanding of this application, the following describes some concepts in embodiments of this application.

1. Single TRP measurement hypothesis

Before providing data transmission service for a terminal, a TRP needs to obtain CSI of a downlink channel between the TRP and the terminal in advance. In an earlier version of NR, CSI measurement is based on the single-TRP measurement hypothesis. To be specific, when the terminal performs CSI measurement, it is assumed that subsequent data is sent from one TRP, and the terminal performs CSI measurement on one reference signal resource and one interference measurement resource associated with the reference signal resource, to obtain a CSI report.

In a wireless communication process, a specific process in which a TPR (for example, a TRP) obtains a CSI report is as follows:

Step 1: The TPR transmits a channel state sounding signal on reference signal resources. For example, in NR, the channel state sounding signal may be an NZP CSI-RS.

Step 2: The terminal receives the channel state sounding signal on the pre-configured reference signal resources to perform channel estimation. In addition, the TRP further configures, for the terminal, a group of interference measurement resources corresponding to the reference signal resources, where each reference signal resource is associated with one interference measurement resource. The terminal receives a signal on these pre-configured interference measurement resources to perform interference measurement. The terminal calculates one piece of CSI based on a channel measurement result obtained on one reference signal resource and an interference measurement result obtained on one associated interference measurement resource. When the configured group of reference signal resources include a plurality of reference signal resources, the terminal may calculate a plurality of pieces of CSI on the plurality of reference signal resources and a plurality of interference measurement resources associated with the plurality of reference signal resources. The terminal selects one piece of CSI from the plurality of pieces of CSI to form the CSI report, and sends the CSI report to the TRP on an uplink channel.

Further, the TPR may perform scheduling based on CSI reports fed back by terminals, for example, send downlink data to the terminal on a PDSCH.

It should be noted that, in an NR protocol, the TPR configures a reference signal resource and an interference measurement resource for the terminal, and the terminal performs corresponding channel measurement and interference measurement respectively based on a signal on the reference signal resource and a signal on the interference measurement resource. To simplify description, in embodiments of this application, the foregoing process is simply described as follows: The terminal performs CSI measurement on the reference signal resource and the interference measurement resource.

2. CJT measurement hypothesis

The CJT measurement hypothesis means that when a terminal performs CSI measurement, it is assumed that subsequent data is sent from a plurality of TRPs, and the terminal performs CSI measurement on a plurality of channel measurement resource pairs and interference measurement resources associated with the plurality of channel measurement resource pairs, to obtain a CSI report.

It is assumed that four TRPs perform CJT. A transmission procedure is as follows:

Step 1: Each TRP first sends a CSI-RS resource.

Step 2: The terminal obtains a channel $H_i$ from the terminal to the TRP through measurement based on a CSI-RS, where $i = 1, 2, 3, or 4$. A dimension of $H_i$ is $N_r \times N_t$, where it is assumed that the terminal has $N_r$ receive antennas/ports, and the TRP has $N_t$ transmit antennas/ports.

Step 3: The terminal obtains CSI based on a joint channel $[H_1, H_2, H_3, H_4]$ and reports the CSI to the TPR.

CSI measurement involves a matrix decomposition operation. A complexity of CSI measurement in the single-TRP measurement hypothesis is different from a complexity of CSI measurement in the CJT measurement hypothesis. Specifically, in the CSI measurement in the single-TRP measurement hypothesis, the terminal may perform CSI measurement on one measurement resource, to obtain one CSI result. For example, it is assumed that the terminal

has $N_r$ receive antennas/ports, and the TRP has $N_t$ transmit antennas/ports. In this case, the complexity of CSI measurement in the single-TRP measurement hypothesis is proportional to $N_t^3$. In CSI measurement in a CJT measurement mode, the terminal may perform CSI measurement on a plurality of measurement resources, to obtain a group of CSI results. The terminal needs to perform joint CSI measurement on a plurality of measurement resources to obtain better performance. For example, the complexity of CSI measurement in the CJT measurement hypothesis is proportional to $(4 * N_t)^3 = 64 N_t^3$. Compared with four single-TRP CSI measurements performed by the terminal, joint CSI measurement performed by four TRPs has a complexity increased by 16 times. Obviously, a calculation complexity for the terminal to perform joint CSI measurement on a plurality of measurement resources based on the CJT measurement hypothesis is far higher than a sum of calculation complexities for the terminal to perform independent CSI measurement on a plurality of measurement resources based on the single-TRP measurement hypothesis.

To make a configuration of the TPR match a processing capability of the terminal, in the single-TRP measurement hypothesis, the terminal may enable, by using a group of triplet parameters, the TPR to obtain a CSI measurement and reporting capability. The triplet parameter may be represented as {P, S, T}. The triplet parameter includes: a maximum quantity of transmit ports (maxNumberTxPortsPerResource) on one resource, represented as P; a maximum quantity of resources (maxNumberResourcePerBand), represented as S; and a total quantity of transmit ports (totalNumberTxPortsPerBand), represented as T. It should be understood that a sequence of the triplet is not limited herein, and an actual reporting manner of the triplet may also include direct reporting, reporting in an index form, or another manner. Alternatively, the terminal may enable the TPR to obtain the CSI measurement and reporting capability in another manner.

For example, the terminal reports three triplet capability parameters: {8, 8, 64}, {16, 4, 64}, and {32, 2, 64}. The following configurations satisfy the reporting capability of the terminal:

six 8-port NZP CSI-RS resources, where in the configuration, a maximum quantity of transmit ports on one resource is 8, a quantity of resources is 6, and a total quantity of transmit ports is 48, which do not exceed the capability parameter {8, 8, 64}; and
two 8-port NZP CSI-RS resources and two 16-port NZP CSI-RS resources, where in the configuration, a maximum quantity of transmit ports on one resource is 16, a quantity of resources is 4, and a total quantity of transmit ports is 48, which do not exceed the capability parameter {16, 4, 64}.

However, the following configurations may exceed the reporting capability by the terminal:

ten 8-port NZP CSI-RS resources, where in the configuration, a maximum quantity of transmit ports on one resource is 8, a quantity of resources is 10, and a total quantity of transmit ports is 80, which exceed all the capability parameters {8, 8, 64}, {16, 4, 64}, and {32, 2, 64} reported by the terminal in the quantity of resources and the quantities of transmit ports; and
two 8-port NZP CSI-RS resources and one 32-port NZP CSI-RS resource, where in the configuration, a maximum quantity of transmit ports on one resource is 32, a quantity of resources is 3, and a total quantity of transmit ports is 48, which exceed the capability parameters {8, 8, 64} or {16, 4, 64} reported by the terminal in the maximum quantity of ports, and the capability parameter {32, 2, 64} reported by the terminal in the quantity of resources.

CSI measurement is very complex for the terminal, and the TPR needs to be notified of the CSI measurement capability of the terminal in advance, so that the TPR can configure or trigger CSI measurement based on the actual capability of the terminal. However, currently, when reporting the capability, the terminal reports only the CSI measurement capability in the single-TRP measurement hypothesis, and the TPR cannot perform corresponding configuration based on a CSI measurement capability of the terminal based on the CJT measurement hypothesis during actual processing. Consequently, a configuration of the TPR exceeds the processing capability of the terminal or fails to effectively utilize the processing capability of the terminal.

In view of this, embodiments of this application provide a method. A CSI measurement capability based on the CJT measurement hypothesis is reported, so that a TPR can learn of a capability of a terminal, to perform appropriate configuration.

Before the solutions of this application are described, the following points are first described:

1. In this application, CJT measurement hypothesis, CJT measurement, CSI measurement hypothesis, CSI measurement, CJT CSI measurement, CJT CSI measurement hypothesis, and the like represent a same meaning, and may be interchangeably used. In this application, one CSI measurement and a single CSI measurement have a same meaning, and both indicate a CSI measurement.
It should be understood that CJT is a name in a current protocol. With evolution of the protocol and development of technologies, CJT may also be changed to another name. In this case, the CJT in this application may also be correspondingly changed to a new name. Different names or change of the name do not constitute any limitation on this application.

2. In this application, a resource may be a reference signal resource. For example, the reference signal resource may be an NZP CSI-RS resource, or may be a reference signal resource that has a same or similar function as an NZP CSI-RS resource. The reference signal resource may also be referred to as a signal measurement resource, a channel measurement resource, or a measurement resource.

3. In this application, a parameter set may also be referred to as a group of parameters, a set of parameters, or a combination of parameters. For example, a first capability parameter set may also be referred to as a group of first capability parameters, a set of first capability parameters, or a combination of first capability parameters. It should be understood that a parameter set may also be replaced with another description that may represent a same meaning.

4. "Sending" and "receiving" in embodiments of this application represent signal/information transfer directions. For example, "sending information #1 to a network device" may be understood as that a destination of the information #1 is the network device, and may include direct sending through an air interface, or indirect sending by another unit or module through an air interface. "Receiving information #1 from a terminal" may be understood as that a source of the information #1 is the terminal device, and may include direct receiving from the terminal through an air interface, or may include indirect receiving from the terminal through an air interface from another unit or module. "Sending" may alternatively be understood as "outputting" of a chip interface, and "receiving" may alternatively be understood as "inputting" of a chip interface. In other words, sending and receiving may be performed between devices, for example, between a network device and a terminal; or may be performed inside a device, for example, sending or receiving between components, modules, chips, software modules, or hardware modules inside the device through a bus, a cable, or an interface.

5. In embodiments of this application, "indication" may include a direct indication and an indirect indication, or may include an explicit indication and an implicit indication. Information indicated by a piece of information (which may be referred to as indication information) is referred to as to-be-indicated information. In a specific implementation process, the to-be-indicated information may be indicated in a plurality of manners, for example, but not limited to, directly indicating the to-be-indicated information, for example, indicating the to-be-indicated information, an index of the to-be-indicated information, or the like. Alternatively, the to-be-indicated information may be indirectly indicated by indicating other information. There is an association relationship between the other information and the to-be-indicated information. Alternatively, only a part of the to-be-indicated information may be indicated, and the remaining part of the to-be-indicated information is known or pre-agreed on. For example, specific information may be indicated by using an arrangement sequence of pieces of information that is pre-agreed on (for example, pre-defined in a protocol), to reduce indication overheads to some extent. A specific indication manner is not limited in this application. It may be understood that, for a sender of the indication information, the indication information may indicate to-be-indicated information, and for a receiver of the indication information, the indication information may be for determining the to-be-indicated information.

The following describes in detail the solutions provided in this application with reference to corresponding flowcharts. It may be understood that in the schematic flowcharts provided in this application, the method is illustrated mainly by using examples in which different communication apparatuses are used as execution bodies of the interaction illustrations. However, the execution bodies of the interaction illustrations are not limited in this application. For example, a terminal in the schematic flowcharts may alternatively be a chip, a chip system, or a processor that supports the terminal in implementing the method, or may be a logical module or software that can implement all or a part of functions of the terminal. A network device in the schematic flowcharts may alternatively be a chip, a chip system, or a processor that supports the network device in implementing the method, or may be a logical module or software that can implement all or a part of functions of the network device.

FIG. 2 is a schematic flowchart of a communication method according to an embodiment of this application. The method 200 may include S210 to S230. The following describes the steps.

S210: A terminal generates information #1.

S220: The terminal sends the information #1 to a network device. Correspondingly, the network device receives the information #1 from the terminal.

S230: The network device configures reference signal resources for the terminal based on the information #1.

In this embodiment of this application, the information #1 may indicate a CSI measurement capability of the terminal in a CJT measurement hypothesis, that is, the information #1 indicates a capability of the terminal during CJT CSI measurement. For example, the CSI measurement capability may be reflected by information such as a maximum quantity of resources that can be measured by the terminal, a maximum total quantity of transmit ports that can be measured by the terminal, and a maximum quantity of transmit ports that can be measured by the terminal on one resource.

Specifically, the information #1 indicates at least one first capability parameter set. For example, the information #1 may include the at least one first capability parameter set, or the information #1 may include a parameter for determining the at least one first capability parameter set. One first capability parameter set includes a maximum total quantity F of transmit ports in one frequency unit and at least two of a maximum quantity A of transmit ports on one resource associated with one CSI measurement hypothesis, a maximum total quantity B of resources associated with the one CSI measurement hypothesis, and a maximum total quantity C of transmit ports on a reference signal resource associated with the one CSI measurement hypothesis. In other words, one first capability parameter set may include F and two of A, B, and C, or one first capability parameter set may include A, B, C, and F. It can be learned based on the first parameter set that the one CSI measurement hypothesis is associated with a maximum of B resources, a maximum quantity of transmit ports on each resource is A, a maximum of C transmit ports are measured in the one CSI measurement hypothesis, and a maximum of F transmit ports are measured in one frequency unit.

For example, C=A*B, where A, B, and C are all integers.

In a possible implementation, the frequency unit in this application is one or more carriers or all carriers; or the frequency unit is one or more frequency bands (Bands); or the frequency unit is one or more frequency band combinations (band combinations, BCs); or the frequency unit is one or more bandwidth parts (bandwidth parts, BWPs).

In some embodiments, the first capability parameter set further indicates a maximum quantity D of transmit ports on one resource in one frequency unit, where A=D.

For example, D may be determined based on A, or the first capability parameter set may include D.

It should be noted that a maximum quantity of transmit ports on one resource in one frequency unit may also be referred to as a maximum quantity of transmit ports on one resource.

In some embodiments, a maximum total quantity E of reference signal resources in one frequency unit may be further determined based on F and D. E satisfies: F=D*E, or $E = \lfloor F/D \rfloor$, where $\lfloor \ \rfloor$ represents rounding down, and D, E, and F are integers.

In some embodiments, the first capability parameter set further indicates a quantity M of groups of CSI measurements supported in one frequency unit, where M is a positive integer. For example, M may be determined based on at least two of A, B, or C in the first capability parameter set, or the first capability parameter set may include M.

A total quantity of transmit ports corresponding to the M groups of CSI measurements is less than or equal to F. M satisfies one of the following:

$$M = F/(A*B), \quad M = \lfloor F/(A*B) \rfloor, \quad M \geq F/(A*B), \text{ or } M \geq \lfloor F/(A*B) \rfloor,$$

where $\lfloor \ \rfloor$ represents rounding down, and F represents a maximum total quantity of transmit ports in one frequency unit.

One first capability parameter set may include one group of capability parameters, or may include a plurality of groups of capability parameters. This is not limited in this application.

The following describes several possible implementations of the first capability parameter set.

Manner 1

One first capability parameter set may be represented as: {{A, B}, F}/{A, B, F}, {{A, C}, F}/{A, C, F}, {{B, C}, F}/{B, C, F}, or {{A, B, C}, F}/{A, B, C, F}.

It should be understood that a sequence of the parameters in the triplet or the quadruplet is not limited herein, and an actual manner of reporting the triplet or the quadruplet may also include direct reporting, reporting in an index form, or another manner.

Optionally, in this manner, it is satisfied that A=D, F=D*E, and $M = F/(A_*B)$.

For example, the terminal reports two triplet capability parameters (that is, the terminal reports two first capability parameter sets): {{32, 2}, 128} and {{8, 4}, 128}:

{{32, 2}, 128}: A maximum quantity of transmit ports on one resource associated with the one CSI measurement hypothesis is 32, a maximum total quantity of resources associated with the one CSI measurement hypothesis is 2, a maximum total quantity of transmit ports on a reference signal resource associated with the one CSI measurement hypothesis is 64, and a maximum total quantity of transmit ports in one frequency unit is 128. In other words, for a single CSI measurement, the terminal supports a maximum of 2 resources, a maximum of 32 transmit ports on each resource, and a maximum of 128 transmit ports in one frequency unit. Further, a maximum quantity of transmit ports on one resource in one frequency unit is 32, a maximum total quantity of reference signal resources in one frequency unit is 4, and a maximum of two groups of CSI measurements may be supported in one frequency unit.

{{8, 4}, 128}: A maximum quantity of transmit ports on one resource associated with the one CSI measurement hypothesis is 8, a maximum total quantity of resources associated with the one CSI measurement hypothesis is 4, a maximum total quantity of transmit ports on a reference signal resource associated with the one CSI measurement hypothesis is 32, and a maximum total quantity of transmit ports in one frequency unit is 128. In other words, for a single CSI measurement, the terminal supports a maximum of 4 resources, a maximum of 8 transmit ports on each resource, and a maximum of 128 transmit ports in one frequency unit. Further, a maximum quantity of transmit ports on one resource in one frequency unit is 8, a maximum total quantity of reference signal resources in one frequency unit is 16, and a maximum of four groups of CSI measurements may be supported in one frequency unit.

Optionally, in this manner, it is satisfied that A=D, $E = \lfloor F/D \rfloor$, and $M = \lfloor F/(A*B) \rfloor$.

For example, the terminal reports two triplet capability parameters (that is, the terminal reports two first capability parameter sets): {{32, 2}, 120} and {{8, 4}, 120}:

{{32, 2}, 120}: A maximum quantity of transmit ports on one resource associated with the one CSI measurement hypothesis is 32, a maximum total quantity of resources associated with the one CSI measurement hypothesis is 2, a maximum total quantity of transmit ports on a reference signal resource associated with the one CSI measurement hypothesis is 64, and a maximum total quantity of transmit ports in one frequency unit is 120. In other words, for a single CSI measurement, the terminal supports a maximum of 2 resources, a maximum of 32 transmit ports on each resource, and a maximum of 120 transmit ports in one frequency unit. Further, a maximum quantity of transmit ports on one resource in one frequency unit is 32, a maximum total quantity of reference signal resources in one frequency unit is 3, and a maximum of one group of CSI measurements may be supported in one frequency unit.

{{8, 4}, 120}: A maximum quantity of transmit ports on one resource associated with the one CSI measurement hypothesis is 8, a maximum total quantity of resources associated with the one CSI measurement hypothesis is 4, a maximum total quantity of transmit ports on a reference signal resource associated with the one CSI measurement hypothesis is 32, and a maximum total quantity of transmit ports in one frequency unit is 120. In other words, for a single CSI measurement, the terminal supports a maximum of 4 resources, a maximum of 8 transmit ports on each resource, and a maximum of 120 transmit ports in one frequency unit. Further, a maximum quantity of transmit ports on one resource in one frequency unit is 8, a maximum total quantity of reference signal resources in one frequency unit is 15, and a maximum of three groups of CSI measurements may be supported in one frequency unit.

Optionally, in this manner, it is satisfied that A=D, $E = \lfloor F/D \rfloor$, and $M \geq F/(A*B)$.

For example, the terminal reports the following triplet capability parameters (that is, the terminal reports the following first capability parameter sets): {{8, 2}, 32} and {{8, 4}, 120}. In this case, for a single CSI measurement, the terminal supports a maximum of 2 resources, a maximum of 8 transmit ports on each resource, and a maximum of 32 transmit ports in one frequency unit. Further, a maximum quantity of transmit ports on one resource in one frequency unit is 8, and a maximum total quantity of reference signal resources in one frequency unit is 2. For example, three groups of CSI measurements, or four groups of CSI measurements may be supported in one frequency unit. For example, the terminal may support the following three groups of CSI measurements, where three elements in each group are respectively A, B, and C: {8, 2, 16}, {8, 1, 8}, and {8, 1, 8}. For another example, the terminal may support the following four groups of CSI measurements, where three elements in each group are respectively A, B, and C: {8, 1, 8}, {8, 1, 8}, {8, 1, 8}, and {8, 1, 8}.

Manner 2

One first capability parameter set further includes at least one of D or E.

In other words, one first capability parameter may include at least two of A, B, or C, at least one of D or E, and F.

In a possible design, the first capability parameter set may be represented in the following form: {A, E, B, F}. Herein, A=D, and A may be replaced with D.

Optionally, in this manner, $M = F/(A*B)$ or $M = \lfloor F/(A*B) \rfloor$.

It should be understood that A and B in the foregoing quadruple may alternatively be replaced with any combination of two elements or three elements in A, B, and C, other than the combination of A and B. In addition, the first capability parameter set may further include A and D.

It should be further understood that a sequence of the parameters in the quadruplet is not limited herein, and an actual manner of reporting the quadruplet may also include direct reporting, reporting in an index form, or another manner.

For example, the terminal reports two groups of first capability parameter sets: {32, 4, 2, 128} and {8, 16, 4, 128}, respectively:

{32, 4, 2, 128}: A maximum total quantity of transmit ports in one frequency unit is 128, a maximum total quantity of reference signal resources in one frequency unit is 4, and a maximum quantity of transmit ports on one resource in one frequency unit is 32. A maximum total quantity of resources associated with the one CSI measurement hypothesis is 2, and a maximum quantity of transmit ports on one resource associated with the one CSI measurement hypothesis is 32. In addition, a maximum of two groups of CSI measurements may be supported in one frequency unit.

{{8, 16, 4, 128}: A maximum total quantity of transmit ports in one frequency unit is 128, a maximum total quantity of reference signal resources in one frequency unit is 16, and a maximum quantity of transmit ports on one resource in one frequency unit is 32. A maximum total quantity of resources associated with the one CSI measurement hypothesis is 4, and a maximum quantity of transmit ports on one resource associated with the one CSI measurement hypothesis is 8. In addition, a maximum of four groups of CSI measurements may be supported in one frequency unit.

It should be understood that the first capability parameter set may also be represented in the following forms: {A, E, B, F, C}, {A, D, E, B, F, C}, or the like. It should be further understood that a sequence of the parameters in the set is not limited herein, and an actual manner of reporting the set may also include direct reporting, reporting in an index form, or another manner.

Manner 3

The at least one first capability parameter set includes at least one group of second capability parameters and at least one corresponding group of third capability parameters. In other words, the first capability parameter set includes a group of second capability parameters and a corresponding group of third capability parameters. One group of second capability parameters includes at least two of A, B, and C, and one group of third capability parameters includes D, E, and F.

In other words, the information #1 may include at least one group of second capability parameters and at least one group of third capability parameters, and the at least one group of second capability parameters is in one-to-one correspondence with the at least one group of third capability parameters. For example, the information #1 may include two groups of second capability parameters (for example, a parameter group #1 and a parameter group #2) and two groups of third capability parameters (for example, a parameter group #3 and a parameter group #4). The parameter group #1 corresponds to the parameter group #3, and the parameter group #2 corresponds to the parameter group #4. The correspondence herein means that when the terminal supports a group of second capability parameters, the terminal also supports a group of third capability parameters corresponding to the group of second capability parameters.

In a possible design, a group of first capability parameter sets is represented as {A, B, C} and {D, E, F} corresponding to {A, B, C}, or a group of first capability parameter sets may be represented as { {A, B, C}, {D, E, F}}.

Optionally, in this manner, M = $F/(A * B)$ or $M = \left\lfloor F/(A * B) \right\rfloor$.

For example, the terminal reports two groups of second capability parameters and two corresponding groups of third capability parameters. The two groups of third capability parameters are as follows:

{32, 4, 128}: In one frequency unit, a maximum total quantity of transmit ports is 128, a maximum total quantity of reference signal resources is 4, and a maximum quantity of transmit ports on one resource is 32. Further, a maximum of two groups of CSI measurements may be supported in one frequency unit.

{8, 16, 128}: In one frequency unit, a maximum total quantity of transmit ports is 128, a maximum total quantity of reference signal resources is 16, and a maximum quantity of transmit ports on one resource is 8. Further, a maximum of four groups of CSI measurements may be supported in one frequency unit.

The two groups of second capability parameters are as follows:

{32, 2, 64}: For one CSI measurement, a maximum quantity of transmit ports on one resource is 32, a maximum total quantity of resources is 2, and a maximum total quantity of transmit ports on a reference signal resource is 64.

{32, 2, 64} corresponds to the capability parameter {32, 4, 128}, that is, for a terminal having a capability of {32, 2, 64} in a single CSI measurement, a capability of the terminal in one frequency unit is {32, 4, 128}.

{8, 4, 32}: For one CSI measurement, a maximum quantity of transmit ports on one resource is 32, a maximum total quantity of resources is 4, and a maximum total quantity of transmit ports on a reference signal resource is 8.

{8, 4, 32} corresponds to the capability parameter {8, 16, 128}, that is, for a terminal having a capability of {8, 4, 32} in a single CSI measurement, a capability of the terminal in one frequency unit is {8, 16, 128}.

In conclusion, according to the communication method provided in this application, the terminal reports a single CSI measurement capability and/or a CSI measurement capability in one frequency unit, to ensure that the network device performs CSI measurement configuration without exceeding the CSI measurement capabilities of the terminal, thereby ensuring that the terminal can correctly perform CSI measurement.

In some embodiments, the at least one first capability parameter set includes at least one first capability parameter set associated with a codebook of a first mode and at least one first capability parameter set associated with a codebook of a second mode.

In other words, the information #1 may include at least one first capability parameter set associated with the codebook of the first mode and at least one first capability parameter set associated with the codebook of the second mode. In other words, the information #1 may include a plurality of first capability parameter sets, where some first capability parameter sets are associated with the codebook of the first mode, and some other first capability parameter sets are associated with the codebook of the second mode.

For example, in combination with the manner 1, the terminal may report at least one group of {{A, B}, F} associated with the codebook of the first mode and at least one group of {{A, B}, F} associated with the codebook of the second mode.

For example, in combination with the manner 2, the terminal may report at least one group of {A, E, B, F} associated with the codebook of the first mode and at least one group of {A, E, B, F} associated with the codebook of the second mode.

For example, for the manner 3, the at least one group of second capability parameters includes at least one group of second capability parameters associated with the codebook of the first mode and at least one group of second capability parameters associated with the codebook of the second mode, and the at least one group of third capability parameters includes at least one group of third capability parameters associated with the codebook of the first mode and at least one group of third capability parameters associated with the codebook of the second mode. In other words, the information #1 includes at least one group of second capability parameters associated with the codebook of the first mode, at least one corresponding group of third capability parameters associated with the codebook of the first mode, at least one group of second capability parameters associated with the codebook of the second mode, and at least one corresponding group of third capability parameters associated with the codebook of the second mode.

For example, the information #1 may include at least one group of {A, B, C} associated with the codebook of the first mode, {D, E, F} corresponding to the at least one group of {A, B, C} associated with the codebook of the first mode, at least one group of {A, B, C} associated with the codebook of the second mode, and {D, E, F} corresponding to the at least one group of {A, B, C} associated with the codebook of the second mode.

In this application, for the codebook of the first mode, frequency domain bases corresponding to all reference signal resources are the same or different, that is, frequency domain bases corresponding to all reference signal resources may be the same or different. For the codebook of the second mode, frequency domain bases corresponding to all reference signal resources are the same.

In an implementation, the codebook of the first mode satisfies the following formula:

$$\begin{bmatrix} \boldsymbol{W}_{1,1}\widetilde{\boldsymbol{W}}_{2,1}\boldsymbol{W}_{f,1}^{H} \\ \vdots \\ \boldsymbol{W}_{1,N}\widetilde{\boldsymbol{W}}_{2,N}\boldsymbol{W}_{f,N}^{H} \end{bmatrix}.$$

N is a quantity of resources in one CSI measurement, that is, N is a quantity of TPRs for CJT. The last column in the formula is a frequency domain base, and each row is a precoding matrix of one corresponding TRP.

In an implementation, the codebook of the second mode satisfies the following formula:

$$\begin{bmatrix} \boldsymbol{W}_{1,1}\widetilde{\boldsymbol{W}}_{2,1}\boldsymbol{W}_{f}^{H} \\ \vdots \\ \boldsymbol{W}_{1,N}\widetilde{\boldsymbol{W}}_{2,N}\boldsymbol{W}_{f}^{H} \end{bmatrix}.$$

N is a quantity of resources in one CSI measurement, that is, N is a quantity of TPRs for CJT. The last column in the formula is a frequency domain base, and each row is a precoding matrix of one corresponding TRP.

Because a hardware computing capability of the terminal is fixed, CSI measurement capabilities corresponding to codebooks of different modes (namely, different codebook types) are different. The terminal reports CSI measurement and reporting capabilities associated with the codebooks of the different modes supported by the terminal, so that the network device can obtain the CSI measurement and reporting capabilities associated with the codebooks of the different modes of the terminal, and therefore, a configuration of the network device can match a processing capability of the terminal.

Optionally, the codebook of the second mode can also support the capability parameters associated with the codebook of the first mode. In other words, the capability parameters associated with the codebook of the first mode may also be associated with the codebook of the second mode.

Because implementation of the codebook of the first mode is complex, if the terminal can support a CSI measurement requirement with a higher complexity, the terminal can also support a CSI measurement requirement with a lower complexity. Therefore, the codebook of the second mode can also support the capability parameters associated with the codebook of the first mode.

Optionally, a configuration of the network device for the codebook of the first mode cannot exceed the capability parameters associated with the codebook of the second mode.

Because the implementation of the codebook of the first mode is complex, a capability value reported by the terminal in the first mode may be lower than a capability value reported in the second mode. Therefore, a configuration of the network device for the codebook of the first mode cannot exceed the capability parameters associated with the codebook of the second mode. For example, for the codebook of the first mode, A, B, and C configured by the network device may be 8, 4, and 32 respectively; and for the codebook of the second mode, A, B, and C configured by the network device may be 8, 8, and 64 respectively.

In some embodiments, the at least one first capability parameter set includes at least one first capability parameter set associated with a first measurement mode and at least one first capability parameter set associated with a second measurement mode.

In other words, the information #1 may include at least one first capability parameter set associated with the first measurement mode and at least one first capability parameter set associated with the second measurement mode. In other words, the information #1 may include a plurality of first capability parameter sets, where some first capability parameter sets are associated with the first measurement mode, and some other first capability parameter sets are associated with the second measurement mode.

For example, in combination with the manner 1, the terminal may report at least one group of {{A, B}, F} associated with the first measurement mode and at least one group of {{A, B}, F} associated with the second measurement mode.

For example, in combination with the manner 2, the terminal may report at least one group of {A, E, B, F} associated with the first measurement mode, and at least one group of {A, E, B, F} associated with the second measurement mode.

For example, for the manner 3, the at least one group of second capability parameters includes at least one group of second capability parameters associated with the first measurement mode and at least one group of second capability parameters associated with the second measurement mode, and the at least one group of third capability parameters includes at least one group of third capability parameters associated with the first measurement mode and at least one group of third capability parameters associated with the second measurement mode. In other words, the information #1 includes at least one group of second capability parameters associated with the first measurement mode, at least one corresponding group of third capability parameters associated with the first measurement mode, at least one group of second capability parameters associated with the second measurement mode, and at least one corresponding group of third capability parameters associated with the second measurement mode.

For example, the information #1 may include at least one group of {A, B, C} associated with the first measurement mode, {D, E, F} corresponding to the at least one group of {A, B, C} associated with the first measurement mode, at least one group of {A, B, C} associated with the second measurement mode, and {D, E, F} corresponding to the at least one group of {A, B, C} associated with the second measurement mode.

In this application, for the first measurement mode, a reported CSI measurement result corresponds to configured $N_{TRP}$ reference signal resources, and for the second measurement mode, a reported CSI measurement result corresponds to N reference signal resources in the configured $N_{TRP}$ reference signal resources, where $N \leq N_{TRP}$.

Specifically, for the first measurement mode, the network device configures the $N_{TRP}$ reference signal resources, and the terminal measures and reports CSI of the $N_{TRP}$ reference signal resources. For the second measurement mode, the network device configures $N_{TRP}$ reference signal resources, and the terminal may select N reference signal resources from the $N_{TRP}$ reference signal resources for CSI measurement and reporting. In this mode, there are a plurality of solutions for the terminal to select the reference signal resources, and a complexity differs between different solutions. For example, in a solution 1, the network device configures four reference signal resources for CJT, and the terminal directly performs joint CSI measurement on the four reference signal resources. Finally, the terminal finds that codebook compression values of only two reference signal resources are non-zero. In this case, the terminal reports only CSI corresponding to the two reference signal resources. In a solution 2, it is assumed that the network device configures four reference signal resources for CJT. The terminal traverses all 15 cases, including: four cases in total in which one reference signal resource in the four reference signal resources is for CSI measurement; six cases in total in which two reference signal resources in the four reference signal resources are for CSI measurement; four cases in total in which one reference signal resource in the four reference signal resources is for CSI measurement; and one case in total in which four reference signal resources in the four reference signal resources are for CSI measurement. The terminal performs 15 CSI measurements, and reports only one of the CSI measurement results based on the CSI measurement results.

Because the hardware computing capability of the terminal is fixed, CSI computing processing capabilities in different measurement modes are also different. The terminal reports CSI measurement and reporting capabilities associated with the different measurement modes supported by the terminal, so that the network device can obtain the CSI measurement and reporting capabilities associated with the different measurement modes of the terminal, and therefore, the configuration of the network device can match the processing capability of the terminal.

Optionally, the first measurement mode can also support the capability parameters associated with the second measurement mode. In other words, the capability parameters associated with the second measurement mode may also be associated with the first measurement mode.

Because implementation of the second measurement mode is complex, if the terminal can support a CSI measurement requirement with a higher complexity, the terminal can also support a CSI measurement requirement with a lower complexity. Therefore, the first measurement mode can also support the capability parameters associated with the second measurement mode.

Optionally, a configuration of the network device in the second measurement mode cannot exceed the capability parameters associated with the first measurement mode.

Because the implementation of the second measurement mode is complex, a capability value reported by the terminal in the second measurement mode may be lower than a capability value reported in the first measurement mode. Therefore, the configuration of the network device in the second measurement mode cannot exceed the capability parameters associated with the first measurement mode.

It should be understood that, in some embodiments, the at least one first capability parameter set may further include at least one first capability parameter set associated with both the codebook of the first mode and the first measurement mode, and at least one first capability parameter set associated with both the codebook of the second mode and the second measurement mode. This embodiment may be implemented in combination with any one of the foregoing three manners.

In conclusion, according to the communication method provided in this application, the terminal reports a single CSI measurement capability and/or a CSI measurement capability in one frequency unit, to ensure that the network device performs CSI measurement configuration without exceeding the CSI measurement capabilities of the terminal, thereby ensuring that the terminal can correctly perform CSI measurement.

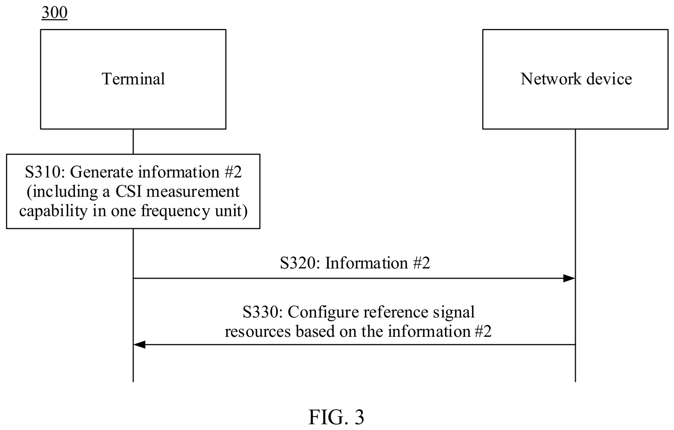

FIG. 3 is a schematic flowchart of another communication method according to this application. The method 300 may include S310 to S330. The following describes the steps.

S310: A terminal generates information #2.

S320: The terminal sends the information #2 to a network device. Correspondingly, the network device receives the information #2 from the terminal.

S330: The network device configures reference signal resources for the terminal based on the information #2.

In this embodiment of this application, the information #2 may indicate a CSI measurement capability of the terminal in the CJT measurement hypothesis. Specifically, the information #2 indicate at least one group of capability parameters, or the information #2 may include at least one group of capability parameters. Any group of capability parameters includes the foregoing D, E, and F. For details about D, E, and F, refer to related content in the method 200. Details are not described herein again.

For example, a group of capability parameters may be represented as {D, E, F}. It should be understood that a sequence of parameters in a triplet is not limited herein, and an actual reporting manner of the triplet may also include direct reporting, reporting in an index form, or another manner.

According to the communication method provided in this application, the terminal reports a CSI measurement capability in one frequency unit, to ensure that the network device performs CSI measurement configuration without exceeding the CSI measurement capability of the terminal, thereby ensuring that the terminal can correctly perform CSI measurement.

In some embodiments, the at least one group of capability parameters includes at least one group of capability parameters associated with a codebook of a first mode and at least one group of capability parameters associated with a codebook of a second mode. In other words, the information #2 may include at least one group of capability parameters associated with the codebook of the first mode and at least one group of capability parameters associated with the codebook of the second mode. For details about the codebook of the first mode and the codebook of the second mode, refer to the descriptions of the method 200.

For example, the terminal may report at least one group of {D, E, F} associated with the codebook of the first mode and at least one group of {D, E, F} associated with the codebook of the second mode.

In this solution, the terminal reports CSI measurement capabilities associated with the codebooks of the different modes supported by the terminal, so that the network device can obtain the CSI measurement capabilities associated with the codebooks of the different modes of the terminal, and therefore, a configuration of the network device can match the CSI measurement capabilities of the terminal.

Optionally, the codebook of the second mode can also support the at least one group of capability parameters associated with the codebook of the first mode. In other words, the at least one group of capability parameters associated with the codebook of the first mode may also be associated with the codebook of the second mode.

Because implementation of the codebook of the first mode is complex, if the terminal can support a CSI measurement requirement with a higher complexity, the terminal can certainly also support a CSI measurement requirement with a lower complexity. Therefore, the codebook of the second mode can also support the at least one group of capability parameters associated with the codebook of the first mode.

In some embodiments, the at least one group of capability parameters includes at least one group of capability parameters associated with a first measurement mode and at least one group of capability parameters associated with a second measurement mode. In other words, the information #2 may include at least one group of capability parameters associated with the first measurement mode and at least one group of capability parameters associated with the second measurement mode. For details about the first measurement mode and the second measurement mode, refer to the descriptions of the method 200.

For example, the terminal may report at least one group of {D, E, F} associated with the first measurement mode and at least one group of {D, E, F} associated with the second measurement mode.

In this solution, the terminal reports CSI measurement capabilities associated with the different measurement modes supported by the terminal, so that the network device can obtain the CSI measurement capabilities associated with the different measurement modes of the terminal, and therefore, the configuration of the network device can match the CSI measurement capabilities of the terminal.

Optionally, a configuration of the network device for the codebook of the first mode cannot exceed the capability parameters associated with the codebook of the second mode.

Because the implementation of the codebook of the first mode is complex, a capability value reported by the terminal in the first mode may be lower than a capability value reported in the second mode. Therefore, a configuration of the network device for the codebook of the first mode cannot exceed the capability parameters associated with the codebook of the second mode. For example, for the codebook of the first mode, A, B, and C configured by the network device may be 8, 4, and 32 respectively; and for the codebook of the second mode, A, B, and C configured by the network device may be 8, 8, and 64 respectively.

Optionally, the first measurement mode can also support the at least one group of capability parameters associated with the second measurement mode. In other words, the at least one group of capability parameters associated with the second measurement mode may also be associated with the first measurement mode.

Because implementation of the second measurement mode is complex, if the terminal can support a CSI measurement requirement with a higher complexity, the terminal can certainly also support a CSI measurement requirement with a lower complexity. Therefore, the first measurement mode can also support the at least one group of capability parameters associated with the second measurement mode.

Optionally, a configuration of the network device in the second measurement mode cannot exceed the capability parameters associated with the first measurement mode.

Because the implementation of the second measurement mode is complex, a capability value reported by the terminal in the second measurement mode may be lower than a capability value reported in the first measurement mode. Therefore, the configuration of the network device in the second measurement mode cannot exceed the capability parameters associated with the first measurement mode.

It should be understood that, in some embodiments, the at least one group of capability parameters may further include at least one group of capability parameter sets associated with both the codebook of the first mode and the first measurement mode, and at least one group of capability parameter sets associated with both the codebook of the second mode and the second measurement mode.

In the current solution, for a single-TRP CSI measurement, a quantity of CPUs occupied by one CSI measurement is equal to a quantity of resources occupied by the CSI measurement. However, for CJT CSI measurement, because the CJT measurement requires CSI measurement joint performed by a plurality of TRPs, a complexity of the CJT measurement is higher than that of the single-TRP CSI measurement. If the network device cannot learn of a quantity of CPUs required by the terminal to perform one CJT CSI measurement, a configured resource may exceed a CSI measurement capability of the terminal.

In view of this, this application further provides a communication method. In the method, a terminal reports, to a network device, a quantity of processing units (for example, CPUs) occupied in the one CJT measurement hypothesis, so that the network device can configure a resource that matches a capability of the terminal to perform CSI measurement.

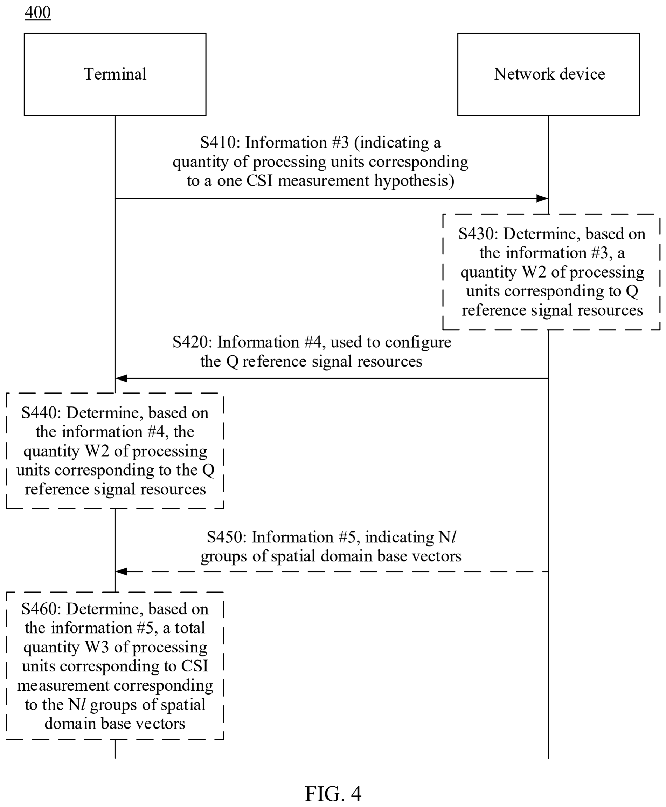

FIG. 4 is a schematic flowchart of a communication method according to this application. The method 400 may include S410 o S420. The following describes the steps.

S410: The terminal sends information #3. Correspondingly, the network device receives the information #3.

The information #3 indicates or includes a first value, a value set, or a quantity NUM_i of processing units that corresponds to using i reference signal resources to perform CSI measurement, where i=1, 2, ..., or S, or i=2, ..., or S, and the first value, the value set, S, and NUM_i are all integers. The value set includes V values, V is a positive integer, and the V values are all integers. The first value, the value set, and NUM_i all indicate a quantity of processing units corresponding to the one CSI measurement hypothesis.

Specifically, the quantity of processing units required/occupied in the one CSI measurement hypothesis (or one CSI measurement) may be determined based on the first value or the value set. NUM_i represents a quantity of processing units required/occupied when the i reference signal resources are used to perform CSI measurement.

It should be understood that the processing unit is a software and/or hardware module configured to perform CSI measurement. For example, the processing unit may be a CPU.

For example, the first value is an offset or a slope. Correspondingly, the value set includes a plurality of offsets or a plurality of slopes.

S420: The network device sends information #4 to the terminal based on the information #3. The information #4 is used to configure Q reference signal resources associated with the one CSI measurement hypothesis, and Q is a positive integer.

For example, Q is less than or equal to B, that is, Q is less than or equal to the maximum total quantity of resources associated with the one CSI measurement hypothesis.

According to the communication method provided in this application, the network device may determine, based on the information reported by the terminal, the quantity of processing units (for example, CPUs) corresponding to one CSI measurement hypothesis. In combination with a total quantity of processing units used by the terminal to perform CSI measurement, the network device can configure, for the terminal, the reference signal resources that match a capability of the terminal, to perform CSI measurement.

In some embodiments, before S420, the method may further include the following step:

S430: The network device determines, based on the information #3, a quantity W2 of processing units corresponding to the Q reference signal resources, where W2 is a positive integer.

Specifically, before configuring the Q reference signal resources for the terminal, the network device first determines whether the quantity W2 of processing units corresponding to the Q reference signal resources exceeds a total quantity of processing units used by the terminal to perform CSI measurement. If the quantity W2 does not exceed the total quantity, the network device may configure the Q reference signal resources for the terminal.

The following specifically describes how to determine W2 in three different implementations of the information #3.

Manner 1

The information #3 indicates the first value. In this case, W2 satisfies: W2=(first value+W), or W2=first value*W, where W=f(Q), and f(Q) represents that W is a function of Q.

For example, W=f(Q) satisfies one of the following: W=Q, W=Q*Q*Q, W=k1*Q, or W=k1*Q*Q, where k1 is an integer.

For example, the first value belongs to {0, 1, 2, ...}, or the first value belongs to {0, 2, 4, ...}, or the first value belongs to {1, 3, 5, ...}. Optionally, a maximum value of the first value is 4.

For example, when W2=(first value+W), the first value belongs to {0, -1, -2, ...}, or the first value belongs to {0, -2, -4, ...}, or the first value belongs to {-1, -3, -5, ...}. Optionally, a minimum value of the first value is -4.

For example, first values corresponding to P≤P1 and P>P1 are different, P is a total quantity of transmit ports on the Q reference signal resources, and P and P1 are both positive integers. For example, P1=8/16/24/32/64 or the like.

For example, P1=32. When P≤32, the first value is 1. When P>32, the first value is 2.

For example, first values corresponding to P≤P1, P1<P≤P2, and P>P2 are different, P is a total quantity of transmit ports on the Q reference signal resources, and P, P1, and P2 are all positive integers. For example, P1=8/16/24/32/64, and correspondingly, P2=16/24/32/64/128.

For example, P1=32, and P2=64. When P≤32, the first value is 1. When 32<P≤64, the first value is 2. When P>64, the first value is 3.

In some embodiments, when Q=1, if W2=(first value+W), the first value is 0; or if W2=first value*W, the first value is 1. When Q>1, the first value may be any one of the foregoing examples.

In some embodiments, when Q=1, the terminal does not report the first value, and if W2=(first value+W), the first value is 0 by default; or if W2=first value*W, the first value is 0 by default. When Q>1, the terminal reports the first value. The first value may be any one of the foregoing examples.

Alternatively, when Q=1, W2=f(Q); or when Q>1, W2 satisfies W2=(first value+W), and W satisfies one of the following: W=f(Q). It should be understood that the first value may be any one of the foregoing examples.

Manner 2

The information #3 indicates the value set. In this case, W2 satisfies: W2=(second value+W), or W2=second value*W, where W=f(Q), and f(Q) represents that W is a function of Q. When Q=m, the second value is an $m^{th}$ value in the V values, where m=1, 2, ..., or V.

In other words, when m reference signal resources are used to perform CSI measurement, W2=($m^{th}$ value in the value set+W), or W2=$m^{th}$ value in the value set*W.

For example, W2=(second value+W). It is assumed that V=4, and the value set is {0, 3, 4, 7}, then:

0 indicates that Q=1 reference signal resource is configured, and when the terminal performs CSI measurement on one reference signal resource, 0+W processing units are occupied.
3 indicates that Q=2 reference signal resources are configured, and when the terminal performs CSI measurement on two reference signal resources, 3+W processing units are occupied.
4 indicates that Q=3 reference signal resources are configured, and when the terminal performs CSI measurement on three reference signal resources, 4+W processing units are occupied.
7 indicates that Q=4 reference signal resources are configured, and when the terminal performs CSI measurement on four reference signal resources, 7+W processing units are occupied.

For example, the value set may be any one of the following: {0, 1, 2, 3}, {0, 2, 4, 6}, {0, 1, 3, 4}, 10, 1, 3, 5}, {0, 1, 2, 4}, {0, 1, 2, 2}, {0, 1, 1, 1}, {0, 2, 2, 2}, {0, 3, 3, 3}, {0, 4, 4, 4}, 10, 2, 3, 31, or {0, 2, 3, 4}.
For example, W=f(Q) satisfies one of the following: W=Q, W=Q*Q*Q, W=k*Q, or W=k*Q*Q, where k is an integer.
For example, value sets corresponding to P≤P1 and P>P1 are different, P is a total quantity of transmit ports on the Q reference signal resources, and P and P1 are both positive integers. For example, P1=8/16/24/32/64 or the like.
For example, P1=32. When P≤32, the value set is {0, 1, 1, 1}. When P>32, the value set is {0, 2, 2, 2}.
For example, value sets corresponding to P≤P1, P1<P≤P2, and P>P2 are different, P is a total quantity of transmit ports on the Q reference signal resources, and P, P1, and P2 are all positive integers. For example, P1=8/16/24/32/64, and correspondingly, P2=16/24/32/64/128.
For example, P1=32, and P2=64. When P≤32, the value set is {0, 1, 1, 1}. When 32<P≤64, the value set is {0, 2, 2, 2}. When P>64, the value set is {0, 3, 3, 3}.
Optionally, V is equal to B described in the method 200.

Manner 3

The information #3 indicates the value set. In this case, when Q>1, W2 satisfies: W2=(second value+W), or W2=second value*W, where W=f(Q), and f(Q) represents that W is a function of Q. In addition, when Q=n+1, the second value is an $n^{th}$ value in the V values, where n=1, 2, ..., or V. When Q=1, W2 satisfies: W2=f(Q).
Alternatively, when Q>1, W2 satisfies: W2=(second value+W), or W2=second value*W, and W=f(Q). In addition, when Q=n+1, the second value is an $n^{th}$ value in the V values, where n=1, 2, ..., or V. When Q=1, W2 satisfies: W2=(second value+W), where W=f(Q), and the second value is 0; or W2 satisfies: W2=second value*W, where W=f(Q), and the second value is 1.
In other words, when one reference signal resource is used to perform CSI measurement, W2=W. When n+1 reference signal resources are used to perform CSI measurement, W2=($n^{th}$ value in the value set+W), or W2=$n^{th}$ value in the value set*W.
For example, W2 satisfies: W2=(second value+W). It is assumed that V=3, and the value set is {3, 4, 7}, then: Q=1 reference signal resource is configured, and when the terminal performs CSI measurement on one reference signal resource, 0+W processing units are occupied.
3 indicates that Q=2 reference signal resources are configured, and when the terminal performs CSI measurement on two reference signal resources, 3+W processing units are occupied.
4 indicates that Q=3 reference signal resources are configured, and when the terminal performs CSI measurement on three reference signal resources, 4+W processing units are occupied.
7 indicates that Q=4 reference signal resources are configured, and when the terminal performs CSI measurement on four reference signal resources, 7+W processing units are occupied.
For example, W=f(Q) satisfies one of the following: W=Q, W=Q*Q*Q, W=k1*Q, or W=k1*Q*Q, where k1 is an integer.
For example, the value set may be any one of the following: {1, 2, 3}, {2, 4, 6}, {1, 3, 4}, {1, 3, 5}, {1, 2, 4}, {1, 2, 2}, {1, 1, {1, {2, 2, 2}, {2, 3, 3}, {3, 3, 3}, {4, 4, 4}, or {2, 3, 4}.
For example, value sets corresponding to P≤P1 and P>P1 are different, P is a total quantity of transmit ports on the Q reference signal resources, and P and P1 are both positive integers. For example, P1=8/16/24/32/64 or the like.
For example, P 1=32. When P≤32, the value set is {1, 1, 1}. When P>32, the value set is {2, 2, 2}.
For example, value sets corresponding to P≤P1, P1<P≤P2, and P>P2 are different, P is a total quantity of transmit ports on the Q reference signal resources, and P, P1, and P2 are all positive integers. For example, P1=8/16/24/32/64, and correspondingly, P2=16/24/32/64/128.
For example, P1=32, and P2=64. When P≤32, the value set is {1, 1, 1}. When 32<P≤64, the value set is {2, 2, 2}. When P>64, the value set is {3, 3, 3}.
Optionally, V is equal to a difference between B and 1 described in the method 200, that is, V=B-1.

Manner 4

The information #3 indicates a quantity NUM_i of processing units that corresponds to using i reference signal resources to perform CSI measurement, where i=1, 2, ..., or S, or i=2, ..., or S. In this case, W2=NUM_Q.

Optionally, the information #3 further indicates B.

For example, when i=2, ..., or S, if Q=1, W2=1.

For example, NUM_i is one of {i, i+1, ..., Si}, or NUM_i is one of {1, 2, 3, ..., Si}, where Si≥i.

For example, when a value of i may be 1, a quantity NUM_1 of processing units that corresponds to CSI measurement performed by the terminal on one reference signal resource belongs to {1, 2, ..., S1}. For example, S1 belongs to {2, 3, 4, 5, 6, 7, 8} or S1 belongs to {2, 3, 4}. Optionally, when i cannot be 1, a quantity NUM_1 of processing units that corresponds to CSI measurement performed by the terminal on one reference signal resource may be agreed on or configured in advance. For example, NUM_1=1 or NUM_1 belongs to {1, 2, ...}. A quantity NUM_2 of processing units that corresponds to CSI measurement performed by the terminal on two reference signal resources belongs to {2, 3, ..., S2} or {1, 2, ..., S2}. For example, S2 belongs to {3, 4, 5, 6, 7, 8}, {2, 3, 4, 5, 6, 7, 8}, {3, 4}, or {2, 3, 4}. A quantity NUM_3 of processing units that corresponds to CSI measurement performed by the terminal on three reference signal resources belongs to {3, 4, ..., S3} or {1, 2, ..., S3}. For example, S3 belongs to {4, 5, 6, 7, 8}, {3, 4, 5, 6, 7, 8}, {4}, or {3, 4}. By analogy, a quantity NUM_S of processing units that corresponds to CSI measurement performed by the terminal on S reference signal resources belongs to {S, S+1, ..., SS} or {1, 2, ..., SS}. For example, SS belongs to {S+1, S+2, ..., 8}, {S, S+1, S+2, ..., 8}, {S+1, S+2, ..., 4}, or {S, S+1, S+2, ..., 4}.

For example, a total quantity of transmit ports on the i reference signal resources is R. When R≤R1, NUM_i is one of {i, i+1, ..., Si}, or NUM_i is one of {1, 2, 3, ..., Si}, where S1≥i. When R>R1, NUM_i is one of {i, i+1, ..., Si'}, or NUM_i is one of {1, 2, 3, ..., Si'}, where N1'≥S1, or NUM_i is a sum of H and one of {i, i+1, ..., Si}, or NUM_i is a sum of H and one of {1, 2, 3, ..., Si}, where H is a positive integer.

For example, R1=8/16/24/32/64.

For example, it is assumed that R1=32. When i=1, 2, ..., or S:

when R≤32, NUM_1 belongs to {1, 2, ..., S1}; or when R>32, NUM_1 belongs to {1, 2, ..., S1'}, or NUM_1=one of {1, 2, ..., S1}+H, or NUM_1=one of {1, 2, ..., S1}+H, where optionally, S1 belongs to {2, 3, 4, 5, 6, 7, 8} or {2, 3, 4};

when R≤32, NUM_2 belongs to {2, 3, ..., S2} or {1, 2, ..., S2}; or when R>32, NUM_2 belongs to {2, 3, ..., S1'}, or NUM_2 belongs to {1, 2, 3, ..., S2'}, or NUM_2=one of {2, 3, ..., S2}+H, or NUM_2=one of {1, 2, ..., S2}+H, where optionally, S2 belongs to {3, 4, 5, 6, 7, 8}, {2, 3, 4, 5, 6, 7, 8}, {3, 4}, or {2, 3, 4};

when R≤32, NUM_3 belongs to {3, 4, ..., S3} or {1, 2, ..., S3}; or when R>32, NUM_3 belongs to {3, 4, ..., S1'}, or NUM_3 belongs to {1, 2, 3, ..., S3'}, or NUM_3=one of {3, 4, ..., S3}+H, or NUM_3=one of {1, 2, ..., S3}+H, where optionally, S3 belongs to {4, 5, 6, 7, 8}, {3, 4, 5, 6, 7, 8}, {4}, or {3, 4}; and

by analogy, when R≤32, NUM_S belongs to {S, S+1, ..., SS} or {1, 2, ..., SS}; or when R>32, NUM_S belongs to {S, S+1, ..., SS'}, or NUM_S belongs to {1, 2, 3, ..., SS'}, or NUM_S=one of {S, S+1, ..., SS}+H, or NUM_S=one of {1, 2, ..., SS}+H, where optionally, SS belongs to {S+1, S+2, ..., 8}, {S, S+1, S+2, ..., 8}, {S+1, S+2, ..., 4}, or {S, S+1, S+2, ..., 4}.

For i=2, ..., or S, a quantity NUM_1 of processing units that corresponds to CSI measurement performed by the terminal on one reference signal resource, for example, NUM_1 or NUM_1 belongs to {1, 2, ...}, may be agreed on or configured in advance. When i=2, 3, ..., or S, for details, refer to a case in which i is 2, 3, ..., or S when i=1, 2, ..., or S. Details are not described herein again.

Optionally, H is one of {0, 1, 2, ..., S}.

In the foregoing plurality of implementations, the terminal may select a corresponding value from a plurality of values for reporting based on the capability of the terminal, to flexibly report the capability of the terminal.

In some embodiments, the method further includes:

S440: The terminal determines W2 based on the information #4.

For details about this step, refer to the descriptions of S430.

Optionally, the method may further include the following steps.

S450: The network device sends information #5 to the terminal, and correspondingly, the terminal receives the information #5.

The information #5 indicates Nl groups of spatial domain base vectors, and Nl is a positive integer.

Before the network device sends the information #5, the network device may first determine whether a total quantity W3 of processing units corresponding to CSI measurement corresponding to the Nl groups of spatial domain base vectors exceeds a total quantity of processing units used by the terminal to perform CSI measurement. If the total quantity W3 does not exceed the total quantity of processing units used by the terminal to perform CSI measurement, the network device may configure the Nl groups of spatial domain base vectors for the terminal.

W3=W2*Nl. Alternatively, W3=W2+k2*(Nl-1), where k2 is an integer.

For example, k2=1/2/3/4.

It should be understood that N*l* is also an assumed quantity of groups of CSI measurements configured by the network device, and correspondingly, also a quantity of groups of CSI measurements performed by the terminal.

S460: The terminal determines W3 based on the information #5.

After determining W3, the terminal may call W3 processing units to perform N*l* groups of CSI measurements.

For example, the information #4 and the information #5 may be sent by using same signaling, or may be sent by using different signaling.

To sum up, according to the communication method provided in this application, the network device may determine, based on the information reported by the terminal, the quantity of processing units (for example, CPUs) corresponding to one CSI measurement hypothesis. In combination with a total quantity of processing units used by the terminal to perform CSI measurement, the network device can configure, for the terminal, the reference signal resources that match a capability of the terminal, to perform CSI measurement.

In the method 400, the terminal needs to report related information of a processing unit related to CSI measurement. In some embodiments, when Q reference signal resources are used to perform CSI measurement, a quantity of corresponding processing units is Q, Q*Q*Q, k3*Q, or k3*Q*Q, where k3 is an integer. The formula herein may be specified in a protocol. In this way, the terminal does not need to report related information of a processing unit related to CSI measurement, and the network device can learn of a processing capability of the terminal, to configure an appropriates quantity of reference signal resources for the terminal.

It should be understood that the method 200 and the method 400 may be combined. For example, when the method 200 and the method 400 may be combined, the information #1 and the information #3 may be same signaling, or may be different signaling. After obtaining the content in the information #1 and the content in the information #3, the network device may configure a reference signal resource for the terminal, for example, configure Q reference signal resources.

The foregoing describes the method embodiments provided in this application, and the following describes apparatus embodiments provided in this application. It should be understood that descriptions of apparatus embodiments correspond to the descriptions of the method embodiments. Therefore, for content that is not described in detail, refer to the foregoing method embodiments. For brevity, details are not described herein again.

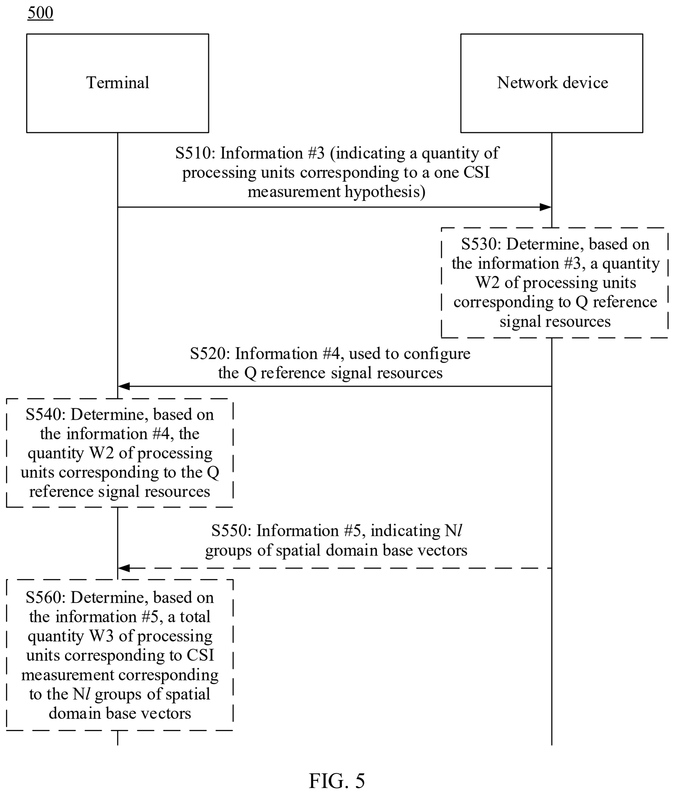

FIG. 5 is a schematic flowchart of a communication method according to this application. The method 500 may include S510 to S520. The following describes the steps.

S510: The terminal sends information #3. Correspondingly, the network device receives the information #3.

The information #3 indicates or includes a first value, a value set, or a quantity NUM_i of processing units that corresponds to using i reference signal resources to perform CSI measurement, where i=1, 2, ..., or S, or i=2, ..., or S, and S and NUM_i are both integers. The first value and the value set are both non-negative numbers. The value set includes V values, V is a positive integer, and the V values are all non-negative numbers. The first value, the value set, and NUM_i all indicate a quantity of processing units corresponding to the one CSI measurement hypothesis. In a possible implementation, the information #3 further indicates a third value or a second value set, the third value is a non-negative number, the second value set includes V values, V is a positive integer, the V values are all non-negative numbers, and the third value and the value set both indicate a quantity of processing units corresponding to the one CSI measurement hypothesis.

Specifically, the quantity of processing units required/occupied in the one CSI measurement hypothesis (or one CSI measurement) may be determined based on the first value or the value set. NUM_i represents a quantity of processing units required/occupied when the i reference signal resources are used to perform CSI measurement.

It should be understood that the processing unit is a software and/or hardware module configured to perform CSI measurement. For example, the processing unit may be a CPU.

For example, the first value is an offset or a slope. Correspondingly, the value set includes a plurality of offsets or a plurality of slopes.

S520: The network device sends information #4 to the terminal based on the information #3. The information #4 is used to configure Q reference signal resources associated with the one CSI measurement hypothesis, and Q is a positive integer.

For example, Q is less than or equal to B, that is, Q is less than or equal to the maximum total quantity of resources associated with the one CSI measurement hypothesis.

According to the communication method provided in this application, the network device may determine, based on the information reported by the terminal, the quantity of processing units (for example, CPUs) corresponding to one CSI measurement hypothesis. In combination with a total quantity of processing units used by the terminal to perform CSI measurement, the network device can configure, for the terminal, the reference signal resources that match a capability of the terminal, to perform CSI measurement.

In some embodiments, before S520, the method may further include the following step:

S530: The network device determines, based on the information #3, a quantity W2 of processing units corresponding to the Q reference signal resources, where W2 is a positive integer.

Specifically, before configuring the Q reference signal resources for the terminal, the network device first determines whether the quantity W2 of processing units corresponding to the Q reference signal resources exceeds a total quantity of processing units used by the terminal to perform CSI measurement. If the quantity W2 does not exceed the total quantity, the network device may configure the Q reference signal resources for the terminal.

The following specifically describes how to determine W2 in nine different implementations of the information #3.

Manner 1

The information #3 indicates the first value. In this case, W2 satisfies: W2=(first value+W), or W2=first value*W, or W2=first value*W+CI, or $W2=\lfloor \text{first value} * W \rfloor + C1$, or $W2=\lceil \text{first value} * W \rceil + C1$, or $W2=\lfloor \text{first value} * W + C1 \rfloor$, or $W2=\lceil \text{first value} * W + C1 \rceil$, where W=f(Q), f(Q) represents that W is a function of Q, $\lfloor \rfloor$ represents rounding down, and $\lceil \rceil$ represents rounding up. In a possible implementation, C1 is a non-negative number. In another possible implementation, C1 is a $Q^{th}$ element in a third value set. In another possible implementation, C1 is a $(Q-1)^{th}$ element in a third value set.

For example, the third value set is {0, 1, 2, 3} or {1, 2, 3}.

For example, W=f(Q) satisfies one of the following: W=Q+C2, W=Q*Q*Q+C2, W=k1*Q+C2, or W=k1*Q*Q+C2, where k1 is a non-negative number, and C2 is a non-negative number.

For example, C1=0, 1, or 2.

For example, the first value belongs to {0, 1, 2, ...}, or the first value belongs to {0, 2, 4, ...}, or the first value belongs to {1, 3, 5, ...}. Optionally, a maximum value of the first value is 4.

For example, the first value belongs to {1, 1.5, 2}, or the first value belongs to {1, 1.5}, or the first value belongs to {1, 2}, or the first value belongs to {0, 1, 1.5, 2}, or the first value belongs to {0, 1, 1.5}, or the first value belongs to {0, 1, 2}, or the first value belongs to {1, 1.5, 2, 2.5}, or the first value belongs to {1, 1.5, 2, 2.5, 3}, or the first value belongs to {1, 1.5, 2, 2.5, 3, 3.5}, or the first value belongs to {1, 1.5, 2, 2.5, 3, 3.5, 4}, or the first value belongs to {0, 1, 1.5, 2, 2.5}, or the first value belongs to {0, 1, 1.5, 2, 2.5, 3}, or the first value belongs to {0, 1, 1.5, 2, 2.5, 3, 3.5}, or the first value belongs to {0, 1, 1.5, 2, 2.5, 3, 3.5, 4}.

For example, when W2=(first value+W), the first value belongs to {0, -1, -2, ...}, or the first value belongs to {0, -2, -4, ...}, or the first value belongs to {-1, -3, -5, ...}. Optionally, a minimum value of the first value is -4.

For example, first values corresponding to P≤P1 and P>P1 are different, P is a total quantity of transmit ports on the Q reference signal resources, and P and P1 are both positive integers. For example, P1=8/16/24/32/64 or the like.

For example, P1=32. When P≤32, the first value is 1. When P>32, the first value is 2.

For example, first values corresponding to P≤P1, P1<P≤P2, and P>P2 are different, P is a total quantity of transmit ports on the Q reference signal resources, and P, P1, and P2 are all positive integers. For example, P1=8/16/24/32/64, and correspondingly, P2=16/24/32/64/128.

For example, P1=32, and P2=64. When P≤32, the first value is 1. When 32<P≤64, the first value is 2. When P>64, the first value is 3.

In some embodiments, when Q=1, if W2=(first value+W), the first value is 0; if W2=first value*W, the first value is 1; or if W2=first value*W+CI, or $W2=\lfloor \text{first value} * W \rfloor + C1$, or $W2=\lceil \text{first value} * W \rceil + C1$, or $W2=\lfloor \text{first value} * W + C1 \rfloor$, or $W2=\lceil \text{first value} * W + C1 \rceil$, the first value is 0. When Q>1, the first value may be any one of the foregoing examples. In a possible implementation, C1 is a non-negative number. In another possible implementation, the third value is used to determine C1, and the third value is equal to C1. In another possible implementation, the third value is equal to C1. In another possible implementation, C1 is determined by the third value, and the third value is equal to C1.

In some embodiments, when Q=1, the terminal does not report the first value, and the first value is 0 or 1 by default. If W2=(first value+W), the first value is 0 by default; if W2=first value*W, the first value is 1 by default; or if $W2=\lfloor \text{first value} * W \rfloor + C1$, or $W2=\lceil \text{first value} * W \rceil + C1$, or $W2=\lfloor \text{first value} * W + C1 \rfloor$, or $W2=\lceil \text{first value} * W + C1 \rceil$, the first value is 0 by default. When Q>1, the terminal reports the first value, where the first value may be any one of the foregoing examples.

Alternatively, when Q=1, W2=f(Q); or when Q>1, W2 satisfies W2=(first value+W), and W satisfies one of the following: W=f(Q). It should be understood that the first value may be any one of the foregoing examples.

Manner 2

The information #3 indicates the value set. In this case, W2 satisfies: W2=(second value+W), or W2=second value*W, or W2=second value*W+C1, or $W2= \lfloor second\ value * W \rfloor + C1$, or

$W2= \lceil second\ value * W \rceil + C1$, or $W2= \lfloor second\ value * W + C1 \rfloor$, or

$W2= \lceil second\ value * W + C1 \rceil$, where W=f(Q), and f(Q) represents that W is a function of Q. When Q=m, the second value is an $m^{th}$ value in the V values, where m=1, 2, ..., or V. In a possible implementation, C1 is a non-negative number. In another possible implementation, C1 is a non-negative number. In another possible implementation, the third value is used to determine C1, and the third value is equal to C1. In another possible implementation, the third value is equal to C1. In another possible implementation, C1 is determined by the third value, and the third value is equal to C1. In another possible implementation, C1 is an $m^{th}$ value in the V values in the second value set, where m=1, 2, ..., or V. In another possible implementation, C1 is a $Q^{th}$ element in a third value set. In another possible implementation, C1 is a $(Q-1)^{th}$ element in a third value set.

For example, the third value set is {0, 1, 2, 3} or {1, 2, 3}.

For example, C1=0, 1, or 2.

For example, W=f(Q) satisfies one of the following: W=Q+C2, W=Q*Q*Q+C2, W=k1*Q+C2, or W=k1*Q*Q+C2, where k1 is a non-negative number, and C2 is a non-negative number.

In other words, when m reference signal resources are used to perform CSI measurement, W2=($m^{th}$ value in the value set+W), or W2=$m^{th}$ value in the value set*W, or W2=$m^{th}$ value in the value set*W, or W2=$m^{th}$ value in the value set*W+C1, or $W2= \lfloor m^{th}\ value\ in\ the\ value\ set * W \rfloor + C1$, or

$W2= \lceil m^{th}\ value\ in\ the\ value\ set * W \rceil + C1$, or

$W2= \lfloor m^{th}\ value\ in\ the\ value\ set * W + C1 \rfloor$, or

$W2= \lceil m^{th}\ value\ in\ the\ value\ set * W + C1 \rceil$.

For example, W2=(second value+W). It is assumed that V=4, and the value set is {0, 3, 4, 7}, then:

0 indicates that Q=1 reference signal resource is configured, and when the terminal performs CSI measurement on one reference signal resource, 0+W processing units are occupied.
3 indicates that Q=2 reference signal resources are configured, and when the terminal performs CSI measurement on two reference signal resources, 3+W processing units are occupied.
4 indicates that Q=3 reference signal resources are configured, and when the terminal performs CSI measurement on three reference signal resources, 4+W processing units are occupied.
7 indicates that Q=4 reference signal resources are configured, and when the terminal performs CSI measurement on four reference signal resources, 7+W processing units are occupied.

For example, W2=second value*W+C1. It is assumed that V=4, and the value set is {0, 3, 4, 7}, then:

0 indicates that Q=1 reference signal resource is configured, and when the terminal performs CSI measurement on one reference signal resource, 0*W+C1 processing units are occupied.
3 indicates that Q=2 reference signal resources are configured, and when the terminal performs CSI measurement on two reference signal resources, 3*W+C1 processing units are occupied.
4 indicates that Q=3 reference signal resources are configured, and when the terminal performs CSI measurement on three reference signal resources, 4*W+C1 processing units are occupied.
7 indicates that Q=4 reference signal resources are configured, and when the terminal performs CSI measurement on four reference signal resources, 7*W+C1 processing units are occupied.

For example, $W2= \lceil second\ value * W \rceil + C1$. It is assumed that V=4, and the value set is {0, 3, 4, 7}, then:

0 indicates that Q=1 reference signal resource is configured, and when the terminal performs CSI measurement on one reference signal resource, $\lceil 0 * W \rceil + C1$ processing units are occupied.
3 indicates that Q=2 reference signal resources are configured, and when the terminal performs CSI measurement on two reference signal resources, $\lceil 3 * W \rceil + C1$ processing units are occupied.
4 indicates that Q=3 reference signal resources are configured, and when the terminal performs CSI measurement on three reference signal resources, $\lceil 4 * W \rceil + C1$ processing units are occupied.

7 indicates that Q=4 reference signal resources are configured, and when the terminal performs CSI measurement on four reference signal resources, $\lceil 7 * W \rceil + C1$ processing units are occupied.

For example, the value set may be any one of the following: {0, 1, 2, 3}, {0, 2, 4, 6}, {0, 1, 3, 4}, {0, 1, 3, 5}, {0, 1, 2, 4}, {0, 1, 2, 2}, {0, 1, 1, 1}, {0, 2, 2, 2}, {0, 3, 3, 3}, {0, 4, 4, 4}, {0, 2, 3, 3}, or {0, 2, 3, 4}.

For example, W=f(Q) satisfies one of the following: W=Q+C2, W=Q*Q*Q+C2, W=k*Q+C2, or W=k*Q*Q+C2, where k is a non-negative number, and C2 is a non-negative number.

For example, value sets corresponding to P≤P1 and P>P1 are different, P is a total quantity of transmit ports on the Q reference signal resources, and P and P1 are both positive integers. For example, P1=8/16/24/32/64 or the like.

For example, P1=32. When P≤32, the value set is {0, 1, 1, 1}. When P>32, the value set is {0, 2, 2, 2}.

For example, value sets corresponding to P≤P1, P1<P≤P2, and P>P2 are different, P is a total quantity of transmit ports on the Q reference signal resources, and P, P1, and P2 are all positive integers. For example, P1=8/16/24/32/64, and correspondingly, P2=16/24/32/64/128.

For example, P1=32, and P2=64. When P≤32, the value set is {0, 1, 1, 1}. When 32<P≤64, the value set is {0, 2, 2, 2}. When P>64, the value set is {0, 3, 3, 3}.

Optionally, V is equal to B described in the method 200.

Manner 3

The information #3 indicates the value set. In this case, when Q>1, W2 satisfies: W2=(second value+W), or W2=second value*W, or W2=second value*W+C1, or $W2 = \lfloor \text{second value} * W \rfloor + C1$, or $W2 = \lceil \text{second value} * W \rceil + C1$, or $W2 = \lfloor \text{second value} * W + C1 \rfloor$, or $W2 = \lceil \text{second value} * W + C1 \rceil$, where W=f(Q), and f(Q) represents that W is a function of Q. In addition, when Q=n+1, the second value is an $n^{th}$ value in the V values, where n=1, 2, ..., or V. When Q=1, W2 satisfies: W2=f(Q). In a possible implementation, C1 is a non-negative number. In another possible implementation, C1 is a $Q^{th}$ element in a third value set. In another possible implementation, C1 is a $(Q-1)^{th}$ element in a third value set.

For example, the third value set is {0, 1, 2, 3} or {1, 2, 3}.

For example, C1=0, 1, or 2.

For example, W=f(Q) satisfies one of the following: W=Q+C2, W=Q*Q*Q+C2, W=k1*Q+C2, or W=k1*Q*Q+C2, where k1 is a non-negative number, and C2 is a non-negative number.

Alternatively, when Q>1, W2 satisfies: W2=(second value+W), or W2=second value*W, or W2=second value*W+C1, or $W2 = \lfloor \text{second value} * W \rfloor + C1$, or $W2 = \lceil \text{second value} * W \rceil + C1$, or $W2 = \lfloor \text{second value} * W + C1 \rfloor$, or $W2 = \lceil \text{second value} * W + C1 \rceil$, where W=f(Q). In addition, when Q=n+1, the second value is an $n^{th}$ value in the V values, where n=1, 2, ..., or V. When Q=1, W2 satisfies: W2=(second value+W), where W=f(Q), and the second value is 0; or W2 satisfies: W2=second value*W, where W=f(Q), and the second value is 1; or W2 satisfies: W2=second value*W+C1, or $W2 = \lfloor \text{second value} * W \rfloor + C1$, or $W2 = \lceil \text{second value} * W \rceil + C1$, or $W2 = \lfloor \text{second value} * W + C1 \rfloor$, or $W2 = \lceil \text{second value} * W + C1 \rceil$, and the second value is 0.

In other words, when one reference signal resource is used to perform CSI measurement, W2=W; or when n+1 reference signal resources are used to perform CSI measurement, W2=($n^{th}$ value in the value set+W), or W2=$n^{th}$ value in the value set*W, or W2=$n^{th}$ value in the value set*W+C1, or $W2 = \lfloor n^{th} \text{ value in the value set} * W \rfloor + C1$, or $W2 = \lceil n^{th} \text{ value in the value set} * W \rceil + C1$, or $W2 = \lfloor n^{th} \text{ value in the value set} * W + C1 \rfloor$, or $W2 = \lceil n^{th} \text{ value in the value set} * W + C1 \rceil$.

For example, W2 satisfies: W2=(second value+W). It is assumed that V=3, and the value set is {3, 4, 7}, then:

Q=1 reference signal resource is configured, and when the terminal performs CSI measurement on one reference signal resource, 0+W processing units are occupied.

3 indicates that Q=2 reference signal resources are configured, and when the terminal performs CSI measurement on two reference signal resources, 3+W processing units are occupied.

4 indicates that Q=3 reference signal resources are configured, and when the terminal performs CSI measurement on three reference signal resources, 4+W processing units are occupied.

7 indicates that Q=4 reference signal resources are configured, and when the terminal performs CSI measurement on four reference signal resources, 7+W processing units are occupied.

For example, W2=second value*W+C1. It is assumed that V=4, and the value set is {3, 4, 7}, then:
Q=1 reference signal resource is configured, and when the terminal performs CSI measurement on one reference signal resource, 0*W+C1 processing units are occupied.

3 indicates that Q=2 reference signal resources are configured, and when the terminal performs CSI measurement on two reference signal resources, 3*W+C1 processing units are occupied.

4 indicates that Q=3 reference signal resources are configured, and when the terminal performs CSI measurement on three reference signal resources, 4*W+C1 processing units are occupied.

7 indicates that Q=4 reference signal resources are configured, and when the terminal performs CSI measurement on four reference signal resources, 7*W+C1 processing units are occupied.

For example, $W2 = \lceil \text{second value} * W \rceil + C1$. It is assumed that V=4, and the value set is {3, 4, 7}, then:
Q=1 reference signal resource is configured, and when the terminal performs CSI measurement on one reference signal resource, $\lceil 0 * W \rceil + C1$ processing units are occupied.

3 indicates that Q=2 reference signal resources are configured, and when the terminal performs CSI measurement on two reference signal resources, $\lceil 3 * W \rceil + C1$ processing units are occupied.

4 indicates that Q=3 reference signal resources are configured, and when the terminal performs CSI measurement on three reference signal resources, $\lceil 4 * W \rceil + C1$ processing units are occupied.

7 indicates that Q=4 reference signal resources are configured, and when the terminal performs CSI measurement on four reference signal resources, $\lceil 7 * W \rceil + C1$ processing units are occupied.

For example, W=f(Q) satisfies one of the following: W=Q+C2, W=Q*Q*Q+C2, W=k1*Q+C2, or W=k1*Q*Q+C2, where k1 is a non-negative number, and C2 is a non-negative number. Optionally, C2=0, 1, or 2.

For example, the value set may be any one of the following: {1, 2, 3}, {2, 4, 6}, {1, 3, 4}, {1, 3, 5}, {1, 2, 4}, {1, 2, 2}, {1, 1, {1, {2, 2, 2}, {2, 3, 3}, {3, 3, 3}, {4, 4, 4}, or {2, 3, 4}.

For example, value sets corresponding to P≤P1 and P>P1 are different, P is a total quantity of transmit ports on the Q reference signal resources, and P and P1 are both positive integers. For example, P1=8/16/24/32/64 or the like.

For example, P1=32. When P≤32, the value set is {1, 1, 1}. When P>32, the value set is {2, 2, 2}.

For example, value sets corresponding to P≤P1, P1<P≤P2, and P>P2 are different, P is a total quantity of transmit ports on the Q reference signal resources, and P, P1, and P2 are all positive integers. For example, PI=8/16/24/32/64, and correspondingly, P2=16/24/32/64/128.

For example, P1=32, and P2=64. When P≤32, the value set is {1, 1, 1}. When 32<P≤64, the value set is {2, 2, 2}. When P>64, the value set is {3, 3, 3}.

Optionally, V is equal to a difference between B and 1 described in the method 200, that is, V=B-1.

Manner 4

The information #3 indicates a quantity NUM_i of processing units that corresponds to using i reference signal resources to perform CSI measurement, where i=1, 2, ..., or S, or i=2, ..., or S. In this case, W2=NUM_Q.

Optionally, the information #3 further indicates B.

For example, when i=2, ..., or S, if Q=1, W2=1.

For example, NUM_i is one of {i, i+1, ..., Si}, or NUM_i is one of {1, 2, 3, ..., Si}, where Si≥i.

For example, when a value of i may be 1, a quantity NUM_1 of processing units that corresponds to CSI measurement performed by the terminal on one reference signal resource belongs to {1, 2, ..., S1}. For example, S1 belongs to {2, 3, 4, 5, 6, 7, 8} or S1 belongs to {2, 3, 4}. Optionally, when i cannot be 1, a quantity NUM_1 of processing units that corresponds to CSI measurement performed by the terminal on one reference signal resource may be agreed on or configured in advance. For example, NUM_1=1 or NUM_1 belongs to {1, 2, ...}. A quantity NUM_2 of processing units that corresponds to CSI measurement performed by the terminal on two reference signal resources belongs to {2, 3, ..., S2} or {1, 2, ..., S2}. For example, S2 belongs to {3, 4, 5, 6, 7, 8}, {2, 3, 4, 5, 6, 7, 8}, {3, 4}, or {2, 3, 4}. A quantity NUM_3 of processing units that corresponds to CSI measurement performed by the terminal on three reference signal resources belongs to {3, 4, ..., S3} or {1, 2, ..., S3}. For example, S3 belongs to {4, 5, 6, 7, 8}, {3, 4, 5, 6, 7, 8}, {4}, or {3, 4}. By analogy, a quantity NUM_S of processing units that corresponds to CSI measurement performed by the terminal on S reference signal resources belongs to {S, S+1, ..., SS} or {1, 2, ..., SS}. For example, SS belongs to {S+1, S+2, ..., 8}, {S, S+1, S+2, ..., 8}, {S+1, S+2, ..., 4}, or {S, S+1, S+2, ..., 4}.

For example, a total quantity of transmit ports on the i reference signal resources is R. When R≤R1, NUM_i is one of {i, i+1, ..., Si}, or NUM_i is one of {1, 2, 3, ..., Si}, where S1≥i. When R>R1, NUM_i is one of {i, i+1, ..., Si'}, or NUM_i is one of {1, 2, 3, ..., Si'}, where N1'≥S1, or NUM_i is a sum of H and one of {i, i+1, ..., Si}, or NUM_i is a sum of H and one of {1, 2, 3, ..., Si}, where H is a positive integer.

For example, R1=8/16/24/32/64.

For example, it is assumed that R1=32. When i=1, 2, ..., or S:

when R≤32, NUM_1 belongs to {1, 2, ..., S1}; or when R>32, NUM_1 belongs to {1, 2, ..., S1'}, or NUM_1=one of {1, 2, ..., S1}+H, or NUM_1=one of {1, 2, ..., S1}+H, where optionally, S1 belongs to {2, 3, 4, 5, 6, 7, 8} or {2, 3, 4};

when R≤32, NUM_2 belongs to {2, 3, ..., S2} or {1, 2, ..., S2}; or when R>32, NUM_2 belongs to {2, 3, ..., S1'}, or NUM_2 belongs to {1, 2, 3, ..., S2'}, or NUM_2=one of {2, 3, ..., S2}+H, or NUM_2=one of {1, 2, ..., S2}+H, where optionally, S2 belongs to {3, 4, 5, 6, 7, 8}, {2, 3, 4, 5, 6, 7, 8}, {3, 4}, or {2, 3, 4};

when R≤32, NUM_3 belongs to {3, 4, ..., S3} or {1, 2, ..., S3}; or when R>32, NUM_3 belongs to {3, 4, ..., S1'}, or NUM_3 belongs to {1, 2, 3, ..., S3'}, or NUM_3=one of {3, 4, ..., S3}+H, or NUM_3=one of {1, 2, ..., S3}+H, where optionally, S3 belongs to {4, 5, 6, 7, 8}, {3, 4, 5, 6, 7, 8}, {4}, or {3, 4}; and

by analogy, when R≤32, NUM_S belongs to {S, S+1, ..., SS} or {1, 2, ..., SS}; or when R>32, NUM_S belongs to {S, S+1, ..., SS'}, or NUM_S belongs to {1, 2, 3, ..., SS'}, or NUM_S=one of {S, S+1, ..., SS}+H, or NUM_S=one of {1, 2, ..., SS}+H, where optionally, SS belongs to {S+1, S+2, ..., 8}, {S, S+1, S+2, ..., 8}, {S+1, S+2, ..., 4}, or {S, S+1, S+2, ..., 4}.

For i=2, ..., or S, a quantity NUM_1 of processing units that corresponds to CSI measurement performed by the terminal on one reference signal resource, for example, NUM_1 or NUM_1 belongs to {1, 2, ...}, may be agreed on or configured in advance. When i=2, 3, ..., or S, for details, refer to a case in which i is 2, 3, ..., or S when i=1, 2, ..., or S. Details are not described herein again.

Optionally, H is one of {0, 1, 2, ..., S}.

Manner 5

The information #3 indicates the first value and the third value. In this case, W2 satisfies: W2=(first value+W), or W2=first value*W, or W2=first value*W+third value, or $W2=\lfloor \text{first value} * W \rfloor + \text{third value}$, or

$W2=\lceil \text{first value} * W \rceil + \text{third value}$, or $W2=\lfloor \text{first value} * W + \text{third value} \rfloor$, or

$W2=\lceil \text{first value} * W + \text{third value} \rceil$, where W=f(Q), f(Q) represents that W is a function of Q, ⌊ ⌋ represents rounding down, and ⌈ ⌉ represents rounding up.

For example, W=f(Q) satisfies one of the following: W=Q+C2, W=Q*Q*Q+C2, W=k1*Q+C2, or W=k1*Q*Q+C2, where k1 is a non-negative number, and C2 is a non-negative number.

For example, the first value belongs to {0, 1, 2, ...}, or the first value belongs to {0, 2, 4, ...}, or the first value belongs to {1, 3, 5, ...}. Optionally, a maximum value of the first value is 4.

For example, the first value belongs to {1, 1.5, 2}, or the first value belongs to {1, 1.5}, or the first value belongs to {1, 2}, or the first value belongs to {0, 1, 1.5, 2}, or the first value belongs to {0, 1, 1.5}, or the first value belongs to {0, 1, 2}, or the first value belongs to {1, 1.5, 2, 2.5}, or the first value belongs to {1, 1.5, 2, 2.5, 3}, or the first value belongs to {1, 1.5, 2, 2.5, 3, 3.5}, or the first value belongs to {1, 1.5, 2, 2.5, 3, 3.5, 4}, or the first value belongs to {0, 1, 1.5, 2, 2.5}, or the first value belongs to {0, 1, 1.5, 2, 2.5, 3}, or the first value belongs to {0, 1, 1.5, 2, 2.5, 3, 3.5}, or the first value belongs to {0, 1, 1.5, 2, 2.5, 3, 3.5, 4}.

For example, the third value belongs to {1, 1.5, 2}, or the third value belongs to {1, 1.5}, or the third value belongs to {1, 2}, or the third value belongs to {0, 1, 1.5, 2}, or the third value belongs to {0, 1, 1.5}, or the third value belongs to {0, 1, 2}, or the third value belongs to {1, 1.5, 2, 2.5}, or the third value belongs to {1, 1.5, 2, 2.5, 3}, or the third value belongs to {1, 1.5, 2, 2.5, 3, 3.5}, or the third value belongs to {1, 1.5, 2, 2.5, 3, 3.5, 4}, or the third value belongs to {0, 1, 1.5, 2, 2.5}, or the third value belongs to {0, 1, 1.5, 2, 2.5, 3}, or the third value belongs to {0, 1, 1.5, 2, 2.5, 3, 3.5}, or the third value belongs to {0, 1, 1.5, 2, 2.5, 3, 3.5, 4}.

For example, the third value is equal to 0, 1, or 2.

For example, when W2=(first value+W), the first value belongs to {0, -1, -2, ...}, or the first value belongs to {0, -2, -4, ...}, or the first value belongs to {-1, -3, -5, ...}. Optionally, a minimum value of the first value is -4.

For example, first values corresponding to P≤P1 and P>P1 are different, P is a total quantity of transmit ports on the Q reference signal resources, and P and P1 are both positive integers. For example, P1=8/16/24/32/64 or the like.

For example, P1=32. When P≤32, the first value is 1. When P>32, the first value is 2.

For example, first values corresponding to P≤P1, P1<P≤P2, and P>P2 are different, P is a total quantity of transmit ports on the Q reference signal resources, and P, P1, and P2 are all positive integers. For example, P1=8/16/24/32/64, and correspondingly, P2=16/24/32/64/128.

For example, P1=32, and P2=64. When P≤32, the first value is 1. When 32<P≤64, the first value is 2. When P>64, the first value is 3.

In some embodiments, when Q=1, if W2=(first value+W), the first value is 0; if W2=first value*W, the first value is 1; or if W2=first value*W+third value, or $W2 = \lfloor \text{first value} * W \rfloor + \text{third value}$, or $W2 = \lceil \text{first value} * W \rceil + \text{third value}$, or $W2 = \lfloor \text{first value} * W + \text{third value} \rfloor$, or $W2 = \lceil \text{first value} * W + \text{third value} \rceil$, the first value is 0. When Q>1, the first value may be any one of the foregoing examples.

In some embodiments, when Q=1, the terminal does not report the first value, and the first value is 0 or 1 by default. If W2=(first value+W), the first value is 0 by default; if W2=first value*W, the first value is 1 by default; or if $W2 = \lfloor \text{first value} * W \rfloor + \text{third value}$, or $W2 = \lceil \text{first value} * W \rceil + \text{third value}$, or $W2 = \lfloor \text{first value} * W + \text{third value} \rfloor$, or $W2 = \lceil \text{first value} * W + \text{third value} \rceil$, the first value is 0 by default. When Q>1, the terminal reports the first value, where the first value may be any one of the foregoing examples.

Alternatively, when Q=1, W2=f(Q); or when Q>1, W2 satisfies W2=(first value+W), and W satisfies one of the following: W=f(Q). It should be understood that the first value may be any one of the foregoing examples.

Manner 6

The information #3 indicates the value set and the third value. In this case, W2 satisfies: W2=(second value+W), or W2=second value*W, or W2=second value*W+third value, or $W2 = \lfloor \text{second value} * W \rfloor + \text{third value}$, or $W2 = \lceil \text{second value} * W \rceil + \text{third value}$, or $W2 = \lfloor \text{second value} * W + \text{third value} \rfloor$, or $W2 = \lceil \text{second value} * W + \text{third value} \rceil$, where W=f(Q), and f(Q) represents that W is a function of Q. When Q=m, the second value is an m$^{th}$ value in the V values, where m=1, 2, ..., or V.

For example, W=f(Q) satisfies one of the following: W=Q+C2, W=Q*Q*Q+C2, W=k1*Q+C2, or W=k1*Q*Q+C2, where k1 is a non-negative number, and C2 is a non-negative number.

In other words, when m reference signal resources are used to perform CSI measurement, W2=(m$^{th}$ value in the value set+W), or W2=m$^{th}$ value in the value set*W, or W2=m$^{th}$ value in the value set*W, or W2=m$^{th}$ value in the value set*W+third value, or $W2 = \lfloor m^{th} \text{ value in the value set} * W \rfloor + \text{third value}$, or $W2 = \lceil m^{th} \text{ value in the value set} * W \rceil + \text{third value}$, or $W2 = \lfloor m^{th} \text{ value in the value set} * W + \text{third value} \rfloor$, or $W2 = \lceil m^{th} \text{ value in the value set} * W + \text{third value} \rceil$.

For example, W2=(second value+W). It is assumed that V=4, and the value set is {0, 3, 4, 7}, then:

0 indicates that Q=1 reference signal resource is configured, and when the terminal performs CSI measurement on one reference signal resource, 0+W processing units are occupied.

3 indicates that Q=2 reference signal resources are configured, and when the terminal performs CSI measurement on two reference signal resources, 3+W processing units are occupied.

4 indicates that Q=3 reference signal resources are configured, and when the terminal performs CSI measurement on three reference signal resources, 4+W processing units are occupied.

7 indicates that Q=4 reference signal resources are configured, and when the terminal performs CSI measurement on four reference signal resources, 7+W processing units are occupied.

For example, W2=second value*W+third value. It is assumed that V=4, and the value set is {0, 3, 4, 7}, then:

0 indicates that Q=1 reference signal resource is configured, and when the terminal performs CSI measurement on one reference signal resource, (0*W+third value) processing units are occupied.
3 indicates that Q=2 reference signal resources are configured, and when the terminal performs CSI measurement on two reference signal resources, (3*W+third value) processing units are occupied.
4 indicates that Q=3 reference signal resources are configured, and when the terminal performs CSI measurement on three reference signal resources, (4*W+third value) processing units are occupied.
7 indicates that Q=4 reference signal resources are configured, and when the terminal performs CSI measurement on four reference signal resources, (7*W+third value) processing units are occupied.

For example, $W2 = \lceil \text{second value} * W \rceil + \text{third value}$. It is assumed that V=4, and the value set is {0, 3, 4, 7}, then:

0 indicates that Q=1 reference signal resource is configured, and when the terminal performs CSI measurement on one reference signal resource, ($\lceil 0 * W \rceil + \text{third value}$) processing units are occupied.
3 indicates that Q=2 reference signal resources are configured, and when the terminal performs CSI measurement on two reference signal resources, ($\lceil 3 * W \rceil + \text{third value}$) processing units are occupied.
4 indicates that Q=3 reference signal resources are configured, and when the terminal performs CSI measurement on three reference signal resources, ($\lceil 4 * W \rceil + \text{third value}$) processing units are occupied.
7 indicates that Q=4 reference signal resources are configured, and when the terminal performs CSI measurement on four reference signal resources, ($\lceil 7 * W \rceil + \text{third value}$) processing units are occupied.

For example, the value set may be any one of the following: {0, 1, 2, 3}, {0, 2, 4, 6}, {0, 1, 3, 4}, {0, 1, 3, 5}, {0, 1, 2, 4}, {0, 1, 2, 2}, {0, 1, 1, 1}, {0, 2, 2, 2}, {0, 3, 3, 3}, {0, 4, 4, 4}, {0, 2, 3, 3}, or {0, 2, 3, 4}.
For example, W=f(Q) satisfies one of the following: W=Q+C2, W=Q*Q*Q+C2, W=k*Q+C2, or W=k*Q*Q+C2, where k is a non-negative number, and C2 is a non-negative number.
For example, value sets corresponding to P≤P1 and P>P1 are different, P is a total quantity of transmit ports on the Q reference signal resources, and P and P1 are both positive integers. For example, P1=8/16/24/32/64 or the like.
For example, P1=32. When P≤32, the value set is {0, 1, 1, 1}. When P>32, the value set is {0, 2, 2, 2}.
For example, value sets corresponding to P≤P1, P1<P≤P2, and P>P2 are different, P is a total quantity of transmit ports on the Q reference signal resources, and P, P1, and P2 are all positive integers. For example, P1=8/16/24/32/64, and correspondingly, P2=16/24/32/64/128.
For example, P1=32, and P2=64. When P≤32, the value set is {0, 1, 1, 1}. When 32<P≤64, the value set is {0, 2, 2, 2}. When P>64, the value set is {0, 3, 3, 3}.
Optionally, V is equal to B described in the method 200.

Manner 7

The information #3 indicates the value set and the second value set. In this case, W2 satisfies: W2=(second value+W), or W2=second value*W, or W2=second value*W+fourth value, or $W2 = \lceil \text{second value} * W \rceil + \text{fourth value}$, or $W2 = \lfloor \text{second value} * W \rfloor + \text{fourth value}$, or $W2 = \lceil \text{second value} * W + \text{fourth value} \rceil$, or $W2 = \lfloor \text{second value} * W + \text{fourth value} \rfloor$, where W=f(Q), and f(Q) represents that W is a function of Q. When Q=m, the second value is an $m^{th}$ value in the V values, and the fourth value is an $m^{th}$ value in the V values in the second value set, where m=1, 2, ..., or V.
For example, W=f(Q) satisfies one of the following: W=Q+C2, W=Q*Q*Q+C2, W=k1*Q+C2, or W=k1*Q*Q+C2, where k1 is a non-negative number, and C2 is a non-negative number.
In other words, when m reference signal resources are used to perform CSI measurement, W2=($m^{th}$ value in the value set+W), or W2=$m^{th}$ value in the value set*W, or W2=$m^{th}$ value in the value set*W, or W2=$m^{th}$ value in the value set*W+$m^{th}$ value in the second value set, or $W2 = \lfloor m^{th} \text{ value in the value set} * W \rfloor + m^{th}$ value in the second value set, or $W2= \lceil m^{th} \text{ value in the value set} * W \rceil + m^{th}$ value in the second value

set, or $W2= \lfloor m^{th} \text{ value in the value set} * W + m^{th} \text{ value in the second value set} \rfloor$, or

$W2 = \lceil m^{th} \text{ value in the value set} * W + m^{th} \text{ value in the second value set} \rceil$.

For example, W2=(second value+W). It is assumed that V=4, and the value set is {0, 3, 4, 7}, then:

0 indicates that Q=1 reference signal resource is configured, and when the terminal performs CSI measurement on one reference signal resource, 0+W processing units are occupied.
3 indicates that Q=2 reference signal resources are configured, and when the terminal performs CSI measurement on two reference signal resources, 3+W processing units are occupied.
4 indicates that Q=3 reference signal resources are configured, and when the terminal performs CSI measurement on three reference signal resources, 4+W processing units are occupied.
7 indicates that Q=4 reference signal resources are configured, and when the terminal performs CSI measurement on four reference signal resources, 7+W processing units are occupied.

For example, W2=second value*W+third value. It is assumed that V=4, and the value set is {0, 3, 4, 7}, then:

0 indicates that Q=1 reference signal resource is configured, and when the terminal performs CSI measurement on one reference signal resource, (0*W+third value) processing units are occupied.
3 indicates that Q=2 reference signal resources are configured, and when the terminal performs CSI measurement on two reference signal resources, (3*W+third value) processing units are occupied.
4 indicates that Q=3 reference signal resources are configured, and when the terminal performs CSI measurement on three reference signal resources, (4*W+third value) processing units are occupied.
7 indicates that Q=4 reference signal resources are configured, and when the terminal performs CSI measurement on four reference signal resources, (7*W+third value) processing units are occupied.

For example, $W2 = \lceil \text{second value} * W \rceil + \text{third value}$. It is assumed that V=4, and the value set is {0, 3, 4, 7}, then:

0 indicates that Q=1 reference signal resource is configured, and when the terminal performs CSI measurement on one reference signal resource, ( $\lceil 0 * W \rceil + \text{third value}$ ) processing units are occupied.

3 indicates that Q=2 reference signal resources are configured, and when the terminal performs CSI measurement on two reference signal resources, ( $\lceil 3 * W \rceil + \text{third value}$ ) processing units are occupied.

4 indicates that Q=3 reference signal resources are configured, and when the terminal performs CSI measurement on three reference signal resources, ( $\lceil 4 * W \rceil + \text{third value}$ ) processing units are occupied.

7 indicates that Q=4 reference signal resources are configured, and when the terminal performs CSI measurement on four reference signal resources, ( $\lceil 7 * W \rceil + \text{third value}$ ) processing units are occupied.

For example, the value set may be any one of the following: {0, 1, 2, 3}, {0, 2, 4, 6}, {0, 1, 3, 4}, {0, 1, 3, 5}, {0, 1, 2, 4}, {0, 1, 2, 2}, {0, 1, 1, 1}, {0, 2, 2, 2}, {0, 3, 3, 3}, {0, 4, 4, 4}, {0, 2, 3, 3}, or {0, 2, 3, 4}.
For example, W=f(Q) satisfies one of the following: W=Q+C2, W=Q*Q*Q+C2, W=k*Q+C2, or W=k*Q*Q+C2, where k is a non-negative number, and C2 is a non-negative number.
For example, value sets corresponding to P≤P1 and P>P1 are different, P is a total quantity of transmit ports on the Q reference signal resources, and P and P1 are both positive integers. For example, P1=8/16/24/32/64 or the like.
For example, P1=32. When P≤32, the value set is {0, 1, 1, 1}. When P>32, the value set is {0, 2, 2, 2}.
For example, value sets corresponding to P≤P1, P1<P≤P2, and P>P2 are different, P is a total quantity of transmit ports on the Q reference signal resources, and P, P1, and P2 are all positive integers. For example, P1=8/16/24/32/64, and correspondingly, P2=16/24/32/64/128.
For example, P1=32, and P2=64. When P≤32, the value set is {0, 1, 1, 1}. When 32<P≤64, the value set is {0, 2, 2, 2}. When P>64, the value set is {0, 3, 3, 3}.
Optionally, V is equal to B described in the method 200.

Manner 8

The information #3 indicates the value set and the third value. In this case, when Q>1, W2 satisfies: W2=(second value+W), or W2=second value*W, or W2=second value*W+third value, or

$$W2=\lfloor \text{second value} * W \rfloor + \text{third value}, \text{ or } W2=\lceil \text{second value} * W \rceil + \text{third value}, \text{ or }$$

$$W2=\lfloor \text{second value} * W + \text{third value} \rfloor, \text{ or } W2=\lceil \text{second value} * W + \text{third value} \rceil, \text{ where}$$

W=f(Q), and f(Q) represents that W is a function of Q. In addition, when Q=n+1, the second value is an $n^{th}$ value in the V values, where n=1, 2, ..., or V. When Q=1, W2 satisfies: W2=f(Q).

For example, W=f(Q) satisfies one of the following: W=Q+C2, W=Q*Q*Q+C2, W=k1*Q+C2, or W=k1*Q*Q+C2, where k1 is a non-negative number, and C2 is a non-negative number.

Alternatively, when Q>1, W2 satisfies: W2=(second value+W), or W2=second value*W, or W2=second value*W+third value, or

$$W2=\lfloor \text{second value} * W \rfloor + \text{third value}, \text{ or }$$

$$W2=\lceil \text{second value} * W \rceil + \text{third value}, \text{ or } W2=\lfloor \text{second value} * W + \text{third value} \rfloor, \text{ or }$$

$$W2=\lceil \text{second value} * W + \text{third value} \rceil, \text{ where W=f(Q).}$$ In addition, when Q=n+1, the second value is an $n^{th}$ value in the V values, where n=1, 2, ..., or V. When Q=1, W2 satisfies: W2=(second value+W), where W=f(Q), and the second value is 0; or W2 satisfies: W2=second value*W, where W=f(Q), and the second value is 1; or W2 satisfies:

W2=second value*W+third value, or $$W2=\lfloor \text{second value} * W \rfloor + \text{third value}, \text{ or }$$

$$W2=\lceil \text{second value} * W \rceil + \text{third value}, \text{ or } W2=\lfloor \text{second value} * W + \text{third value} \rfloor, \text{ or }$$

$$W2=\lceil \text{second value} * W + \text{third value} \rceil, \text{ and the second value is 0.}$$

In other words, when one reference signal resource is used to perform CSI measurement, W2=W; or when n+1 reference signal resources are used to perform CSI measurement, W2=($n^{th}$ value in the value set+W), or W2=$n^{th}$ value in the value set*W, or W2=$n^{th}$ value in the value set*W+C1, or $$W2=\lfloor n^{th} \text{ value in the value set} * W \rfloor + C1,$$

or $$W2=\lceil n^{th} \text{ value in the value set} * W \rceil + C1, \text{ or }$$

$$W2=\lfloor n^{th} \text{ value in the value set} * W + C1 \rfloor, \text{ or }$$

$$W2=\lceil n^{th} \text{ value in the value set} * W + C1 \rceil.$$

For example, W2 satisfies: W2=(second value+W). It is assumed that V=3, and the value set is {3, 4, 7}, then: Q=1 reference signal resource is configured, and when the terminal performs CSI measurement on one reference signal resource, 0+W processing units are occupied.

3 indicates that Q=2 reference signal resources are configured, and when the terminal performs CSI measurement on two reference signal resources, 3+W processing units are occupied.

4 indicates that Q=3 reference signal resources are configured, and when the terminal performs CSI measurement on three reference signal resources, 4+W processing units are occupied.

7 indicates that Q=4 reference signal resources are configured, and when the terminal performs CSI measurement on four reference signal resources, 7+W processing units are occupied.

For example, W2=second value*W+C1. It is assumed that V=4, and the value set is {3, 4, 7}, then: Q=1 reference signal resource is configured, and when the terminal performs CSI measurement on one reference signal resource, 0*W+C1 processing units are occupied.

3 indicates that Q=2 reference signal resources are configured, and when the terminal performs CSI measurement on two reference signal resources, 3*W+C1 processing units are occupied.

4 indicates that Q=3 reference signal resources are configured, and when the terminal performs CSI measurement on three reference signal resources, 4*W+C1 processing units are occupied.

7 indicates that Q=4 reference signal resources are configured, and when the terminal performs CSI measurement on four reference signal resources, 7*W+C1 processing units are occupied.

For example, $W2=\lceil \text{second value} * W \rceil + C1$. It is assumed that V=4, and the value set is {3, 4, 7}, then: Q=1 reference signal resource is configured, and when the terminal performs CSI measurement on one reference signal

resource, $\lceil 0 * W \rceil + C1$ processing units are occupied.

3 indicates that Q=2 reference signal resources are configured, and when the terminal performs CSI measurement on two reference signal resources, $\lceil 3 * W \rceil + C1$ processing units are occupied.

4 indicates that Q=3 reference signal resources are configured, and when the terminal performs CSI measurement on three reference signal resources, $\lceil 4 * W \rceil + C1$ processing units are occupied.

7 indicates that Q=4 reference signal resources are configured, and when the terminal performs CSI measurement on four reference signal resources, $\lceil 7 * W \rceil + C1$ processing units are occupied.

For example, W=f(Q) satisfies one of the following: W=Q+C2, W=Q*Q*Q+C2, W=k1*Q+C2, or W=k1*Q*Q+C2, where k1 is a non-negative number, and C2 is a non-negative number. Optionally, C2=0, 1, or 2.

For example, the value set may be any one of the following: {1, 2, 3}, {2, 4, 6}, {1, 3, 4}, {1, 3, 5}, {1, 2, 4}, {1, 2, 2}, {1, 1, 1}, {2, 2, 2}, {2, 3, 3}, {3, 3, 3}, {4, 4, 4}, or {2, 3, 4}.

For example, value sets corresponding to P≤P1 and P>P1 are different, P is a total quantity of transmit ports on the Q reference signal resources, and P and P1 are both positive integers. For example, P1=8/16/24/32/64 or the like.

For example, P1=32. When P≤32, the value set is {1, 1, 1}. When P>32, the value set is {2, 2, 2}.

For example, value sets corresponding to P≤P1, P1<P≤P2, and P>P2 are different, P is a total quantity of transmit ports on the Q reference signal resources, and P, P1, and P2 are all positive integers. For example, P1=8/16/24/32/64, and correspondingly, P2=16/24/32/64/128.

For example, P1=32, and P2=64. When P≤32, the value set is {1, 1, 1}. When 32<P≤64, the value set is {2, 2, 2}. When P>64, the value set is {3, 3, 3}.

Optionally, V is equal to a difference between B and 1 described in the method 200, that is, V=B-1.

Manner 9

The information #3 indicates the value set and the second value set. In this case, when Q>1, W2 satisfies: W2= (second value+W), or W2=second value*W, or W2=second value*W+fourth value, or

$$W2= \lfloor \text{second value} * W \rfloor + \text{fourth value}$$ , or $$W2= \lceil \text{second value} * W \rceil + \text{fourth value}$$ , or

$$W2= \lfloor \text{second value} * W + \text{fourth value} \rfloor$$ , or $$W2= \lceil \text{second value} * W + \text{fourth value} \rceil$$ , where W=f(Q), and f(Q) represents that W is a function of Q. In addition, when Q=n+1, the second value is an $n^{th}$ value in the V values, and the fourth value is an $n^{th}$ value in the V values in the second value set, where n=1, 2, ..., or V. When Q=1, W2 satisfies: W2=f(Q).

For example, W=f(Q) satisfies one of the following: W=Q+C2, W=Q*Q*Q+C2, W=k1*Q+C2, or W=k1*Q*Q+C2, where k1 is a non-negative number, and C2 is a non-negative number.

Alternatively, when Q>1, W2 satisfies: W2=(second value+W), or W2=second value*W, or W2=second value*W+fourth value, or $$W2= \lfloor \text{second value} * W \rfloor + \text{fourth value}$$ , or

$$W2= \lceil \text{second value} * W \rceil + \text{fourth value}$$ , or $$W2= \lfloor \text{second value} * W + \text{fourth value} \rfloor$$ , or

$$W2= \lceil \text{second value} * W + \text{fourth value} \rceil$$ , where W=f(Q). In addition, when Q=n+1, the second value is an $n^{th}$ value in the V values, where n=1, 2, ..., or V. When Q=1, W2 satisfies: W2=(second value+W), where W=f(Q), and the second value is 0; or W2 satisfies: W2=second value*W, where W=f(Q), and the second value is 1; or W2 satisfies:

W2=second value*W+fourth value, or $$W2= \lfloor \text{second value} * W \rfloor + \text{fourth value}$$ , or

$$W2= \lceil \text{second value} * W \rceil + \text{fourth value}$$ , or $$W2= \lfloor \text{second value} * W + \text{fourth value} \rfloor$$ , or

$$W2= \lceil \text{second value} * W + \text{fourth value} \rceil$$ , and the second value is 0.

In other words, when one reference signal resource is used to perform CSI measurement, W2=W; or when n+1 reference signal resources are used to perform CSI measurement, W2=($n^{th}$ value in the value set+W), or W2=$n^{th}$ value in the value set*W, or W2=$n^{th}$ value in the value set*W+$n^{th}$ value in the second value set, or

$$W2= \lfloor n^{th} \text{ value in the value set} * W \rfloor + n^{th} \text{ value}$$ in the second value set, or

$$W2= \lceil n^{th} \text{ value in the value set} * W \rceil + n^{th} \text{ value}$$ in the second value set, or

$$W2= \lfloor n^{th} \text{ value in the value set} * W + n^{th} \text{ value in the second value set} \rfloor$$ , or

$$W2= \lceil n^{th} \text{ value in the value set} * W + n^{th} \text{ value in the second value set} \rceil$$ .

For example, W2 satisfies: W2=(second value+W). It is assumed that V=3, and the value set is {3, 4, 7}, then: Q=1 reference signal resource is configured, and when the terminal performs CSI measurement on one reference signal resource, 0+W processing units are occupied.

3 indicates that Q=2 reference signal resources are configured, and when the terminal performs CSI measurement on two reference signal resources, 3+W processing units are occupied.

4 indicates that Q=3 reference signal resources are configured, and when the terminal performs CSI measurement on three reference signal resources, 4+W processing units are occupied.

7 indicates that Q=4 reference signal resources are configured, and when the terminal performs CSI measurement on four reference signal resources, 7+W processing units are occupied.

For example, W2=second value*W+fourth value. It is assumed that V=4, and the value set is {3, 4, 7}, then: Q=1 reference signal resource is configured, and when the terminal performs CSI measurement on one reference signal resource, (0*W+fourth value) processing units are occupied.

3 indicates that Q=2 reference signal resources are configured, and when the terminal performs CSI measurement on two reference signal resources, (3*W+fourth value) processing units are occupied.

4 indicates that Q=3 reference signal resources are configured, and when the terminal performs CSI measurement on three reference signal resources, (4*W+fourth value) processing units are occupied.

7 indicates that Q=4 reference signal resources are configured, and when the terminal performs CSI measurement on four reference signal resources, (7*W+fourth value) processing units are occupied.

For example, $W2=\lceil \text{second value} * W \rceil + \text{fourth value}$. It is assumed that V=4, and the value set is {3, 4, 7}, then:

Q=1 reference signal resource is configured, and when the terminal performs CSI measurement on one reference signal

resource, ( $\lceil 0 * W \rceil + \text{fourth value}$ ) processing units are occupied.

3 indicates that Q=2 reference signal resources are configured, and when the terminal performs CSI measurement on two reference signal resources, ( $\lceil 3 * W \rceil + \text{fourth value}$ ) processing units are occupied.

4 indicates that Q=3 reference signal resources are configured, and when the terminal performs CSI measurement on three reference signal resources, ( $\lceil 4 * W \rceil + \text{fourth value}$ ) processing units are occupied.

7 indicates that Q=4 reference signal resources are configured, and when the terminal performs CSI measurement on four reference signal resources, ( $\lceil 7 * W \rceil + \text{fourth value}$ ) processing units are occupied.

For example, W=f(Q) satisfies one of the following: W=Q+C2, W=Q*Q*Q+C2, W=k1*Q+C2, or W=k1*Q*Q+C2, where k1 is a non-negative number, and C2 is a non-negative number. Optionally, C2=0, 1, or 2.

For example, the value set may be any one of the following: {1, 2, 3}, {2, 4, 6}, {1, 3, 4}, {1, 3, 5}, {1, 2, 4}, {1, 2, 2}, {1, 1, 1}, {2, 2, 2}, {2, 3, 3}, {3, 3, 3}, {4, 4, 4}, or {2, 3, 4}.

For example, value sets corresponding to P≤P1 and P>P1 are different, P is a total quantity of transmit ports on the Q reference signal resources, and P and P1 are both positive integers. For example, P1=8/16/24/32/64 or the like.

For example, P1=32. When P≤32, the value set is {1, 1, 1}. When P>32, the value set is {2, 2, 2}.

For example, value sets corresponding to P≤P1, P1<P≤P2, and P>P2 are different, P is a total quantity of transmit ports on the Q reference signal resources, and P, P1, and P2 are all positive integers. For example, P1=8/16/24/32/64, and correspondingly, P2=16/24/32/64/128.

For example, P1=32, and P2=64. When P≤32, the value set is {1, 1, 1}. When 32<P≤64, the value set is {2, 2, 2}. When P>64, the value set is {3, 3, 3}.

Optionally, V is equal to a difference between B and 1 described in the method 200, that is, V=B-1.

In the foregoing plurality of implementations, the terminal may select a corresponding value from a plurality of values for reporting based on the capability of the terminal, to flexibly report the capability of the terminal.

In some embodiments, the method further includes:
S540: The terminal determines W2 based on the information #4.

For details about this step, refer to the descriptions of S530.

Optionally, the method may further include the following steps.

S550: The network device sends information #5 to the terminal, and correspondingly, the terminal receives the information #5.

The information #5 indicates Nl groups of spatial domain base vectors, and Nl is a positive integer.

Before the network device sends the information #5, the network device may first determine whether a total quantity W3 of processing units corresponding to CSI measurement corresponding to the Nl groups of spatial domain base vectors exceeds a total quantity of processing units used by the terminal to perform CSI measurement. If the total quantity W3 does not exceed the total quantity of processing units used by the terminal to perform CSI measurement, the network device may configure the Nl groups of spatial domain base vectors for the terminal.

W3=W2*Nl. Alternatively, W3=W2+k2*(Nl-1), where k2 is an integer.

For example, k2=1/2/3/4.

It should be understood that Nl is also an assumed quantity of groups of CSI measurements configured by the network device, and correspondingly, also a quantity of groups of CSI measurements performed by the terminal.

S560: The terminal determines W3 based on the information #5.

After determining W3, the terminal may call W3 processing units to perform Nl groups of CSI measurements.

For example, the information #4 and the information #5 may be sent by using same signaling, or may be sent by using different signaling.

To sum up, according to the communication method provided in this application, the network device may determine, based on the information reported by the terminal, the quantity of processing units (for example, CPUs) corresponding to one CSI measurement hypothesis. In combination with a total quantity of processing units used by the terminal to perform CSI measurement, the network device can configure, for the terminal, the reference signal resources that match a capability of the terminal, to perform CSI measurement.

In the method 500, the terminal needs to report related information of a processing unit related to CSI measurement. In some embodiments, when Q reference signal resources are used to perform CSI measurement, a quantity of corresponding processing units is Q, Q*Q*Q, k3*Q, or k3*Q*Q, where k3 is an integer. The formula herein may be specified in a protocol. In this way, the terminal does not need to report related information of a processing unit related to CSI measurement, and the network device can learn of a processing capability of the terminal, to configure an appropriates quantity of reference signal resources for the terminal.

It should be understood that the method 200 and the method 500 may be combined. For example, when the method 200 and the method 500 may be combined, the information #1 and the information #3 may be same signaling, or may be different signaling. After obtaining the content in the information #1 and the content in the information #3, the network device may configure a reference signal resource for the terminal, for example, configure Q reference signal resources.

Embodiments in this application may be used independently or in combination. Different steps in embodiments may also be used independently or in combination. Similar steps exist in different embodiments, and descriptions thereof may be mutually cited and referenced.

The foregoing describes the method embodiments provided in this application, and the following describes apparatus embodiments provided in this application. It should be understood that descriptions of apparatus embodiments correspond to the descriptions of the method embodiments. Therefore, for content that is not described in detail, refer to the foregoing method embodiments. For brevity, details are not described herein again.

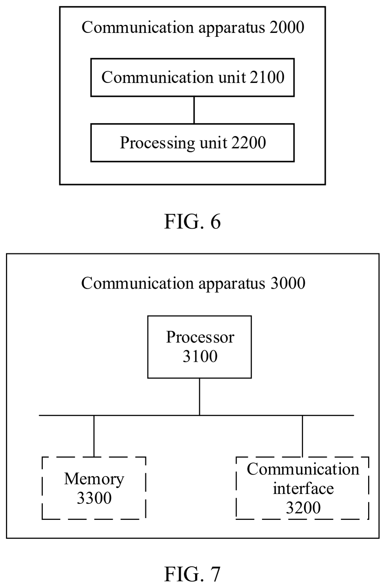

FIG. 6 is a block diagram of a communication apparatus according to an embodiment of this application. As shown in FIG. 6, the communication apparatus 2000 may include a communication unit 2100 and a processing unit 2200. The communication unit 2100 may implement a corresponding communication function. The communication may be internal communication of the communication apparatus 2000, or may be communication between the communication apparatus 2000 and another apparatus. The processing unit 2200 may implement a corresponding processing function. The communication unit 2100 may also be referred to as a communication interface or a transceiver unit. Optionally, the communication apparatus 2000 may further include a storage unit. The storage unit may be configured to store instructions and/or data. The processing unit 2200 may read the instructions and/or the data in the storage unit, so that the apparatus implements the foregoing method embodiments.

In a possible design, the communication apparatus 2000 may be a terminal in the method 200, or may be a module or a chip used in a terminal. The communication apparatus 2000 may be configured to perform the steps or procedures performed by the terminal in the foregoing method embodiment 200.

Specifically, the processing unit 2200 is configured to generate first information, and the communication unit 2100 is configured to send the first information. The first information indicates at least one first capability parameter set, the first capability parameter set includes a maximum total quantity of transmit ports in one frequency unit and at least two of a maximum quantity of transmit ports on one resource associated with one CSI measurement hypothesis, a maximum total quantity of resources associated with the one CSI measurement hypothesis, and a maximum total quantity of transmit ports on a reference signal resource associated with the one CSI measurement hypothesis.

Optionally, the communication unit 2100 is further configured to: send second information, where the second information indicates a first value, a value set, or a quantity NUM_i of processing units that corresponds to using i reference signal resources to perform CSI measurement, i=1, 2, ..., or S, S and NUM_i are both positive integers, the first value is an integer, the value set includes V values, V is a positive integer, the V values are all integers, and the first value, the value set, and NUM_i all indicate a quantity of processing units corresponding to the one CSI measurement hypothesis; and receive third information, where the third information is used to configure Q reference signal resources associated with the one CSI measurement hypothesis, and Q is a positive integer.

Optionally, the processing unit 2200 is further configured to determine, based on the third information, a quantity W2 of processing units corresponding to the Q reference signal resources, where W2 is a positive integer.

Optionally, the communication unit 2100 is further configured to receive fourth information, where the fourth information indicates N*l* groups of spatial domain base vectors, and N*l* is a positive integer. The processing unit 2200 is further configured to determine, based on the fourth information, a total quantity W3 of processing units corresponding to CSI measurement corresponding to the N*l* groups of spatial domain base vectors, where W3=W2*N*l* or W3=W2+k2* (N*l*-1), and k2 is an integer.

In a possible design, the communication apparatus 2000 may be the network device in the method 200, or may be a module or a chip used in the network device. The communication apparatus 2000 may be configured to perform the steps or procedures performed by the network device in the foregoing method embodiment 200.

Specifically, the communication unit 2100 is configured to: receive first information, and configure a reference signal resource based on the first information. The first information indicates at least one first capability parameter set, the first capability parameter set includes a maximum total quantity of transmit ports in one frequency unit and at least two of a maximum quantity of transmit ports on one resource associated with one CSI measurement hypothesis, a maximum total quantity of resources associated with the one CSI measurement hypothesis, and a maximum total quantity of transmit ports on a reference signal resource associated with the one CSI measurement hypothesis.

Optionally, the communication unit 2100 is further configured to receive second information, where the second information indicates a first value, a value set, or a quantity NUM_i of processing units that corresponds to using i reference signal resources to perform CSI measurement, i=1, 2, ..., or S, S and NUM_i are both positive integers, the first value is an integer, the value set includes V values, V is a positive integer, the V values are all integers, and the first value, the value set, and NUM_i all indicate a quantity of processing units corresponding to the one CSI measurement hypothesis. The processing unit 2200 is further configured to configure, based on the second information, Q reference signal resources associated with the one CSI measurement hypothesis, and Q is a positive integer.

Optionally, the processing unit 2200 is further configured to determine, based on the second information, a quantity W2 of processing units corresponding to the Q reference signal resources, where W2 is a positive integer.

Optionally, the communication unit 2100 is further configured to send fourth information, where the fourth information indicates N*l* groups of spatial domain base vectors, and N*l* is a positive integer.

For the foregoing two designs, the following plurality of optional implementations are further included.

Optionally, the maximum total quantity of transmit ports on the reference signal resource associated with the one CSI measurement hypothesis is equal to a product of the maximum quantity of transmit ports on one resource associated with the one CSI measurement hypothesis and the maximum total quantity of resources associated with the one CSI measurement hypothesis.

Optionally, the first capability parameter set further includes at least one of a maximum total quantity of reference signal resources in one frequency unit and a maximum quantity of transmit ports on one resource in one frequency unit.

Optionally, the at least one first capability parameter set includes at least one group of second capability parameters and at least one corresponding group of third capability parameters, one group of second capability parameters includes at least two of the maximum quantity of transmit ports on one resource associated with the one CSI measurement hypothesis, the maximum total quantity of resources associated with the one CSI measurement hypothesis, and the maximum total quantity of transmit ports on the reference signal resource associated with the one CSI measurement hypothesis, and one group of third capability parameters includes a maximum quantity of transmit ports on one resource in one frequency unit, a maximum total quantity of reference signal resources in one frequency unit, and the maximum total quantity of transmit ports in one frequency unit.

Optionally, the maximum quantity of transmit ports on one resource in one frequency unit is equal to the maximum quantity of transmit ports on one resource associated with the one CSI measurement hypothesis.

Optionally, the maximum total quantity of transmit ports in one frequency unit is equal to a product of the maximum quantity of transmit ports on one resource in one frequency unit and the maximum total quantity of reference signal resources in one frequency unit.

Optionally, the at least one first capability parameter set includes at least one first capability parameter set associated with a codebook of a first mode and at least one first capability parameter set associated with a codebook of a second mode, for the codebook of the first mode, frequency domain bases corresponding to all reference signal resources are the same or different, and for the codebook of the second mode, frequency domain bases corresponding to all reference signal resources are the same.

Optionally, the at least one group of second capability parameters includes at least one group of second capability parameters associated with a codebook of a first mode and at least one group of second capability parameters associated with a codebook of a second mode, the at least one group of third capability parameters includes at least one group of third capability parameters associated with the codebook of the first mode and at least one group of third capability parameters associated with the codebook of the second mode, for the codebook of the first mode, frequency domain bases corresponding to all reference signal resources are the same or different, and for the codebook of the second mode, frequency domain bases corresponding to all reference signal resources are the same.

Optionally, the at least one first capability parameter set includes at least one first capability parameter set associated with a first measurement mode and at least one first capability parameter set associated with a second measurement mode, for the first measurement mode, a reported CSI measurement result corresponds to configured $N_{TRP}$ reference signal resources, for the second measurement mode, a reported CSI measurement result corresponds to N reference signal resources in the configured $N_{TRP}$ reference signal resources, and $N_{TRP}$ and N are both positive integers.

Optionally, the at least one group of second capability parameters includes at least one group of second capability parameters associated with a first measurement mode and at least one group of second capability parameters associated with a second measurement mode, the at least one group of third capability parameters includes at least one group of third capability parameters associated with the first measurement mode and at least one group of third capability parameters associated with the second measurement mode, for the first measurement mode, a reported CSI measurement result corresponds to configured $N_{TRP}$ reference signal resources, for the second measurement mode, a reported CSI measurement result corresponds to N reference signal resources in the configured $N_{TRP}$ reference signal resources, and $N_{TRP}$ and N are both positive integers.

Optionally, the first capability parameter set further indicates a quantity M of groups of CSI measurements supported in one frequency unit, M is a positive integer, and a total quantity of transmit ports corresponding to the M groups of CSI measurements is less than or equal to the maximum total quantity of transmit ports in one frequency unit.

Optionally, M satisfies one of the following:

$$M = F/(A*B), \quad M = \lfloor F/(A*B) \rfloor, \quad M \geq F/(A*B), \text{ or } \quad M \geq \lfloor F/(A*B) \rfloor.$$

F represents the maximum total quantity of transmit ports in one frequency unit, A represents the maximum quantity of transmit ports on one resource associated with the one CSI measurement hypothesis, B represents the maximum total quantity of resources associated with the one CSI measurement hypothesis, F, A, and B are all positive integers, and $\lfloor \ \rfloor$ represents rounding down.

Optionally, the second information indicates the first value. W2 satisfies: W2=(first value+W), or W2=first value*W, where W=f(Q), and f(Q) represents that W is a function of Q.

Optionally, the first information indicates the value set. W2 satisfies: W2=(second value+W), or W2=second value*W, where W=f(Q), and f(Q) represents that W is a function of Q; and when Q=m, the second value is an $m^{th}$ value in the V values, where m=1, 2, ..., or V; or when Q=n+1, the second value is an $n^{th}$ value in the V values, where n=1, 2, ..., or V; or when Q=1, the second value is 0.

Optionally, first values corresponding to P≤P1 and P>P1 are different, P is a total quantity of transmit ports on the Q reference signal resources, and P and P1 are both positive integers.

In a possible design, the communication apparatus 2000 may be the terminal in the method 300, or may be a module or a chip used in the terminal. The communication apparatus 2000 may be configured to perform the steps or procedures performed by the terminal in the foregoing method embodiment 300.

Specifically, the processing unit 2200 is configured to generate first information, and the communication unit 2100 is configured to send the first information. The first information includes at least one group of capability parameters, and each group of capability parameters includes a maximum quantity of transmit ports on one resource in one frequency unit, a maximum total quantity of reference signal resources in one frequency unit, and a maximum total quantity of transmit ports in one frequency unit.

Optionally, the communication unit 2100 is further configured to: send second information, where the second information indicates a first value, a value set, or a quantity NUM_i of processing units that corresponds to using i reference signal resources to perform CSI measurement, i=1, 2, ..., or S, S and NUM_i are both positive integers, the first value is an integer, the value set includes V values, V is a positive integer, the V values are all integers, and the first value, the value set, and NUM_i all indicate a quantity of processing units corresponding to the one CSI measurement hypothesis; and receive third information, where the third information is used to configure Q reference signal resources associated with the one CSI measurement hypothesis, and Q is a positive integer.

Optionally, the processing unit 2200 is further configured to determine, based on the third information, a quantity W2 of processing units corresponding to the Q reference signal resources, where W2 is a positive integer.

Optionally, the communication unit 2100 is further configured to receive fourth information, where the fourth information indicates N*l* groups of spatial domain base vectors, and N*l* is a positive integer. The processing unit 2200 is further configured to determine, based on the fourth information, a total quantity W3 of processing units corresponding to CSI measurement corresponding to the N*l* groups of spatial domain base vectors, where W3=W2*N*l* or W3=W2+k2*(N*l*-1), and k2 is an integer.

In a possible design, the communication apparatus 2000 may be a network device in the method 300, or may be a module or a chip used in a network device. The communication apparatus 2000 may be configured to perform the steps or procedures performed by the network device in the foregoing method embodiment 300.

Specifically, the communication unit 2100 receives first information, and configures a reference signal resource based on the first information. The first information includes at least one group of capability parameters, and each group of capability parameters includes a maximum quantity of transmit ports on one resource in one frequency unit, a maximum total quantity of reference signal resources in one frequency unit, and a maximum total quantity of transmit ports in one frequency unit.

Optionally, the communication unit 2100 is further configured to: receive second information, where the second information indicates a first value, a value set, or a quantity NUM_i of processing units that corresponds to using i reference signal resources to perform CSI measurement, i=1, 2, ..., or S, S and NUM_i are both positive integers, the first value is an integer, the value set includes V values, V is a positive integer, the V values are all integers, and the first value, the value set, and NUM_i all indicate a quantity of processing units corresponding to the one CSI measurement hypothesis; and configure, based on the second information, Q reference signal resources associated with the one CSI measurement hypothesis, and Q is a positive integer.

Optionally, the processing unit 2200 is configured to determine, based on the first information, a quantity W2 of processing units corresponding to the Q reference signal resources, where W2 is a positive integer.

Optionally, the communication unit 2100 is further configured to send fourth information, where the fourth information indicates N$l$ groups of spatial domain base vectors, and N$l$ is a positive integer.

For the foregoing two designs, the following plurality of optional implementations are further included.

Optionally, the at least one group of capability parameters includes at least one group of capability parameters associated with a codebook of a first mode and at least one group of capability parameters associated with a codebook of a second mode, for the codebook of the first mode, frequency domain bases corresponding to all reference signal resources are the same or different, and for the codebook of the second mode, frequency domain bases corresponding to all reference signal resources are the same.

Optionally, the at least one group of capability parameters includes at least one group of capability parameters associated with a first measurement mode and at least one group of capability parameters associated with a second measurement mode, for the first measurement mode, a reported CSI measurement result corresponds to configured $N_{TRP}$ reference signal resources, and for the second measurement mode, a reported CSI measurement result corresponds to N reference signal resources in the configured $N_{TRP}$ reference signal resources.

Optionally, the second information indicates the first value. W2 satisfies: W2=(first value+W), or W2=first value*W, where W=f(Q), and f(Q) represents that W is a function of Q.

For example, W=f(Q) satisfies: W=Q, W=Q*Q*Q, W=k1*Q, or W=k1*Q*Q, where k1 is an integer.

Optionally, the second information indicates the value set. W2 satisfies: W2=(second value+W), or W2=second value*W, where W=f(Q), and f(Q) represents that W is a function of Q; and when Q=m, the second value is an $m^{th}$ value in the V values, where m=1, 2, ..., or V; or when Q=n+1, the second value is an $n^{th}$ value in the V values, where n=1, 2, ..., or V; or when Q=1, the second value is 0.

For example, W=f(Q) satisfies: W=Q, W=Q*Q*Q, W=k1*Q, or W=k1*Q*Q, where k1 is an integer.

Optionally, first values corresponding to P$\leq$P1 and P>P1 are different, P is a total quantity of transmit ports on the Q reference signal resources, and P and P1 are both positive integers.

In a possible design, the communication apparatus 2000 may be the terminal in the method 400, or may be a module or a chip used in the terminal. The communication apparatus 2000 may be configured to perform the steps or procedures performed by the terminal in the foregoing method embodiment 400.

Specifically, the communication unit 2100 is configured to: send first information, and receive second information. The first information indicates a first value, a value set, or a quantity NUM_i of processing units that corresponds to using i reference signal resources to perform CSI measurement, i=1, 2, ..., or S, or i=2, 3, ..., or S, S and NUM_i are both positive integers, the first value is an integer, the value set includes V values, V is a positive integer, the V values are all integers, and the first value, the value set, and NUM_i all indicate a quantity of processing units corresponding to the one CSI measurement hypothesis. The second information is used to configure Q reference signal resources associated with the one CSI measurement hypothesis, and Q is a positive integer.

Optionally, the processing unit 2200 is further configured to determine, based on the first information, a quantity W2 of processing units corresponding to the Q reference signal resources, where W2 is a positive integer.

Optionally, the communication unit 2100 is further configured to receive third information, where the third information indicates N$l$ groups of spatial domain base vectors, and N$l$ is a positive integer. The processing unit 2200 is further configured to determine, based on the third information, a total quantity W3 of processing units corresponding to CSI measurement corresponding to the N$l$ groups of spatial domain base vectors, where W3=W2*N$l$ or W3=W2+k2*(N$l$-1), and k2 is an integer.

In a possible design, the communication apparatus 2000 may be the network device in the method 400, or may be a module or a chip used in the network device. The communication apparatus 2000 may be configured to perform the steps or procedures performed by the network device in the foregoing method embodiment 400.

The communication unit 2100 is configured to receive first information, and configure Q reference signal resources associated with the one CSI measurement hypothesis based on the first information, where Q is a positive integer. The first information indicates a first value, a value set, or a quantity NUM_i of processing units that corresponds to using i reference signal resources to perform CSI measurement, i=1, 2, ..., or S, S and NUM_i are both positive integers, the first value is an integer, the value set includes V values, V is a positive integer, the V values are all integers, and the first value, the value set, and NUM_i all indicate a quantity of processing units corresponding to the one CSI measurement hypothesis; and configuring, based on the first information, Q reference signal resources associated with the one CSI measurement hypothesis, and Q is a positive integer.

Optionally, the processing unit 2200 is further configured to determine, based on the first information, a quantity W2 of processing units corresponding to the Q reference signal resources, where W2 is a positive integer.

Optionally, the communication unit 2100 is further configured to send fourth information, where the fourth information indicates N/ groups of spatial domain base vectors, and N/ is a positive integer.

For the foregoing two designs, the following plurality of optional implementations are further included.

Optionally, the first information indicates the first value. W2 satisfies: W2=(first value+W), W2 satisfies: W2=(first value+W), or W2=first value*W, where W=f(Q), and f(Q) represents that W is a function of Q.

For example, W=f(Q) satisfies: W=Q, W=Q*Q*Q, W=k1*Q, or W=k1*Q*Q, where k1 is an integer.

Optionally, the first information indicates the first value. When Q>1, W2=(first value+W), W2 satisfies: W2=(first value+W), or W2=first value*W, where W=f(Q), and f(Q) represents that W is a function of Q. When Q=1, W2 satisfies: W2=Q, or W2=f(Q).

Optionally, the first information indicates the value set. W2 satisfies: W2=(second value+W), or W2=second value*W, where W=f(Q), and f(Q) represents that W is a function of Q; and when Q=m, the second value is an $m^{th}$ value in the V values, where m=1, 2, ..., or V; or when Q=n+1, the second value is an $n^{th}$ value in the V values, where n=1, 2, ..., or V; or when Q=1, the second value is 0.

For example, W=f(Q) satisfies: W=Q, W=Q*Q*Q, W=k1*Q, or W=k1*Q*Q, where k1 is an integer.

Optionally, first values corresponding to $P \leq P1$ and $P > P1$ are different, P is a total quantity of transmit ports on the Q reference signal resources, and P and P1 are both positive integers. For example, P1=8, 16, 24, 32, or 64.

Optionally, value sets corresponding to $P \leq P1$, $P1 < P \leq P2$, and $P > P2$ are different, P is a total quantity of transmit ports on the Q reference signal resources, and P, P1, and P2 are all positive integers. For example, P1=8/16/24/32/64, and correspondingly, P2=16/24/32/64/128.

Optionally, NUM_i is one of {i, i+1, ..., Si}, or NUM_i is one of {1, 2, 3, ..., Si}, where $Si \geq i$.

Optionally, a total quantity of transmit ports on the i reference signal resources is R. When $R \leq R1$, NUM_i is one of {i, i+1, ..., Si}, or NUM_i is one of {1, 2, 3, ..., Si}, where $Si \geq i$. When R>R1, NUM_i is one of {i, i+1, ..., Si'}, or NUM_i is one of {1, 2, 3, ..., Si'}, where $N1' \geq Si$, or NUM_i is a sum of H and one of {i, i+1, ..., Si}, or NUM_i is a sum of H and one of {1, 2, 3, ..., Si}, where H is a positive integer.

Optionally, H is one of {0, 1, 2, ..., S}.

Optionally, the first information indicates NUM_i, and W2=NUM_Q.

Optionally, the first information indicates NUM_i, and the first information further indicates a maximum quantity of reference signal resources associated with the one CSI measurement hypothesis.

For details about steps or procedures performed by the units in the communication apparatus 2000, refer to the foregoing method 200, method 300, method 400, or method 500. Details are not described herein again.

It should be understood that the "unit" in the communication apparatus 2000 may be implemented by hardware, or may be implemented by software, or may be implemented by hardware executing corresponding software. For example, the "unit" may be an application-specific integrated circuit (application-specific integrated circuit, ASIC), an electronic circuit, a processor (for example, a shared processor, a dedicated processor, or a group processor) configured to execute one or more software or firmware programs, a memory, a combinational logic circuit, and/or another appropriate component that supports the described function. For another example, the communication unit 2100 may alternatively be a transceiver or a transceiver circuit (which, for example, may include a receiver circuit and a transmitter circuit), and the processing unit 2200 may alternatively be a processor or a processing circuit.

FIG. 7 is a block diagram of another communication apparatus 3000 according to an embodiment of this application. The apparatus 3000 may be a terminal or a network device, or may be a chip, a chip system, a processor, or the like that supports a terminal or a network device in implementing the foregoing method. The apparatus may be configured to implement the method described in the foregoing method embodiments. For details, refer to the descriptions in the foregoing method embodiments.

The apparatus 3000 may include one or more processors 3100. The processor 3100 may also be referred to as a processing unit, and may implement a specific control function. The processor 3100 may be a general-purpose processor, a dedicated processor, or the like. For example, the processor 3100 may be a baseband processor or a central processing unit. The baseband processor may be configured to process a communication protocol and communication data. The central processing unit may be configured to: control the communication apparatus (for example, a base station, a baseband chip, a user chip, a DU, or a CU), execute a software program, and process data of the software program.

In an optional design, the processor 3100 may also store instructions and/or data, and the instructions and/or the data may be run by the processor 3100, so that the apparatus 3000 performs the methods described in the foregoing method embodiments.

In another optional design, the apparatus 3000 may include a communication interface 3200 configured to implement a receiving function and a sending function. For example, the communication interface 3200 may be a transceiver circuit, an interface, an interface circuit, or a transceiver. The transceiver circuit, the interface, the interface circuit, or the transceiver configured to implement the receiving function and the sending function may be separated, or may be integrated together. The transceiver circuit, the interface, the interface circuit, or the transceiver may be configured to read/write code/data, or the transceiver circuit, the interface, the interface circuit, or the transceiver may be configured to transmit or transfer a signal.

Optionally, the apparatus 3000 may include one or more memories 3300 that may store instructions. The instructions may be run on the processor 3100, so that the apparatus 3000 performs the methods described in the foregoing method embodiments. Optionally, the memory 3300 may further store data. Optionally, the processor 3100 may also store instructions and/or data. The processor 3100 and the memory 3300 may be disposed separately, or may be integrated together.

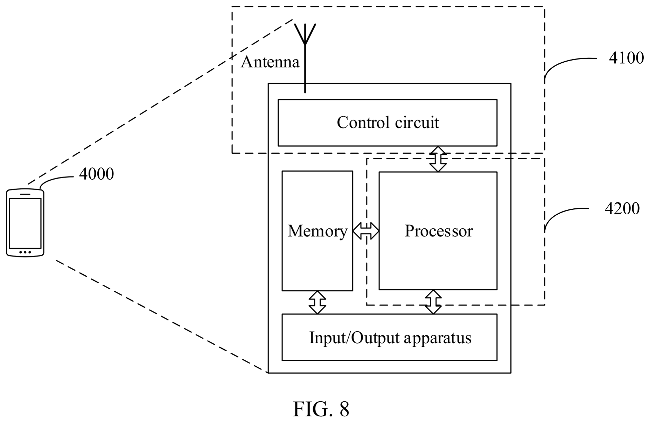

FIG. 8 is a diagram of a structure of a terminal 4000 according to this application. The communication apparatus 2000 or the communication apparatus 3000 may be configured in the terminal 4000. Alternatively, the communication apparatus 2000 or the communication apparatus 3000 may be the terminal 4000. In other words, the terminal 4000 may perform the actions performed by the terminal in the foregoing method embodiments. Optionally, for ease of description, FIG. 8 shows only main components of the terminal. As shown in FIG. 8, the terminal 4000 includes a processor, a memory, a control circuit, an antenna, and an input/output apparatus.

The processor is mainly configured to: process a communication protocol and communication data, control the entire terminal, execute a software program, and process data of the software program, for example, is configured to support the terminal in performing the action described in the foregoing method embodiments. The memory is mainly configured to store the software program and data. The control circuit is mainly configured to convert a baseband signal and a radio frequency signal and process the radio frequency signal. The control circuit and the antenna together may also be referred to as a transceiver, and are mainly configured to receive/send a radio frequency signal in a form of an electromagnetic wave. The input/output apparatus, such as a touchscreen, a display, or a keyboard, is mainly configured to: receive data input by a user and output data to the user.

After the terminal is powered on, the processor may read the software program from the storage unit, interpret and execute instructions of the software program, and process the data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends, through the antenna, a radio frequency signal in an electromagnetic wave form. When data is sent to the terminal, the radio frequency circuit receives a radio frequency signal through the antenna, converts the radio frequency signal into a baseband signal, and outputs the baseband signal to the processor. The processor converts the baseband signal into data, and processes the data.

A person skilled in the art may understand that, for ease of descriptions, FIG. 8 shows only one memory and one processor. In an actual terminal, there may be a plurality of processors and memories. The memory may also be referred to as a storage medium, a storage device, or the like. This is not limited in embodiments of this application.

For example, the processor may include a baseband processor and a central processing unit. The baseband processor is mainly configured to process the communication protocol and the communication data. The central processing unit is mainly configured to: control the entire terminal, execute the software program, and process the data of the software program. The processor in FIG. 8 integrates functions of the baseband processor and the central processing unit. A person skilled in the art may understand that the baseband processor and the central processing unit may alternatively be independent processors, and are interconnected by using a technology such as a bus. A person skilled in the art may understand that the terminal may include a plurality of baseband processors to adapt to different network standards, the terminal may include a plurality of central processing units to enhance a processing capability, and components of the terminal may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

For example, in this embodiment of this application, the antenna and the control circuit that have a receiving/-sending function may be considered as a transceiver unit 4100 of the terminal 4000, and the processor that has a processing function may be considered as a processing unit 4200 of the terminal 4000. As shown in FIG. 8, the terminal 4000 includes the transceiver unit 4100 and the processing unit 4200. The transceiver unit may also be referred to as a transceiver, a transceiver machine, a transceiver apparatus, or the like. Optionally, a component configured to implement the receiving function in the transceiver unit 4100 may be considered as a receiving unit, and a component configured to implement the sending function in the transceiver unit 4100 may be considered as a sending unit. That is, the transceiver unit 4100 includes the receiving unit and the sending unit. For example, the receiving unit may also be referred to as a receiver, a receive machine, or a receiving circuit, and the sending unit may also be referred to as a transmitter, a transmit machine, or a transmitting circuit.

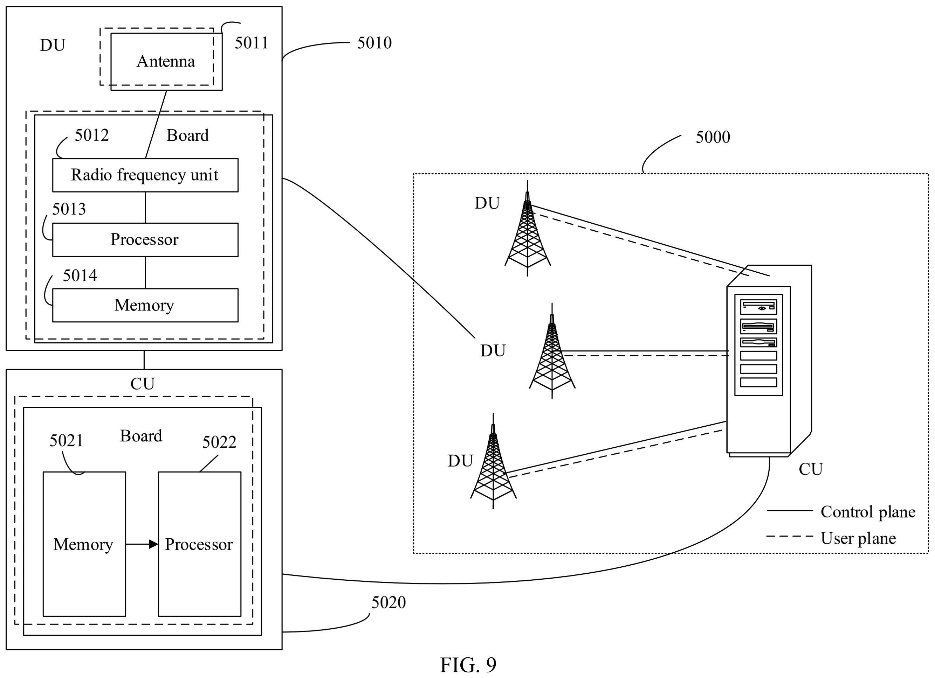

FIG. 9 is a diagram of a structure of a network device 5000 according to an embodiment of this application. The communication apparatus 2000 or the communication apparatus 3000 may be configured in the network device 5000. Alternatively, the communication apparatus 2000 or the communication apparatus 3000 may be the network device 5000. Alternatively, the network device 5000 may perform the actions performed by the network device in the foregoing method embodiments (for example, when the foregoing method is applied to an uplink scenario, the network device is the network device).

As shown in FIG. 9, the network device 5000 may include one or more DUs 5010 and one or more CUs 5020. The CU 5020 may communicate with an NG core (next generation core network, NC). The DU 5010 may include at least one antenna 5011, at least one radio frequency unit 5012, at least one processor 5013, and at least one memory 5014. The DU 5010 is mainly configured to: receive/send a radio frequency signal, convert a radio frequency signal and a baseband signal, and perform partial baseband processing. The CU 5020 may include at least one processor 5022 and at least one memory 5021. The CU 5020 and the DU 5010 may communicate with each other through an interface. A control plane (control plane, CP) interface may be Fs-C, for example, F1-C, and a user plane (user plane, UP) interface may be Fs-U, for example, F1-U.

The CU 5020 is mainly configured to: perform baseband processing, control the network device 5000, and the like. The DU 5010 and the CU 5020 may be physically disposed together, or may be physically separated, namely, in a distributed base station. The CU 5020 is a control center of the network device 5000, may also be referred to as a processing unit, and is mainly configured to complete a baseband processing function. For example, the CU 5020 may be configured to control the network device 5000 to perform an operation procedure related to a first device or a second device in the foregoing method embodiments.

Specifically, baseband processing of the CU and the DU may be divided based on a protocol layer of a wireless network. For example, functions of a PDCP layer and a protocol layer above the PDCP layer are set on the CU, and functions of protocol layers below PDCP, such as an RLC layer and a MAC layer, are set on the DU. For another example, the CU implements functions of an RRC layer and a PDCP layer, and the DU implements functions of an RLC layer, a MAC layer, and a PHY layer.

In addition, optionally, the network device 5000 may include one or more radio units (RUs), one or more DUs, and one or more CUs. The DU may include at least one processor 5013 and at least one memory 5014, the RU may include at least one antenna 5011 and at least one radio frequency unit 5012, and the CU may include at least one processor 5022 and at least one memory 5021.

In an example, the CU 5020 may include one or more boards. A plurality of boards may jointly support a radio access network (for example, a 5G network) of a single access standard, or may separately support radio access networks (such as an LTE network, a 5G network, or another network) of different access standards. The memory 5021 and the processor 5022 may serve one or more boards. In other words, a memory and a processor may be disposed on each board. Alternatively, a plurality of boards may share a same memory and a same processor. In addition, a necessary circuit may further be disposed on each board. The DU 5010 may include one or more boards. A plurality of boards may jointly support a radio access network (for example, a 5G network) of a single access standard, or may separately support radio access networks (such as an LTE network, a 5G network, or another network) of different access standards. The memory 5014 and the processor 5013 may serve one or more boards. In other words, a memory and a processor may be disposed on each board. Alternatively, a plurality of boards may share a same memory and a same processor. In addition, a necessary circuit may further be disposed on each board.

It should be understood that the network device 5000 shown in FIG. 9 can implement processes related to the actions performed by the network device in the foregoing method embodiments. Operations and/or functions of modules in the network device 5000 are respectively for implementing corresponding procedures in the foregoing method embodiments. For details, refer to the descriptions in the foregoing method embodiments. To avoid repetition, detailed descriptions are properly omitted herein.

It should be understood that the network device 5000 shown in FIG. 9 is merely a possible architecture of the network device, and should not constitute any limitation on this application. The method provided in this application is applicable to a network device in another architecture, for example, a network device including a CU, a DU, and an AAU. A specific architecture of the network device is not limited in this application.

It should be understood that, in a possible design, steps in the method embodiments provided in this application can be implemented by using a hardware integrated logical circuit in a processor, or by using instructions in a form of software. The steps in the methods disclosed with reference to embodiments of this application may be directly performed and completed by a hardware processor, or may be performed and completed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general purpose processor, a digital signal processor (DSP), an application-specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

This application further provides a computer program product. The computer program product includes computer program code. When the computer program code is run on a computer, the computer is enabled to perform the steps or procedures performed by the terminal or the network device in any one of the foregoing method embodiments.

This application further provides a computer-readable storage medium. The computer-readable storage medium stores program code. When the program code is run on a computer, the computer is enabled to perform the steps or procedures performed by the terminal or the network device in any one of the foregoing method embodiments.

This application further provides a communication apparatus, including a processor and an interface. The interface is configured to send and/or receive a signal, so that the processor performs the steps or procedures performed by the terminal or the network device in any one of the foregoing method embodiments.

This application further provides a chip system (or chip), including a processor. The processor is configured to invoke a computer program from a memory and run the computer program, so that a communication apparatus on which the chip system is installed performs the steps or procedures performed by the terminal or the network device in any one of the foregoing method embodiments.

This application further provides a communication system, including at least one of the terminal or the network device in any one of the method embodiments.

The foregoing apparatus embodiments are in full correspondence with the method embodiments, and corresponding modules or units perform corresponding steps. For example, a communication unit or a communication interface performs a receiving step or a sending step in the method embodiments, and a processing unit or a processor may perform a step other than the sending step and the receiving step.

In embodiments of this application, the terms and English abbreviations are all examples given for ease of description, and should not constitute any limitation on this application. This application does not exclude a possibility of defining another term that can implement same or similar functions in an existing or future protocol.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from a variety of computer-readable storage media having various data structures stored thereon. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with illustrative logical blocks (illustrative logical block) described in embodiments disclosed in this specification and steps (steps) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatuses, and units, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

In the foregoing embodiments, all or a part of functions of functional units may be implemented by using software, hardware, firmware, or any combination thereof. When software is used to implement the embodiments, all or a part of the embodiments may be implemented in a form of a computer program product. The computer program product includes one or more computer instructions (programs). When the computer program instructions (programs) are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

When the functions are implemented in the form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   generating first information, wherein the first information indicates at least one first capability parameter set, the first capability parameter set comprises a maximum total quantity of transmit ports in one frequency unit and at least two of a maximum quantity of transmit ports on one resource associated with one CSI measurement hypothesis, a maximum total quantity of resources associated with the one CSI measurement hypothesis, and a maximum total quantity of transmit ports on a reference signal resource associated with the one CSI measurement hypothesis; and
   sending the first information.

2. A communication method, comprising:

   receiving first information, wherein the first information indicates at least one first capability parameter set, the first capability parameter set comprises a maximum total quantity of transmit ports in one frequency unit and at least two of a maximum quantity of transmit ports on one resource associated with one CSI measurement hypothesis, a maximum total quantity of resources associated with the one CSI measurement hypothesis, and a maximum total quantity of transmit ports on a reference signal resource associated with the one CSI measurement hypothesis; and
   configuring the reference signal resource based on the first information.

3. The method according to claim 1 or 2, wherein the maximum total quantity of transmit ports on the reference signal resource associated with the one CSI measurement hypothesis is equal to a product of the maximum quantity of transmit ports on one resource associated with the one CSI measurement hypothesis and the maximum total quantity of resources associated with the one CSI measurement hypothesis.

4. The method according to any one of claims 1 to 3, wherein the first capability parameter set further comprises at least one of a maximum total quantity of reference signal resources in one frequency unit and a maximum quantity of transmit ports on one resource in one frequency unit.

5. The method according to any one of claims 1 to 3, wherein the at least one first capability parameter set comprises at least one group of second capability parameters and at least one corresponding group of third capability parameters, one group of second capability parameters comprises at least two of the maximum quantity of transmit ports on one resource associated with the one CSI measurement hypothesis, the maximum total quantity of resources associated with the one CSI measurement hypothesis, and the maximum total quantity of transmit ports on the reference signal resource associated with the one CSI measurement hypothesis, and one group of third capability parameters comprises a maximum quantity of transmit ports on one resource in one frequency unit, a maximum total quantity of reference signal resources in one frequency unit, and the maximum total quantity of transmit ports in one frequency unit.

6. The method according to claim 4 or 5, wherein the maximum quantity of transmit ports on one resource in one frequency unit is equal to the maximum quantity of transmit ports on one resource associated with the one CSI measurement hypothesis.

7. The method according to any one of claims 4 to 6, wherein the maximum total quantity of transmit ports in one frequency unit is equal to a product of the maximum quantity of transmit ports on one resource in one frequency unit and the maximum total quantity of reference signal resources in one frequency unit.

8. The method according to any one of claims 1 to 4, wherein the at least one first capability parameter set comprises at least one first capability parameter set associated with a codebook of a first mode and at least one first capability parameter set associated with a codebook of a second mode, for the codebook of the first mode, frequency domain bases corresponding to all reference signal resources are the same or different, and for the codebook of the second mode, frequency domain bases corresponding to all reference signal resources are the same.

9. The method according to claim 5, wherein the at least one group of second capability parameters comprises at least one group of second capability parameters associated with a codebook of a first mode and at least one group of second capability parameters associated with a codebook of a second mode, the at least one group of third capability parameters comprises at least one group of third capability parameters associated with the codebook of the first mode and at least one group of third capability parameters associated with the codebook of the second mode, for the codebook of the first mode, frequency domain bases corresponding to all reference signal resources are the same or different, and for the codebook of the second mode, frequency domain bases corresponding to all reference signal resources are the same.

10. The method according to any one of claims 1 to 4, wherein the at least one first capability parameter set comprises at least one first capability parameter set associated with a first measurement mode and at least one first capability parameter set associated with a second measurement mode, for the first measurement mode, a reported CSI measurement result corresponds to configured $N_{TRP}$ reference signal resources, for the second measurement mode, a reported CSI measurement result corresponds to N reference signal resources in the configured $N_{TRP}$ reference signal resources, and $N_{TRP}$ and N are both positive integers.

11. The method according to claim 5, wherein the at least one group of second capability parameters comprises at least one group of second capability parameters associated with a first measurement mode and at least one group of second capability parameters associated with a second measurement mode, the at least one group of third capability parameters comprises at least one group of third capability parameters associated with the first measurement mode and at least one group of third capability parameters associated with the second measurement mode, for the first measurement mode, a reported CSI measurement result corresponds to configured $N_{TRP}$ reference signal resources, for the second measurement mode, a reported CSI measurement result corresponds to N reference signal resources in the configured $N_{TRP}$ reference signal resources, and $N_{TRP}$ and N are both positive integers.

12. The method according to any one of claims 1 to 11, wherein the first capability parameter set further indicates a quantity M of groups of CSI measurements supported in one frequency unit, M is a positive integer, and a total quantity of transmit ports corresponding to the M groups of CSI measurements is less than or equal to the maximum total quantity of transmit ports in one frequency unit.

13. The method according to claim 12, wherein M satisfies one of the following:

$$M = F/(A*B), \quad M = \lfloor F/(A*B) \rfloor, \quad M \geq F/(A*B), \text{ or } \quad M \geq \lfloor F/(A*B) \rfloor,$$

wherein
F represents the maximum total quantity of transmit ports in one frequency unit, A represents the maximum quantity of transmit ports on one resource associated with the one CSI measurement hypothesis, B represents the maximum total quantity of resources associated with the one CSI measurement hypothesis, F, A, and B are all positive integers, and $\lfloor \rfloor$ represents rounding down.

14. The method according to claim 1, wherein the method further comprises:

sending second information, wherein the second information indicates a first value, a value set, or a quantity NUM_i of processing units that corresponds to using i reference signal resources to perform CSI measurement, i=1, 2, ..., or S, S and NUM_i are both positive integers, the first value is an integer, the value set comprises V values, V is a positive integer, the V values are all integers, and the first value, the value set, and NUM_i all indicate a quantity of processing units corresponding to the one CSI measurement hypothesis; and
receiving third information, wherein the third information is used to configure Q reference signal resources associated with the one CSI measurement hypothesis, and Q is a positive integer.

15. The method according to claim 2, wherein the method further comprises:

receiving second information, wherein the second information indicates a first value, a value set, or a quantity NUM_i of processing units that corresponds to using i reference signal resources to perform CSI measurement, i=1, 2, ..., or S, S and NUM_i are both positive integers, the first value is an integer, the value set comprises V values, V is a positive integer, the V values are all integers, and the first value, the value set, and NUM_i all indicate a quantity of processing units corresponding to the one CSI measurement hypothesis; and
configuring, based on the second information, Q reference signal resources associated with the one CSI measurement hypothesis, wherein Q is a positive integer.

**16.** The method according to claim 14, wherein the method further comprises:
determining, based on the third information, a quantity W2 of processing units corresponding to the Q reference signal resources, wherein W2 is a positive integer.

**17.** The method according to claim 15, wherein before configuring, based on the second information, the Q reference signal resources associated with the one CSI measurement hypothesis, the method further comprises:
determining, based on the second information, a quantity W2 of processing units corresponding to the Q reference signal resources, wherein W2 is a positive integer.

**18.** The method according to claim 16 or 17, wherein the second information indicates the first value; and
W2 satisfies: W2=(first value+W), or W2=first value*W, wherein W=f(Q), and f(Q) represents that W is a function of Q.

**19.** The method according to claim 16 or 17, wherein the second information indicates the value set; and

W2 satisfies: W2=(second value+W), or W2=second value*W, wherein W=f(Q), and f(Q) represents that W is a function of Q; and
when Q=m, the second value is an $m^{th}$ value in the V values, wherein m=1, 2, ..., or V; or
when Q=n+1, the second value is an $n^{th}$ value in the V values, n=1, 2, ..., or V; or when Q=1, the second value is 0.

**20.** The method according to any one of claims 16 to 19, wherein P≤P1 and P>P1 correspond to different first values, P is a total quantity of transmit ports on the Q reference signal resources, and P and P1 are both positive integers.

**21.** The method according to claim 16, wherein the method further comprises:

receiving fourth information, wherein the fourth information indicates N*l* groups of spatial domain base vectors, and N*l* is a positive integer; and
determining, based on the fourth information, a total quantity W3 of processing units corresponding to CSI measurement corresponding to the N*l* groups of spatial domain base vectors, wherein W3=W2*Nl or W3=W2+k2*(N*l*-1), and k2 is an integer.

**22.** The method according to claim 17, wherein the method further comprises:
sending fourth information, wherein the fourth information indicates N*l* groups of spatial domain base vectors, and N*l* is a positive integer.

**23.** A communication method, applied to a network device or a chip in a network device, and comprising:

receiving first information from a terminal device, wherein the first information indicates a first value, and the first value indicates a quantity of processing units corresponding to one CSI measurement hypothesis; and
configuring, based on the first information, Q reference signal resources corresponding to the one CSI measurement hypothesis, wherein Q is a positive integer.

**24.** The method according to claim 23, wherein before configuring the Q reference signal resources corresponding to the one CSI measurement hypothesis, the method further comprises:
determining, based on the first information, a quantity W2 of processing units corresponding to the Q reference signal
resources, wherein $W2=\lceil \text{first value} * Q \rceil$, ⌈⌉ represents rounding up, and Q is greater than 1.

**25.** The method according to claim 24, wherein before configuring the Q reference signal resources corresponding to the one CSI measurement hypothesis, the method further comprises:
determining that the quantity W2 of processing units corresponding to the Q reference signal resources does not exceed a total quantity of processing units used by the terminal to perform CSI measurement.

**26.** The method according to any one of claims 23 to 25, wherein a value of the first value is a decimal fraction.

**27.** The method according to any one of claims 23 to 26, wherein the first value belongs to {1, 1.5, 2}.

**28.** A communication method, applied to a terminal device or a chip in a terminal device, and comprising:

sending first information, wherein the first information indicates a first value, and the first value indicates a quantity of processing units CPUs corresponding to the one CSI measurement hypothesis; and

receiving second information, wherein the second information is used to configure Q reference signal resources corresponding to the one CSI measurement hypothesis, and Q is a positive integer.

29. The method according to claim 28, wherein the method further comprises: determining, based on the first information, a quantity W2 of processing units corresponding to the Q reference signal resources, wherein $W2 = \lceil \text{first value} * Q \rceil$, $\lceil \ \rceil$ represents rounding up, and Q is greater than 1.

30. The method according to claim 28 or 29, wherein a value of the first value is a decimal fraction.

31. The method according to any one of claims 28 to 30, wherein the first value belongs to {1, 1.5, 2}.

32. A communication apparatus, comprising units configured to perform steps of the method according to any one of claims 1, 3 to 14, 16, and 18 to 21, or comprising units configured to perform steps of the method according to any one of claims 2, 3 to 13, 15, 17, 18 to 20, and 22, or comprising units configured to perform steps of the method according to any one of claims 23 to 31.

33. A communication apparatus, comprising a processor, wherein the processor is coupled to a memory, the memory is configured to store a program or instructions, and when the program or the instructions are executed by the processor, the apparatus is enabled to perform the method according to any one of claims 1, 3 to 14, 16, and 18 to 21, or the method according to any one of claims 2, 3 to 13, 15, 17, 18 to 20, and 22, or the method according to any one of claims 23 to 31.

34. A communication apparatus, comprising a processor and an interface, wherein the interface is configured to send and/or receive a signal, so that the processor performs the method according to any one of claims 1, 3 to 14, 16, 18 to 21, and 23 to 31 or the method according to any one of claims 2, 3 to 13, 15, 17, 18 to 20, and 22.

35. A readable storage medium, storing a computer program or instructions, wherein when the computer program or the instructions are executed, the computer is enabled to perform the method according to any one of claims 1, 3 to 14, 16, and 18 to 21, or the method according to any one of claims 2, 3 to 13, 15, 17, 18 to 20, and 22, or the method according to any one of claims 23 to 31.

36. A computer program product, comprising computer program instructions, wherein the computer program instructions enable the computer to perform the method according to any one of claims 1, 3 to 14, 16, and 18 to 21, or the method according to any one of claims 2, 3 to 13, 15, 17, 18 to 20, and 22, or the method according to any one of claims 23 to 31.

37. A chip, comprising a processor, wherein the processor is configured to invoke a computer program from a memory and run the computer program, so that a communication apparatus in which the chip is installed performs the method according to any one of claims 1, 3 to 14, 16, and 18 to 21, or the method according to any one of claims 2, 3 to 13, 15, 17, 18 to 20, and 22, or the method according to any one of claims 23 to 31.

38. A communication system, comprising a terminal and a network device, wherein the terminal is configured to perform the method according to any one of claims 1, 3 to 14, 16, and 18 to 21 or the method according to any one of claims 28 to 31, and the network device is configured to perform the method according to any one of claims 2, 3 to 13, 15, 17, 18 to 20, and 22 or the method according to any one of claims 23 to 27.

FIG. 1

200

FIG. 2

300

Terminal

Network device

S310: Generate information #2
(including a CSI measurement
capability in one frequency unit)

S320: Information #2

S330: Configure reference signal
resources based on the information #2

FIG. 3

400

```
┌─────────────────┐                    ┌─────────────────┐
│    Terminal     │                    │  Network device │
└─────────────────┘                    └─────────────────┘
```

S410: Information #3 (indicating a
quantity of processing units corresponding
to a one CSI measurement hypothesis)

S430: Determine, based on
the information #3, a
quantity W2 of processing
units corresponding to Q
reference signal resources

S420: Information #4, used to configure
the Q reference signal resources

S440: Determine, based on
the information #4, the
quantity W2 of processing
units corresponding to the Q
reference signal resources

S450: Information #5, indicating N*l*
groups of spatial domain base vectors

S460: Determine, based on
the information #5, a total
quantity W3 of processing
units corresponding to CSI
measurement corresponding
to the N*l* groups of spatial
domain base vectors

FIG. 4

500

```
┌─────────────────┐                              ┌─────────────────┐
│    Terminal     │                              │ Network device  │
└─────────────────┘                              └─────────────────┘
```

S510: Information #3 (indicating a quantity of processing units corresponding to a one CSI measurement hypothesis)

S530: Determine, based on the information #3, a quantity W2 of processing units corresponding to Q reference signal resources

S520: Information #4, used to configure the Q reference signal resources

S540: Determine, based on the information #4, the quantity W2 of processing units corresponding to the Q reference signal resources

S550: Information #5, indicating N$l$ groups of spatial domain base vectors

S560: Determine, based on the information #5, a total quantity W3 of processing units corresponding to CSI measurement corresponding to the N$l$ groups of spatial domain base vectors

FIG. 5

Communication apparatus 2000

Communication unit 2100

Processing unit 2200

FIG. 6

Communication apparatus 3000

Processor
3100

Memory
3300

Communication
interface
3200

FIG. 7

Antenna

Control circuit

4100

4000

Memory ⇔ Processor

4200

Input/Output apparatus

FIG. 8

FIG. 9

## INTERNATIONAL SEARCH REPORT

| International application No. |
| --- |
| **PCT/CN2024/091268** |

**A.    CLASSIFICATION OF SUBJECT MATTER**

H04B7/06(2006.01)i;  H04W72/04(2023.01)i

According to International Patent Classification (IPC) or to both national classification and IPC

**B.    FIELDS SEARCHED**

Minimum documentation searched (classification system followed by classification symbols)

IPC: H04B, H04W, H04L

Documentation searched other than minimum documentation to the extent that such documents are included in the fields searched

Electronic data base consulted during the international search (name of data base and, where practicable, search terms used)

CNTXT, ENTXT, WPABS, DWPI, 3GPP, CNKI, CJFD: 信道状态信息, 测量, 处理单元, 端口, 能力, 数, 资源, 频率, 码本, 参考信号, measure, processing unit, port, capability, number, quantity, resource, frequency, codebook, reference signal, CPU, CSI, CJT

**C.    DOCUMENTS CONSIDERED TO BE RELEVANT**

| Category* | Citation of document, with indication, where appropriate, of the relevant passages | Relevant to claim No. |
| --- | --- | --- |
| Y | US 2022022193 A1 (HUAWEI TECHNOLOGIES CO., LTD.) 20 January 2022 (2022-01-20) description, paragraphs 176-194 and 242-414 | 1-7, 14-19, 32-38 |
| Y | CN 115696307 A (HUAWEI TECHNOLOGIES CO., LTD.) 03 February 2023 (2023-02-03) description, paragraphs 79-255 | 1-7, 14-19, 32-38 |
| Y | WO 2022206578 A1 (HUAWEI TECHNOLOGIES CO., LTD.) 06 October 2022 (2022-10-06) description, paragraphs 225-743 | 14-19 |
| X | WO 2022206578 A1 (HUAWEI TECHNOLOGIES CO., LTD.) 06 October 2022 (2022-10-06) description, paragraphs 225-743 | 23-38 |
| Y | WO 2022082713 A1 (QUALCOMM INC.) 28 April 2022 (2022-04-28) description, paragraphs 97-148 | 1-7, 14-19, 32-38 |
| A | US 2023056106 A1 (QUALCOMM INC.) 23 February 2023 (2023-02-23) entire document | 1-38 |

☑ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **11 June 2024** | **17 June 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**EP 4 697 617 A1**

**INTERNATIONAL SEARCH REPORT**

| International application No. |
| --- |
| **PCT/CN2024/091268** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2022077430 A1 (QUALCOMM INC.) 21 April 2022 (2022-04-21) entire document | 1-38 |

## INTERNATIONAL SEARCH REPORT
### Information on patent family members

International application No.

**PCT/CN2024/091268**

| Patent document cited in search report | | | Publication date (day/month/year) | Patent family member(s) | | | Publication date (day/month/year) |
|---|---|---|---|---|---|---|---|
| US | 2022022193 | A1 | 20 January 2022 | KR | 20210142724 | A | 25 November 2021 |
| | | | | JP | 2022528402 | A | 10 June 2022 |
| | | | | JP | 7283705 | B2 | 30 May 2023 |
| | | | | EP | 3937391 | A1 | 12 January 2022 |
| | | | | EP | 3937391 | A4 | 04 May 2022 |
| | | | | WO | 2020200059 | A1 | 08 October 2020 |
| CN | 115696307 | A | 03 February 2023 | US | 2024163855 | A1 | 16 May 2024 |
| | | | | WO | 2023005904 | A1 | 02 February 2023 |
| | | | | EP | 4369774 | A1 | 15 May 2024 |
| WO | 2022206578 | A1 | 06 October 2022 | | None | | |
| WO | 2022082713 | A1 | 28 April 2022 | US | 2023361832 | A1 | 09 November 2023 |
| | | | | EP | 4233245 | A1 | 30 August 2023 |
| US | 2023056106 | A1 | 23 February 2023 | EP | 4101199 | A1 | 14 December 2022 |
| | | | | EP | 4101199 | A4 | 25 October 2023 |
| | | | | WO | 2021155485 | A1 | 12 August 2021 |
| WO | 2022077430 | A1 | 21 April 2022 | EP | 4229956 | A1 | 23 August 2023 |
| | | | | US | 2024015551 | A1 | 11 January 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310496311

- CN 202310532531